# EUROPEAN PATENT SPECIFICATION

(11) **EP 2 166 049 B1**
(45) Date of publication and mention of the grant of the patent: **09.10.2013**
(21) Application number: 09167037.2
(22) Date of filing: 03.08.2009
(51) Int. Cl.: C09D 11/10

(54) **Ink composition, inkjet recording method and method for producing printed formed article**
Tintenzusammensetzung, Tintenstrahlaufzeichnungsverfahren und Herstellungsverfahren für einen druckgeformten Artikel
Composition d'encre, procédé d'enregistrement à jet d'encre et procédé de production d'un article formé imprimé

(30) Priority: 19.09.2008 JP 2008241696
(43) Date of publication of application: 24.03.2010
(73) Proprietor: Fujifilm Corporation, Minato-ku Tokyo (JP)
(72) Inventor: Yokoi, Kazuhiro, Ashigarakami-gun Kanagawa (JP)
(74) Representative: Grünecker, Kinkeldey, Stockmair & Schwanhäusser

(56) References cited:
- EP-A- 0 588 534
- WO-A-99/18043
- WO-A-2006/006402

## Description

### BACKGROUND

### Field of the Invention

The present invention relates to an ink composition, a method for inkjet recording using the ink composition, and a method for producing a printed formed article using a printed product obtained by the method for inkjet recording. Specifically, the invention relates to an ink composition that is cured by irradiation of a radioactive ray, a method for inkjet recording, and a method for producing a printed formed product.

### Related Art

Image recording methods for forming an image on a recording medium such as paper based on image data signals include an electrophotographic method, a dyesublimatic and fusible thermal transfer method, and an inkjet method. Among these, the inkjet method is feasible with a low cost device, wherein an image is directly formed on a recording medium by jetting an ink on a necessary image area only. Therefore, ink can be efficiently used and running costs are low. Furthermore, the inkjet method is superior as an image recording method since noise is low.

According to the inkjet method, it is possible to print not only on a regular paper but also on a non-absorptive recording medium such as a plastic sheet or a metal plate. However, increased speed of printing and increased resolution are key issues, and the time required for drying and curing droplets after printing greatly affects the productivity of printed materials and the sharpness of printed images.
One inkjet method is a recording method using an inkjet recording ink that is curable by irradiation of radiation. According to this method, by curing ink droplets by irradiating radiation immediately after or a fixed time after the ink is jetted, the productivity of text printing can be increased and sharp images can be formed.

By achieving increased sensitivity in an ink for inkjet recording that is curable by irradiation of a radiation ray such as an ultraviolet ray, high curability with a radiation ray is imparted, and many benefits such as increased productivity of inkjet recording, reduction of power consumption, increased longevity due to the reduced load on a radiation ray generator, and prevention of volatilization of low molecule materials due to insufficient curability, are yielded. Further, in particular, the strength of an image formed by an ink for inkjet recording is increased by increasing sensitivity.
Preferable properties of an image formed by an ink may include adhesiveness to a substrate and flexibility of the image. Specifically, flexibility of an image is an important factor when the image is formed on the surface of an uneven substrate or a flexible substrate such as a resin film, and when a printed formed product, which has been formed together with printing provided on the surface, such as a resin bottle or the like, is produced. However, it is difficult to balance flexibility and curability. Namely, where the ratio of a monofunctional monomer is increased in order to increase flexibility, there is a risk that curability is decreased, or that tackiness of the image surface due to bleeding of uncured low molecular components is caused.

In order to improve adhesiveness, flexibility and curability, a technique in which a urethane acrylate having low viscosity is used for an ink composition for inkjet has been proposed (for example, see Japanese Patent Application Laid-Open (JP-A) No. 2002-167537). However, in this ink composition, it is difficult to maintain sufficient curability where the content of the monofunctional monomer is increased in order to form a more flexible ink film.
In order to form a flexible film by increasing the content ratio of the monofunctional monomer and suppressing the tackiness of the surface due to the low molecular weight components, uses of a monomer that provides a high Tg upon polymerization (for example, see JP-A No. 2008-75062), a monomer in which an amine group that decreases inhibition of polymerization by oxygen has been introduced (for example, see JP-A No. 2008-138028), and the like have been proposed. However, these techniques have a problem that stability over time is deteriorated, e.g., yellowing occurs in a cured film over time. Therefore, at present, it is difficult to completely suppress blocking due to leaching of a small amount of non-curable components such as a decompose residue of a polymerization initiator and a solvent by a known technique in which a monomer having a specific structure is merely added.

### SUMMARY

The present invention has been made in view of the above circumstances and provides an ink composition, a method for inkjet recording and a method for producing a printed formed product.
A first aspect of the invention provides an ink composition comprising:
a polymerizable polymer (A) comprising a main chain structure including urethane bonds or urea bonds, and, at the side chains of the main chain structure, polymerizable groups and at least one selected from a fluoroalkyl group (a1), a siloxane structure (a2) or a long chain alkyl structure (a3),
a polymerizable compound (B) having a different structure from that of the polymerizable polymer (A), and
a photopolymerization initiator (C).

### BRIEF DESCRIPTION OF THE DRAWINGS

Exemplary embodiments of the present invention will be described in detail based on the following figures, wherein:
Fig 1A is a side view of the convex mold used for the embossing test of the printed product;
Fig.1B is an elevational view thereof;
Fig.1C is a side view of the concave mold used for the embossing test of the printed product;
Fig.1D is an elevational view thereof; and
Fig. 2 is a perspective view of the wood mold that is set in a vacuum forming apparatus during the vacuum forming test of the printed product.

### DETAILED DESCRIPTION OF THE INVENTION

Although the mechanism of the present invention is not clear, it is thought to be as follows.
In the invention, since the ink composition includes a polymerizable polymer (A) having a main chain structure including urethane bonds or urea bonds, and at the side chains of the main chain structure, radical polymerizable groups and at least one selected from a fluoroalkyl group, a siloxane structure or a long chain alkyl structure, it is considered that the siloxane structures, fluoroalkyl groups and the like may act as surface orienting groups and segregate on the surface of the ink composition to adjust the surface tension of the ink droplet, whereby the surface energy of the formed cured film is decreased. Furthermore, since the specific polymerizable polymer (A) has polymerizable groups at the side chains, the polymerizable groups rapidly form a crosslinked structure by irradiation of a radiation ray at the proximity of the ink droplet or on the surface of the ink droplet and segregate at the surface, which is the most difficult to cure due to oxygen inhibition, whereby a crosslinking reaction proceeds efficiently and curing proceeds rapidly to form a rigid film. Therefore, the film suppresses elution of the low molecular weight components that remain uncured in the ink to the surface of the image, whereby the surface of the ink image is provided with excellent antiblocking properties. Furthermore, it is thought that flexibility is balanced with curability and antiblocking properties in combination with the flexibility of the polymer itself due to the urethane bonds or urea bonds included in the main chain structure, since the crosslinking density of the internal portion is lower than when general multifunctional monomers are used.
Accordingly, since the printed product obtained by using such an ink composition has excellent suitability for processing, a printed product obtained by printing the ink on the surface of a substrate (recording medium) made of a resin material may be suitably used for the production of printed formed products by, for example, vacuum processing, such as formation of three-dimensional advertisements or dummy cans.

The ink composition of the invention includes a polymerizable polymer(A), which comprises a main chain structure including urethane bonds or urea bonds, and at the side chains of the main chain structure, polymerizable groups and at least one selected from a fluoroalkyl group, a siloxane structure or a long chain alkyl structure [hereinafter suitably referred to as specific polymerizable polymer (A)], a polymerizable compound (B) having a different structure from that of the polymerizable polymer (A), and a photopolymerization initiator (C).
Since the specific polymerizable polymer (A) in the invention has at least one kind selected from a siloxane structure, a fluoroalkyl group or a long chain alkyl structure at the side chains, these groups act as surface orienting groups and segregate on the surface of the ink composition, whereby the surface tension of the ink droplet may be adjusted to a suitable range for jetting. Therefore, it is considered that the jetting property of the ink may be improved where the ink composition of the invention is used for inkjet recording.
Furthermore, since the ink composition of the invention has polymerizable groups at the side chains, the polymerizable groups on the surface of the ink composition or at the proximity of the surface of the ink composition efficiently form a crosslinked structure by a radiation ray and the composition is rapidly cured to form a rigid film. Therefore, the surface of the ink image has excellent antiblocking property, and flexibility, curability and antiblocking property are balanced since the crosslinking density of the internal portion is lower than when general multifunctional monomers are used.
Hereinafter the structural components used for the ink composition of the invention are sequentially explained.

[Polymerizable polymer(A), that includes a main chain structure including urethane bonds or urea bonds, and, at the side chains of the mein chain structure, polymerizable groups and at least one selected from a fluoroalkyl group, a siloxane structure or a long chain alkyl structure (specific polymerizable polymer)]
The specific polymerizable polymer (A) used in the invention is not specifically limited as long as it is a polymer having urethane bonds or urea bonds in the main chain, and having radical polymerizable groups and surface alignment groups specifically mentioned below such as fluoroalkyl groups at the side chains.

[Main chain structure of the specific polymerizable polymer]
The specific polymerizable polymer (A) has a polyurethane structure that is formed by reacting a diisocyanate with a polyol component such as a diol, or a polyurea structure that is formed by reacting a diisocyanate with a diamine component in the main chain.
Examples of the diisocyanate that may form the polyurethane structure or polyurea structure may include tolylene diisocyanate, isophorone diisocyanate, hexamethylene diisocyanate, trimethylhexamethylene diisocyanate, norbornene diisocyanate, dicyclohexylmethane-4,4-diisocyanate, diphenylmethane-4,4-diisocyanate, dimer acid diisocyanate and the like.

Examples of the polyol component that may form a polyurethane structure may include ethylene glycol, polyethylene glycol, propylene glycol, polypropylene glycol, 1,4-butanediol, 2,3-butanediol, 1,3-butanediol, neopentyl glycol, methylpentanediol, 1,6-hexanediol, trimethylhexamethylenediol, 2-methyloctanediol, 1,9-nonanediol, 1,4-cyclohexanedimethanol, tricyclodecanedimethanol, polycaprolactonediol, polycarbonatediol, glycerin, trimethylolpropane, trimethyloloctane, pentaerythritol, polytetramethyleneglycol and the like.
Of these, a polyol having a molecular weight of 1000 or less is preferably used in view of decreasing the viscosity of the obtained ink composition.

Examples of the diamine that may form the polyurea structure may include ethylenediamine, N-alkylethylenediamine, propylenediamine, 2,2-dimethyl-1,3-propanediamine, N-alkylpropylenediamine, butylenediamine, N-alkylbutylenediamine, pentanediamine, hexamethylenediamine, N-alkylhexamethylenediamine, heptanediamine, octanediamine, nonanediamine, decanediamine, dodecanediamine, hexadecanediamine, tolylenediamine, xylylenediamine, diaminodiphenylmethane, diaminodicyclohexylmethane, phenylenediamine, cyclohexylenediamine, bis(aminomethyl)cyclohexane, diaminodiphenylsulfone, isophoronediamine, 2-butyl-2-ethyl-1,5-pentamethylenediamine, 2,2,4- or 2,4,4-trimethyl-1,6-hexamethylenediamine, 2-aminopropylcyclohexylamine, 3(4)-aminomethyl-1-methylcyclohexylatnine, 1,4-diamino-4-methylpentane, amine-terminal polyoxyalkylene polyols (known as JEFFAMINES), amine-terminal polytetramethylene glycol and the like.

In the invention, for the synthesis of the specific polymer having one of these structures, a polymerizable urethane compound may be obtained in one-step reaction by using a diol having a polymerizable group and a diisocyanate having a polymerizable group as raw materials.

### [Polymerizable group]

The specific polymerizable polymer (A) in the invention has polymerizable groups at the side chains.
Since the specific polymerizable polymer includes polymerizable groups, curability is increased, surface tackiness is suppressed, and blocking property is improved in the ink composition.

Examples of the polymerizable group in the invention may include a polymerizable group having a radical polymerizable ethylenic unsaturated bond.
Examples of the polymerizable group having a radical polymerizable ethylenic unsaturated bond may include radical polymerizable groups such as unsaturated carboxylic acid ester groups such as acrylic acid ester groups, methacrylic acid ester groups, itaconic acid ester groups, crotonic acid ester groups, isocrotonic acid ester groups and maleic acid ester groups, and styrene group. Of these, methacrylic acid ester groups and acrylic acid ester groups are preferable.
Alternatively, cation polymerizable groups may be used as the polymerizable group in the invention. Examples of the cation polymerizable groups may include a glycidyl group, an alicyclic epoxy group, an oxetanyl group, a vinyl ether group and a lactone group.

The number of the polymerizable groups in one molecule of the specific polymerizable polymer (A) is preferably 5 or more, and more preferably 7 or more on average in the polymer, in view of surface curability and antiblocking property.
The number of the polymerizable groups included in the specific polymerizable polymer (A) may be detected by measuring an iodine value using Wijs method, Hanus method or the like, and measuring a molecular weight.
The total content of the polymerizable groups is preferably 0.3 mmol/g to 3 mmol/g, more preferably 0.3 mmol/g to 2.5 mmol/g, and still more preferably 0.3 mmol/g to 2 mmol/g in the specific polymerizable polymer.

Generally, in the synthesis of an acrylate polymer having polymerizable groups, a method comprising copolymerizing a monomer in which reaction of a double bond of a radical polymerizable group has been blocked by a protective group, and removing the protective group to form a radical polymerizable group (double bond), or a method in which a low molecule compound having radical polymerizable groups is introduced in the specific polymerizable polymer by a polymer reaction is necessary as a method for introducing radical polymerizable groups in a polymer. On the other hand, the invention provides an advantage that any amount of polymerizable groups may be readily introduced into a polymer by directly using a raw material having radical polymerizable groups at the side chains in a polymerization reaction since the main chain has urethane structures or urea structures and is converted to a polymer by a polycondensation reaction.

Since the specific polymerizable polymer (A) in the invention has a polyurethane structure or polyurea structure as a main chain structure, the polymerizable groups may be readily introduced by using a polyol having a polymerizable group, a diamine having a polymerizable group, and the like, as mentioned above.
Examples of the polyol having polymerizable side chains, which may be used in the invention, may include bisphenol A glycerolate dimethacrylate, N,N'-(1,2-dihydroxyethylene)bisacrylamide, 1,6-hexanediylbis[oxy(2-hydroxy-3,1-propanediyl)]bisacrylate, 3-acryloxy-1,2-propanediol, N-[tris(hydroxymethyl)methyl]acrylamide and the like. Such compound is also available as a commercial product, and examples may include BLENMER GLM (trade name, manufactured by NOF Corporation) and the like.

The specific polymerizable polymer (A) in the invention is a polymer including partial structures selected from the group consisting of a fluoroalkyl group (a1), a siloxane structure (a2) or a long chain alkyl structure (a3) at side chains. Hereinafter these partial structures are explained.

### [(a1) Fluoroalkyl group]

The fluoroalkyl group in the specific polymerizable polymer in the invention refers to a structure including an alkyl group or alkylene group substituted with at least one fluorine atoms. Examples may include a fluoroalkyl group in which at least one hydrogen atoms have been substituted with fluorine atom in an alkyl group or alkylene group, and perfluoroalkyl groups and perfluoroalkylene groups in which all hydrogen atoms in an alkyl group or alkylene group have been substituted with fluorine atoms are preferable, and perfluoroalkyl groups are more preferable.

Examples of the alkyl group may include, preferably those having 3 to 12 carbon atoms, more preferably those having 4 to 10 carbon atoms, and still more preferably those having 6 to 8 carbon atoms.

Examples of the alkylene group may include, preferably those having 2 to 12 carbon atoms, more preferably those having 4 to 10 carbon atoms, and still more preferably those having 6 to 8 carbon atoms.

The specific exemplary embodiment of the fluorine-substituted hydrocarbon group in the invention is explained.
Examples of the preferable fluorine-substituted hydrocarbon group possessed by the specific polymerizable polymer may include those represented by the following (A) or (B).
(A) a substituent derived from a fluoroaliphatic compound that is produced by a telomerization or oligomerization process (hereinafter suitably referred to as "fluoroaliphatic group")
(B) a substituent represented by the following Formula I

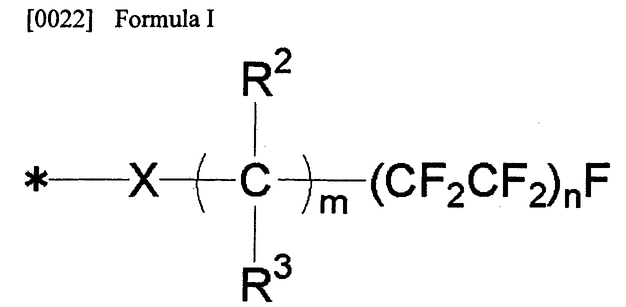

In the above Formula I, R² and R³ each independently represent a hydrogen atom or an alkyl group having 1 to 4 carbon atoms, X represents a covalent bond or a bivalent linking group (organic group), m is an integer of 0 or more, and n is an integer of 1 or more.
Where m is 2 or more, the functional groups on the carbon atoms that are adjacent to each other (namely, two R² or two R³, each being bonding to the adjacent carbon atoms) may be linked to form an aliphatic ring.
The substituent represented by Formula I is linked to the polymer main chain at the part *.

### (A) Substituent derived from a fluoroaliphatic compound that is produced by a telomerization process or an oligomerization process

The fluorine-substituted alkyl group in the invention is preferably a substituent (fluoroaliphatic group) derived from a fluoroaliphatic compound that is produced by a telomerization process (also referred to as a telomer process) or an oligomerization process (also referred to as an oligomer process).
The production method for such fluoroaliphatic group is described in, for example, "Synthesis and Function of Fluorine Compounds" (Nobuo Ishikawa ed., published by CMC Publisher, 1987), pages 117 to 118, and "Chemistry of Organic Fluorine Compounds II" (Monograph 187, Ed by Milos Hudlicky and Attila E. Pavlath, American Chemical Society 1995), pages 747 to 752.

The telomerization process refers to a method in which a telomer is synthesized by radical polymerization of a fluorine-containing vinyl compound such as tetrafluoroethylene using an alkyl halide having a high chain transfer constant such as an iodide as a telogen.
As a specific example, the following Synthesis Example 1 is provided.

### Synthesis Example 1

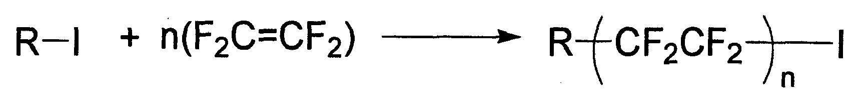

The obtained terminal-iodided telomer is generally converted to a fluoroaliphatic compound by a suitable terminal chemical modification such as the following Synthesis Example 2. Furthermore, the compound is optionally converted to a desired monomer structure and used in the production of a polymer having fluoroaliphatic groups at the side chains such as the specific polymerizable polymer in the invention.

### Synthesis Example 2

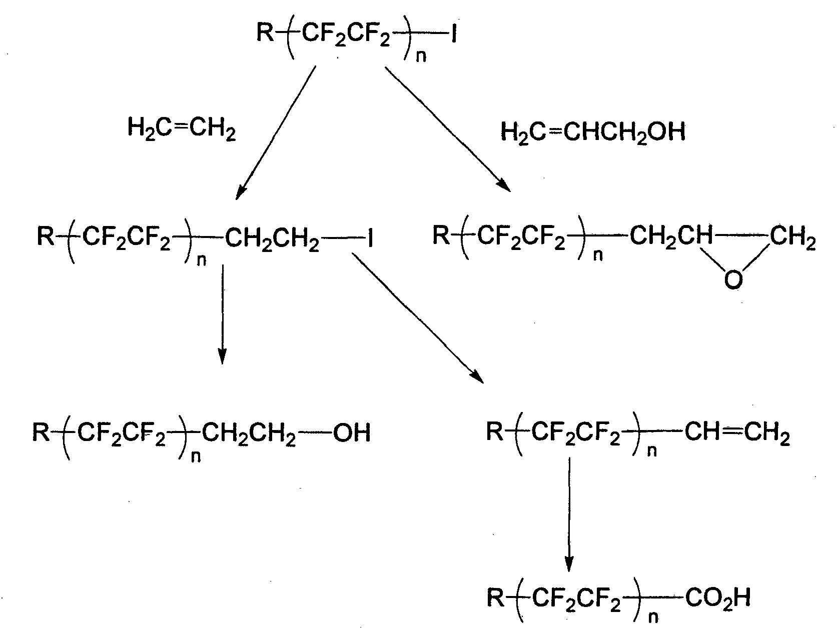

In the invention, the fluoroaliphatic compound synthesized by the above-mentioned telomer process is preferably a fluoroaliphatic compound having the following formula TM-1.
By using such fluoroaliphatic compound directly or after converting it to a desired monomer structure, fluorine-substituted hydrocarbon groups may be introduced into the specific polymerizable polymer in the invention.

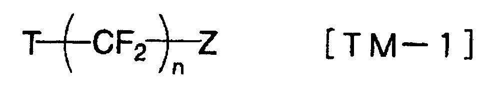

In the above-mentioned formula TM-1, T is one kind of group selected from the following Group T, Z is one kind of group selected from the following Group Z, and n is an integer of 0 to 20.
Where the fluoroaliphatic compound represented by the formula TM-1 has a polymerizable group such as a double bond in Z, it may be used as a copolymerization component for the synthesis of the specific polymerizable polymer of the invention.

### (Group T)

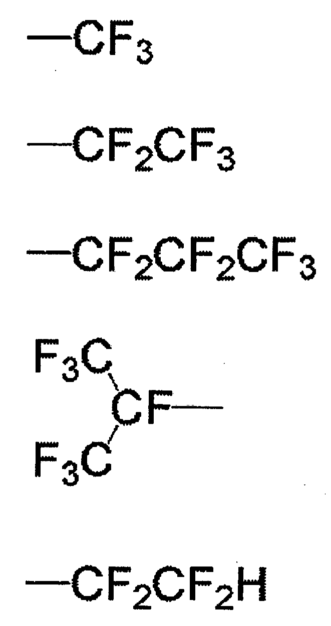

### (Group Z)

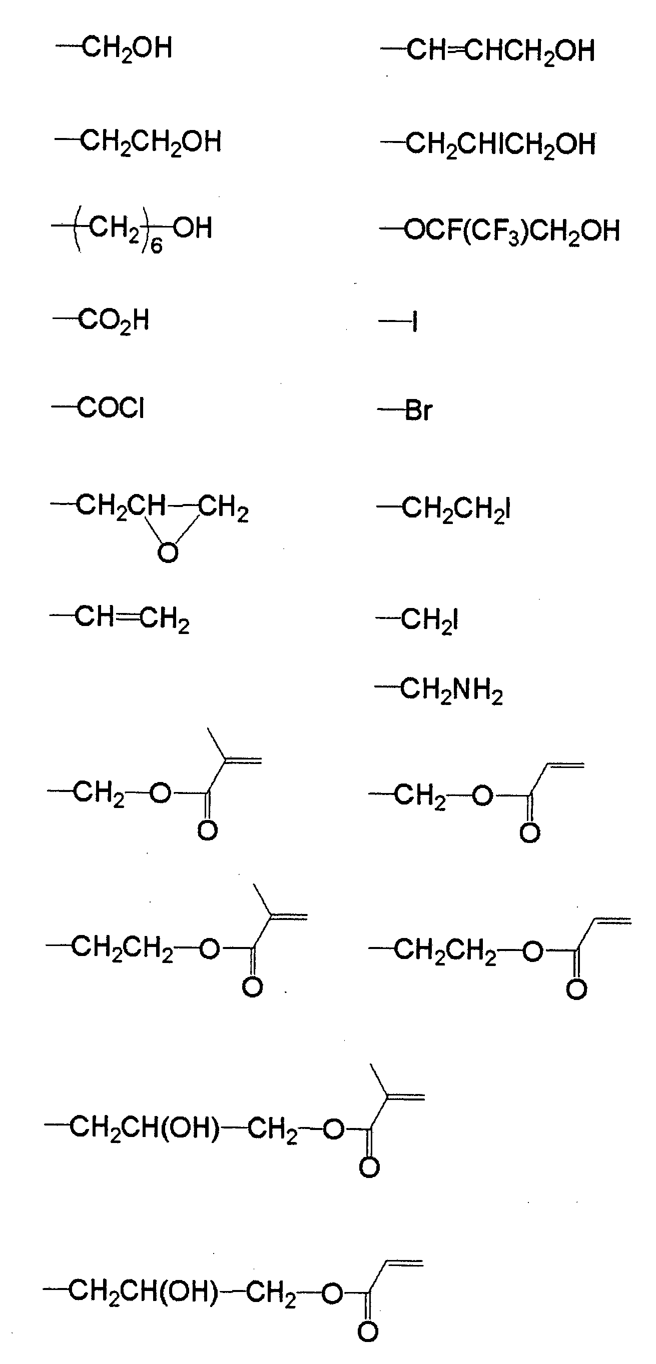

The above-mentioned formula TM-1 has a structure having an acryloyl group or a methacryloyl group at the terminal of the molecule where the group represented by Z is one kind of group selected from the following Group Z'. Therefore, it is specifically preferable since the specific polymerizable polymer in the invention may be obtained more easily from the fluoroaliphatic compound represented by the formula TM-1 by vinyl polymerization.

### (Group Z')

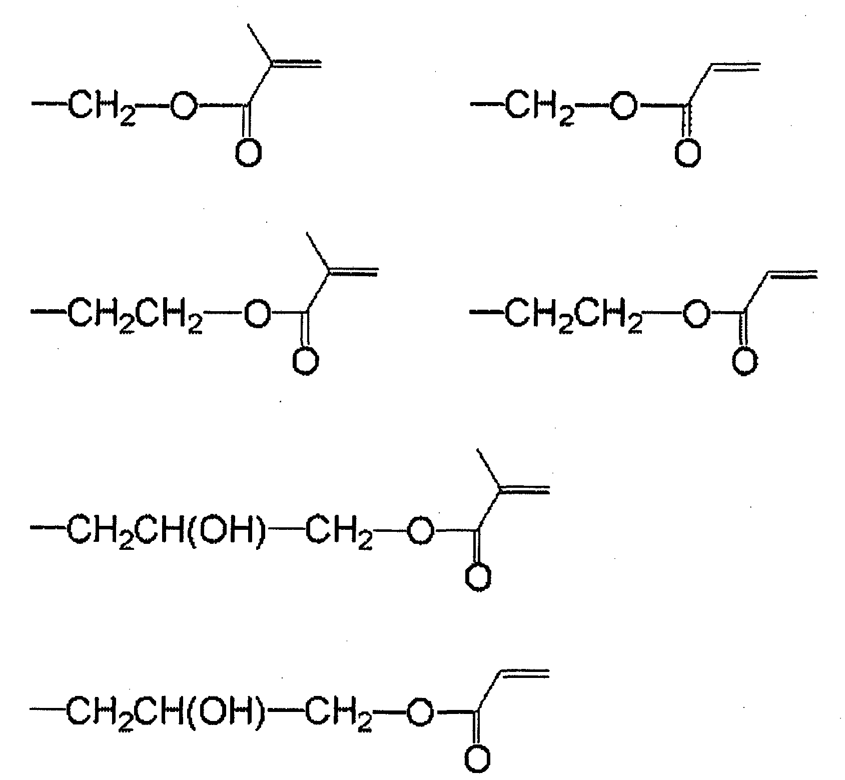

Specific examples of the compound produced by the above-mentioned telomer process (commercial products having the fluoroaliphatic compound represented by the above-mentioned formula TM-1 as a main component), which are preferably used for the synthesis of the specific polymerizable polymer in the invention, may include the fluorine-based chemical products A-1110, A-1210, A-1310, A-1420, A-1620, A-1820, A-2020, A-1260, A-1460, A-1660, A-1860, A-1435, A-1635, A-1835, A-1473, A-1637, A-1837, A-1514, A-3420, A-3620, A-3820, A-4020, A-3260, A-3460, A-3660, A-3860, A-3637, A-3837, A-5210, A-5410, A-5610, A-5810, A-7110, A-7210, A-7310, A-9211, C-1100, C-1200, C-1300, C-1400, C-1500, C-1600, C-1700, C-1800, C-1900, C-2000, C-5200, C-5400, C-5600, C-5800, C-5208, C-5408, C-5608, C-6008, C-8200, C-8300, C-8500, C-9211, C-8208, C-8308, C-8508, C-9216, E-1430, E-1630, E-1830, E-2030, E-3430, E-3630, E-3830, E-4030, E-5244, E-5444, E-5644, E-5844, F-1420, F-1620, F-1820, F-2020, I-1200, I-1300, I-1400, I-1600, I-1700, I-1800, I-2000, I-1420, I-1620, I-1820, I-2020, I-3200, I-3400, I-3600, I-3800, I-4000, I-3620, I-3820, I-4020, I-5200, I-5400, I-5600, I-8208, I-8207, I-8407, I-8607, M-1110, M-1210, M-1420, M-1620, M-1820, M-2020, M-3420, M-3620, M-3820, M-4020, M-3433, M-3633, M-3833, M-4033, M-5210, M- 5410, M-5610, M-5810, M-6010, M-7210, M-7310, R-1110, R-1210, R-1420, R-1620, R-1820, R-2020, R-1433, R-1633, R-1833, R-3420, R-3620, R-3820, R-4020, R-3433, R-5210, R-5410, R-5610, R-5810, 6010, R-7210, R-7310, U-1310, U-1710, which are sold by Daikin Chemicals Sales Co., Ltd.; CHEMINOX FA, FA-M, FAAC, FAAC-M, FAMAC and FAMAC-M, which are produced by Nippon Mektron, Ltd.; and the like.

Using the fluoroaliphatic compound produced by the above-mentioned telomer process, a polymer having fluoroaliphatic groups at the side chains such as the specific polymerizable polymer in the invention may be readily synthesized by a method known by the skilled persons in the art.

In the invention, a substituent derived from a fluoroaliphatic compound that is produced by an oligomerization process (oligomer process) is also preferable.
The oligomerization process refers to a process in which an oligomer is produced by cation polymerization of tetrafluoroethylene in a polar solvent such as diglyme using potassium fluoride, cesium fluoride, or the like as a catalyst. A specific example is shown by the following Synthesis Example 3.
Using the fluoroaliphatic compound obtained by the oligomer process, a polymer having substituents derived from a fluoroaliphatic compound (fluorine-containing hydrocarbon groups) at the side chains may be synthesized by utilizing the polymerizable group (unsaturated bond) and the like in an oligomer obtained by cation polymerization and performing a suitable chemical modification where necessary, as in the above-mentioned compound by the telomer process.

### Synthesis Example 3

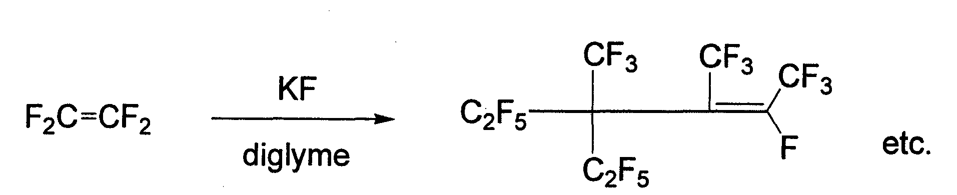

### (B) Substituent represented by Formula I

It is preferable that the specific polymerizable polymer in the invention has a substituent represented by the following Formula I, in view of uneven distribution on the ink surface.

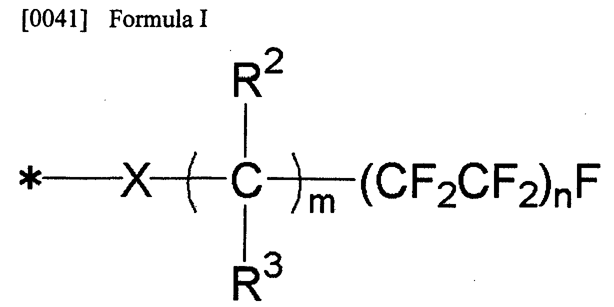

In the above-mentioned Formula I, R² and R³ each independently represent a hydrogen atom or an alkyl group having 1 to 4 carbon atoms, * represents a site linking to the polymer chain, X represents a covalent bond or a bivalent linking group, m is an integer of 0 or more, and n is an integer of 1 or more.
Where m is 2 or more, the functional groups on the carbon atoms that are adjacent to each other (namely, two R² or two R³ each being linking to the adjacent carbon atoms) may be linked to form an aliphatic ring.

Of the substituents represented by the above-mentioned Formula I, those having "n" of 1 to 10 are preferable, those having "n" of 1 to 4 are more preferable, and those having "n" of 2 or 3 are specifically preferable.

Namely, as the specific polymerizable polymer in the invention, one having the structure represented by the following Formula IB as the structure of the side chain part linked to the polymer main chain, specifically, one having n=2, 3 or 4, is preferable in order to exhibit quite fine performance.

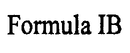

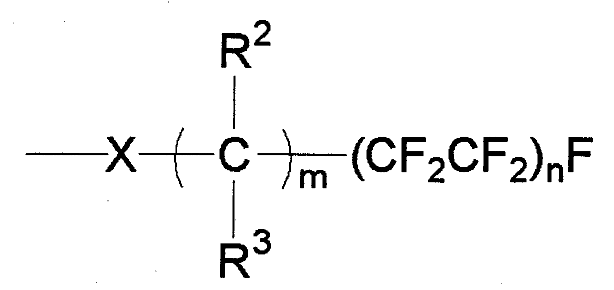

In the above-mentioned Formula IB, R², R³, X, m and n are all as defined in R², R³, X, m and n for Formula I.

In Formulas I and IB, the alkyl group having 1 to 4 carbon atoms represented by R² and R³ may include a methyl group, an ethyl group, a propyl group, an isopropyl group, an n-butyl group, an isobutyl group, a tert-butyl group and the like. R² and R³ are each preferably a hydrogen atom or a methyl group, and more preferably a hydrogen atom.

In Formulae I and IB, the case where X is a covalent bond means that the polymer main chain and the carbon atom to which R² and R³ are linked are directly linked.
Furthermore, where X is a bivalent linking group, examples of the linking group may include -O-, -S-, -N (R⁴)-, -CO- and the like. Of these, -O- is more preferable.
In the above, R⁴ is a hydrogen atom or an alkyl group having 1 to 4 carbon atoms. Examples of the alkyl group may include a methyl group, an ethyl group, a propyl group, an isopropyl group, an n-butyl group, an isobutyl group, a tert-butyl group and the like, preferably a hydrogen atom or a methyl group.

In Formulae I and IB, m is an integer of 0 or more, preferably an integer of 2 to 8, specifically preferably 2. Alternatively, where m is 2 or more, the functional groups on the carbon atoms that are adjacent to each other (namely, two R² or two R³ each being linking to the adjacent carbon atoms) may be linked to form an aliphatic ring.

In Formulae I and IB, n is an integer of 1 or more, preferably an integer of 1 to 10, more preferably an integer of 1 to 4, and specifically preferably 2 or 3.

In Formula I, * is a site linked to the polymer main chain, and specific examples of the polymer main chain may include the following examples.
For example, acrylic resins, methacrylic resins, styryl resins, polyester resins, polyurethane resins, polycarbonate resins, polyamide resins, polyacetal resins, phenol-formaldehyde condensed resins, polyvinylphenol resins, maleic anhydride-α-olefin resins, α-heterosubstituted methacrylic resins and the like may be used. Of these, acrylic resins, methacrylic resins, styryl resins, polyester resins and polyurethane resins are useful, and acrylic resins, methacrylic resins and polyurethane resins are specifically useful.

The specific polymerizable polymer having fluorine-substituted hydrocarbon groups 1) in the invention may be readily obtained by, for example, a method known by the skilled persons in the art such as condensation polymerization, addition polymerization, open-ring polymerization or the like, by suitably selecting and using the above-mentioned monomer (A) having the fluoroaliphatic group or the monomer (B) having a substituent represented by the above-mentioned Formula I (namely, a monomer having a fluorine-substituted hydrocarbon group). Alternatively, the specific polymerizable polymer may be produced by mixing these monomers where necessary.

### (Monomer having a fluorine-substituted hydrocarbon group)

In the invention, it is preferable to obtain the specific polymerizable polymer by using the monomer having a fluorine-substituted hydrocarbon group (hereinafter referred to as a monomer containing a fluorine-substituted hydrocarbon group), as mentioned above.

Preferable example of the monomer containing a fluorine-substituted hydrocarbon group may include the monomer represented by the following Formula II.

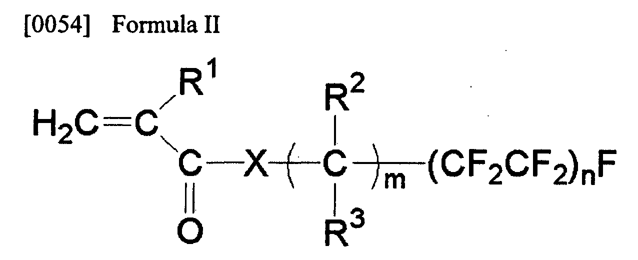

In Formula II, R¹ represents a hydrogen atom, a halogen atom, a methyl group which may have a substituent, or an ethyl group which may have a substituent. R², R³, X, m and n are as defined for R², R³, X, m and n in Formula I, and the preferable examples are also the same.

In Formula II, examples of the halogen atom represented by R¹ may include a fluorine atom, a chlorine atom and a bromine atom.

Specific examples of the monomer represented by the above-mentioned Formula II used in the invention are shown below.

### (Specific examples of n=4)

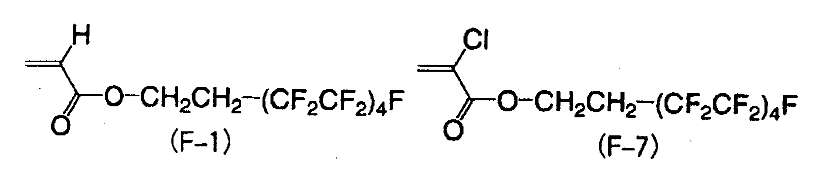

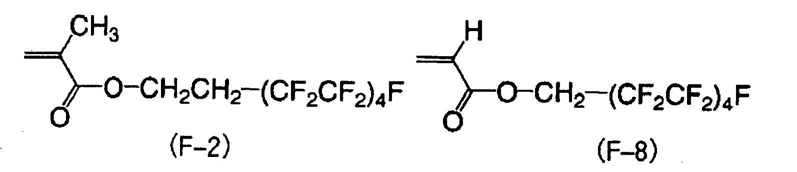

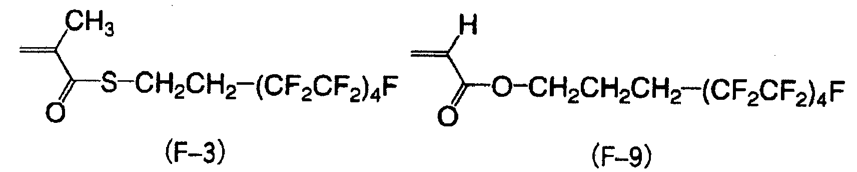

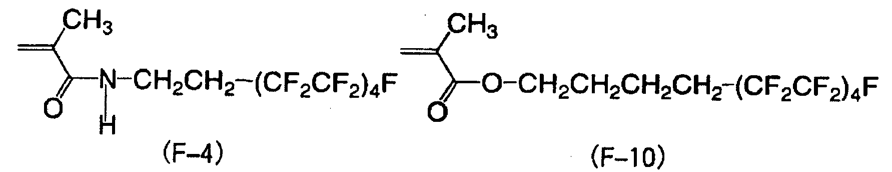

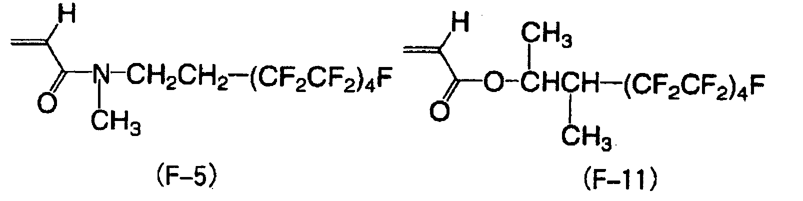

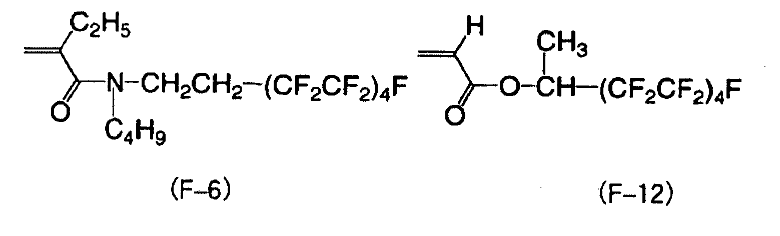

### (Specific examples of n=3)

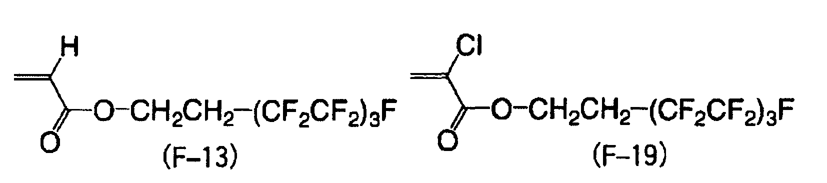

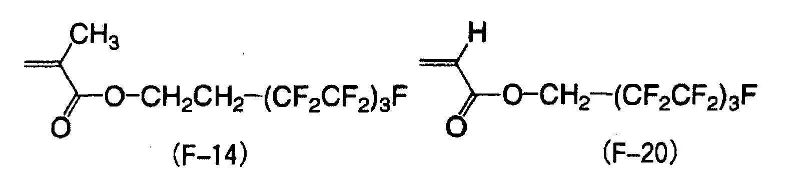

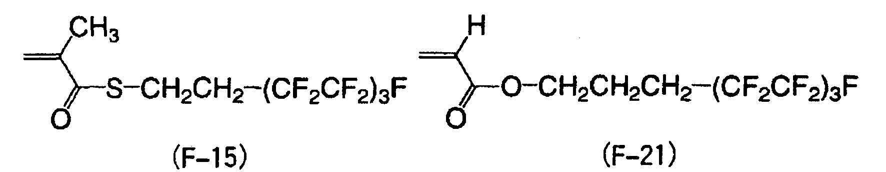

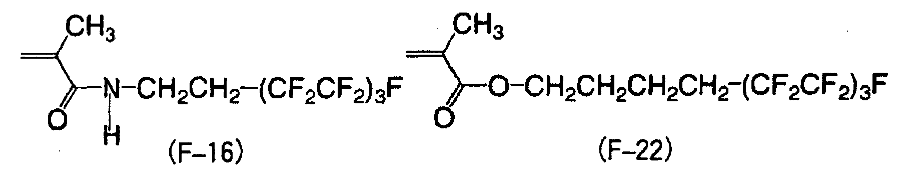

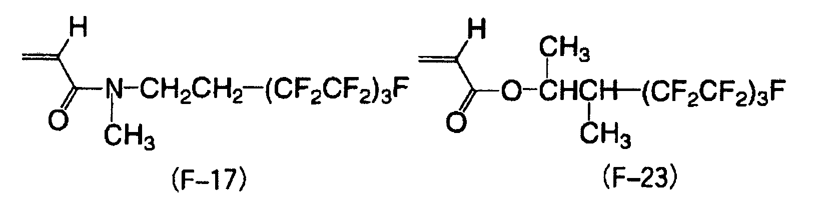

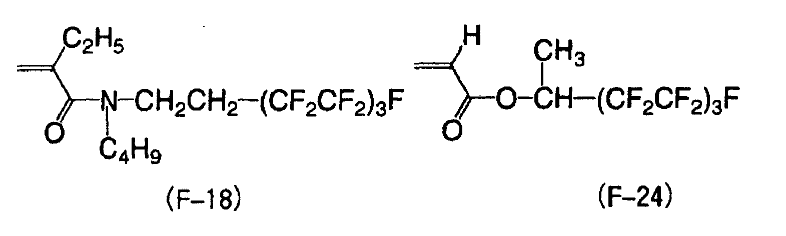

### (Specific examples of n=1)

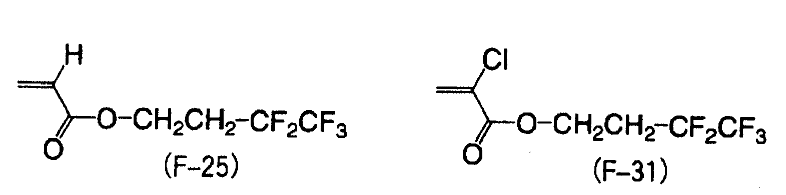

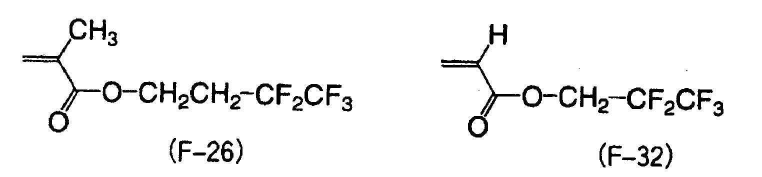

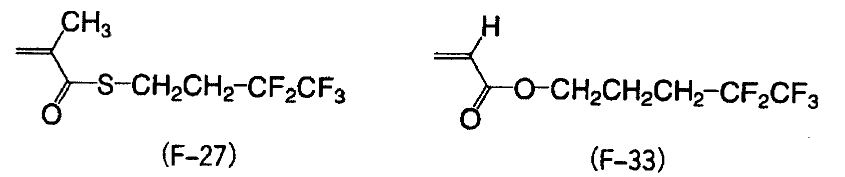

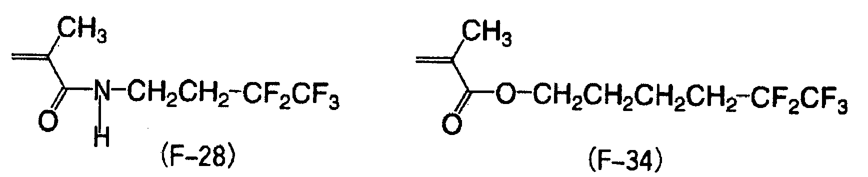

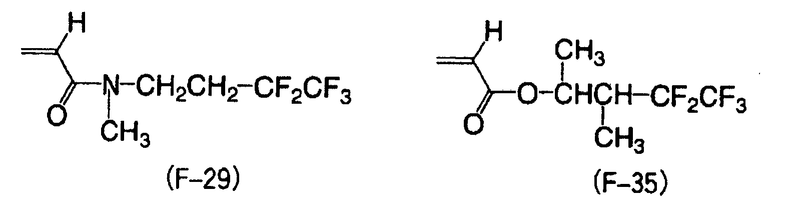

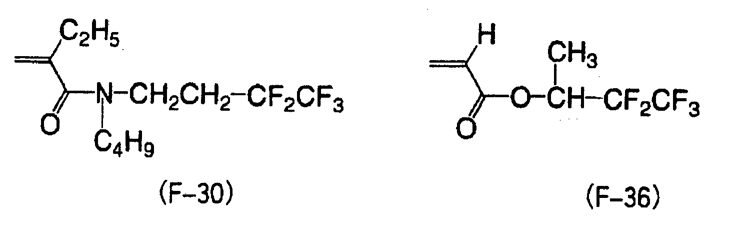

### (Specific examples of n=2)

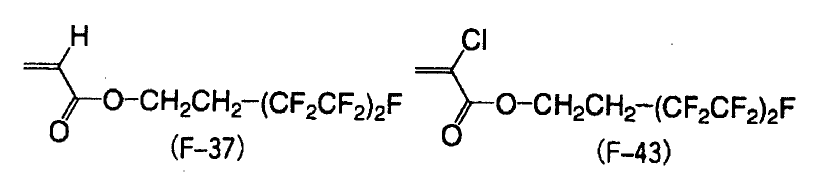

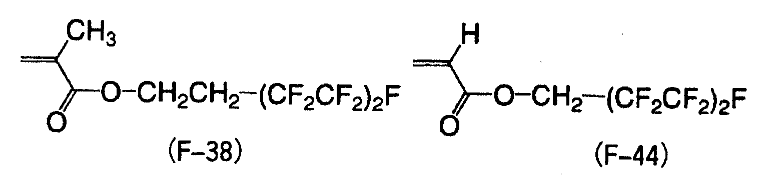

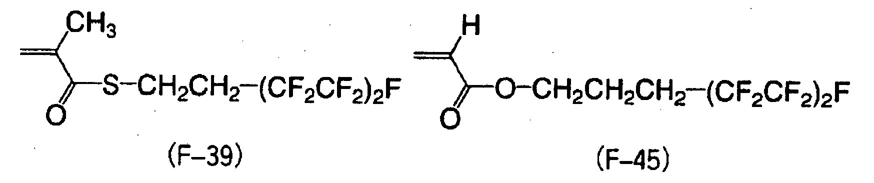

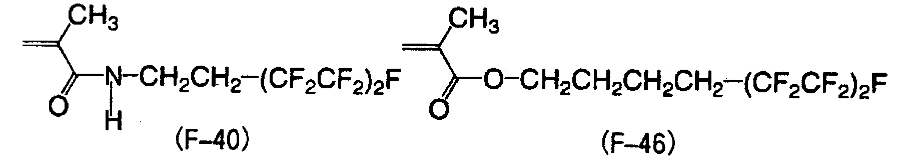

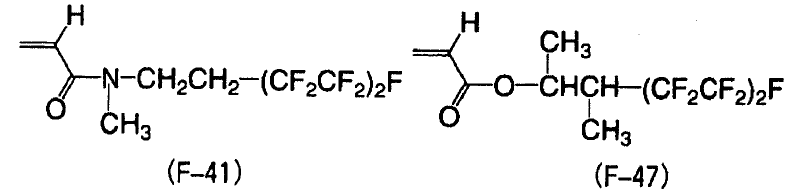

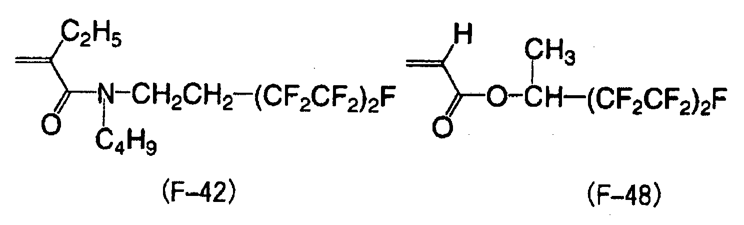

Of the monomers represented by the above-mentioned Formula II, the monomer used for the synthesis of the specific polymerizable polymer in the invention is preferably one having "n" of 1 to 10, preferably 1 to 4, and more preferably 2 or 3 in Formula II.

Fluoroalkyl groups may be introduced into the specific polymerizable polymer (A) by using a diol having a fluoroalkyl group as a diol used for forming the above-mentioned urethane structure. The diol having a fluoroalkyl group may be obtained by treating a fluoroalkyl group having an epoxy group at the terminal with an acid catalyst according to the method described in JP-A No. 2005-126357, and by such method, for example, fluoroalkyl 1,2-diol may be obtained at a high yield.
Hereinafter a specific synthesis method of 3-perfluorohexyl-1,2-propanediol is shown. Fluoroalkyl groups having different carbon numbers may also be obtained according to a similar method.

Methyl isobutyl ketone (400 g, 4 mol) and a 50% diethyl ether solution of boron trifluoride-diethyl ether complex (1.55 g, 0.05 mol) were charged in a reaction vessel equipped with a stirrer, a thermometer, a distributor equipped with a reflux condenser, and a nitrogen introduction tube. E-1630 (376 g, 1 mol) was added dropwise at 25°C over 30 minutes under stirring, and stirring was continued at 25°C for 1 hour and at 100°C for 1 hour to perform 1,3-dioxolanation.
Water (54 g, 3 mol) was then added to the reaction vessel, and the mixture was heated to azeotropically distil water and methyl isobutyl ketone away. The methyl isobutyl ketone was removed with the distributor, and the water was returned to the reaction vessel.
After 3 hours, distillation of methyl isobutyl ketone was completed. The mixture was further heated for 2 hours under reflux, and the pressure in the reaction vessel was reduced until the pressure became 1 kPa or less at 100°C to remove excess water, whereby a transparent crude product was obtained (373 g, crude yield: 95%). The crude product was analyzed by gas chromatography and found to contain 3-perfluorohexyl-1,2-propanediol by 98% by mass (yield: 93%).

Alternatively, a compound including a fluoroalkyl group having an epoxy group may be used so as to introduce fluoroalkyl groups into the specific polymerizable polymer (A). Such fluoroalkyl compound having an epoxy group is available as a commercial product, and examples thereof may include E-1430, E-1630, E-1830, E-2030, E-5244, E-5444, E-5644, E-5844 and E-7432 (manufactured by Daikin Industries, Ltd.), and the like.

### [(a2) Siloxane structure]

The siloxane structure included in the specific polymerizable polymer in the invention is not specifically limited as long as it has a siloxane backbone represented by "-Si-O-Si-" as a partial structure.
In the invention, the specific polymerizable polymer having siloxane structures is preferably a compound constituted by structural units having siloxane structures at the side chains, in view of increasing jetting stability of the ink composition and increasing surface segregation of a coating formed by the ink composition.

The siloxane compound useful for introducing siloxane structures in the molecule of the specific polymerizable polymer (A) may be obtained as a commercial product, and examples may include one terminal-reactive silicones such as X-22-173DX and X-22-173BX (manufactured by Shin-Etsu Chemical Co. Ltd.).
Alternatively, the siloxane compound may be synthesized by reacting a siloxane having reactive terminals and a compound having a cation-polymerizable group. For example, it may be synthesized from a compound having a hydroxyl group on one terminal (for example, trade names: SILAPLANE SERIES FM-0411, FM-0421 and FM-0425, manufactured by Chisso Corporation) and epichlorohydrin, or according to a method described in JP-A No. 11-80315.
In the above-mentioned specific polymerizable polymer (A), the content ratio of the site derived from the above-mentioned siloxane compound (structural unit of the siloxane structure) is 1 wt% to 50 wt%, more preferably 2 wt% to 40 wt%, and most preferably 3 wt% to 30 wt%, in view of adjustment of surface tension, solubility, ink viscosity, and the like of the ink composition.
In the above-mentioned specific polymerizable polymer (A), the molecular weight of the site derived from above-mentioned siloxane compound (structural unit of the siloxane structure) is preferably 300 to 10,000, and more preferably 300 to 3,000, in view of that the specif polymerizable polymer improves surface alignment of ink droplets.

The weight average molecular weight of the specific polymerizable polymer (A) in the invention, which has such partial structures at the side chain, is preferably 2000 to 100000, more preferably 3000 to 80000, and most preferably 5000 to 60000, in view of the viscosity and cure sensitivity of the ink composition. The weight average molecular weight may be obtained by GPC measurement method.
In the specific polymerizable polymer, the partial structure having a segregating site such as a siloxane structure is included by preferably 1 wt% to 50 wt%, more preferably 2 wt% to 40 wt%, and most preferably 3 wt% to 30 wt%, in view of jetting stability and solubility.
The partial structure having a polymerizable group is included in the polymer by 10 wt% to 90 wt%, more preferably 15 wt% to 90 wt%, and most preferably 20 wt% to 90 wt%, in view of cure sensitivity and retention of flexibility. Where the content ratio of the polymerizable group is in the above-mentioned range, sufficient blocking suppressing effect may be obtained and flexibility of the film is maintained at a suitable range. On the other hand, where a conventionally known urethane oligomer having 2 to 4 polymerizable groups at the terminals is used instead of the specific polymerizable polymer, sufficient performance may not be obtained.

### [0069] [(a3) Long chain alkyl group]

### < Alkyl group having 6 or more carbon atoms >

The alkyl group having segregating property in the invention is not specifically limited as long as it is an alkyl group having 6 or more carbon atoms. Although the alkyl group may be any of linear, branched and ring forms, straight chain is more preferable. The carbon number is preferably 6 to 40, more preferably 6 to 18, and further preferably 6 to 12.

The alkyl group having 6 or more carbon atoms existing at the side chains in the specific polymer (A) included in the ink composition of the invention is a substituent represented by -CₙH₂ₙ₊₁- in the following formula (III), and the substituent is preferably introduced in the polymer by incorporating the structural unit represented by the formula (III).

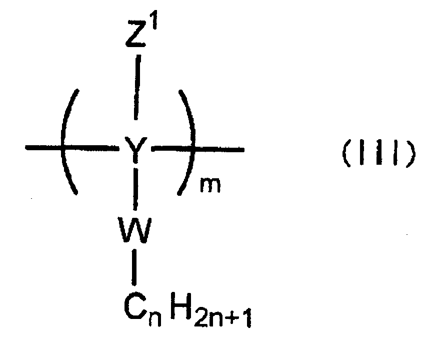

In Formula III, n is an integer of 6 to 40, preferably 6 to 18, and more preferably 6 to 12, in view of segregating property.
Y represents a polymer main chain, and -CₙH₂ₙ₊₁ (an alkyl group having 6 or more carbon atoms) is linked directly or via a linking group to this main chain.
W represents a single bond or a linking group. Where W is a single bond, the long chain alkyl group is directly linked to the polymer main chain. Z¹ represents a hydrogen atom or a monovalent substituent.

In Formula III, the structural unit may have a plurality of alkyl groups having 6 or more carbon atoms, and in this case, an exemplary embodiment wherein the alkyl group having 6 or more carbon atoms is linked to the position of Z¹ via a linking group W, or an exemplary embodiment wherein the linking group W has a branched structure or a ring structure and other alkyl group having 6 or more carbon atoms is linked to the terminal of the carbon atoms that constitute W, may be used.
Examples of the above-mentioned W may include straight chain, branched chain or cyclic alkylenes having 1 to 20 carbon atoms, straight chain, branched chain or cyclic alkenylenes having 2 to 20 carbon atoms, alkynyl groups having 2 to 20 carbon atoms, arylenes having 6 to 20 carbon atoms (monocycles and heterocycles), -OC(=O)-, -OC(=O)Ar-, -OC(=O)O-, -OC(=O)OAr-, -C(=O)NR-, -C(=O)NAr-, -SO₂NR- -SO₂NAr-, -O- (alkyleneoxy and polyalkyleneoxy), -OAr- (aryleneoxy and polyaryleneoxy), -C(=O)O-, -C(=O)O-Ar-, -C(=O)Ar-, -C(=O)-, -SO₂O-, -SO₂OAr-, -OSO₂-, -OSO₂Ar-, -NRSO₂- -NArSO₂-, -NRC(=O)-, -NArC(=O)-, -NRC(=O)O-, -NArC(=O)O-, -OC(=O)NR-, -OC(=O)NAr-, -NAr-, -NR-, -N⁺RR'-, -N⁺RAr-, -N⁺ArAr'-, -S-, -SAr-, -ArS-, heterocyclic groups (3- to 12-membered monocycles or condensed rings containing at least one or more heteroatoms such as nitrogen, oxygen and sulfur), -OC(=S)-, -OC(=S)Ar-, -C(=S)O-, -C(=S)OAr-, -C(=S)OAr-, -C(=O)S-, -C(=O)SAr-, -ArC(=O)-, -ArC(=O)NR-, -ArC(=O)NAr-, -ArC(=O)O-, -ArC(=O)O-, -ArC(=O)S-, -ArC(=S)O-, -ArO-, -ArNR- and the like.
The above-mentioned R and R' are each a hydrogen atom, a straight chain or branched alkyl group, a chain or cyclic alkyl group, a straight chain or branched alkenyl group, a chain or cyclic alkenyl group, a straight chain or branched alkynyl group, a chain or cyclic alkynyl group, and Ar and Ar' are each an aryl group.

Of these linking groups, arylenes having 6 to 20 carbon atoms (monocycles and heterocycles), -C(=O)NR-, -C(=O)NAr-, -O- (alkyleneoxy and polyalkyleneoxy), -OAr-(aryleneoxy and polyaryleneoxy), -C(=O)O-, -C(=O)O-Ar-, -C(=O)-, -C(=O)Ar-, -S-, -SAr-, -ArS-, -ArC(=O)-, -ArC(=O)O-, -ArC(=O)O-, -ArO-, -ArNR- and the like are preferable, and arylenes having 6 to 20 carbon atoms (monocycles and heterocycles), -C(=O)NR-, -C(=O)NAr-, -O- (alkyleneoxy and polyalkyleneoxy), -OAr- (aryleneoxy and polyaryleneoxy), -C(=O)O-, -C (=O)O-Ar-, -SAr-, -ArS-, -ArC(=O)-, -ArC(=O)O-, -ArC(=O)O-, -ArO-, -ArNR- and the like are more preferable.

Furthermore, in the invention, the linking group represented by the above-mentioned W may be a combination of two or more kinds of the linking group listed here.
Hereinafter specific examples of the bivalent substituent represented by such W, which are specifically preferable in view of segregating property on the ink surface, are exemplified, but the invention is not limited by these examples.

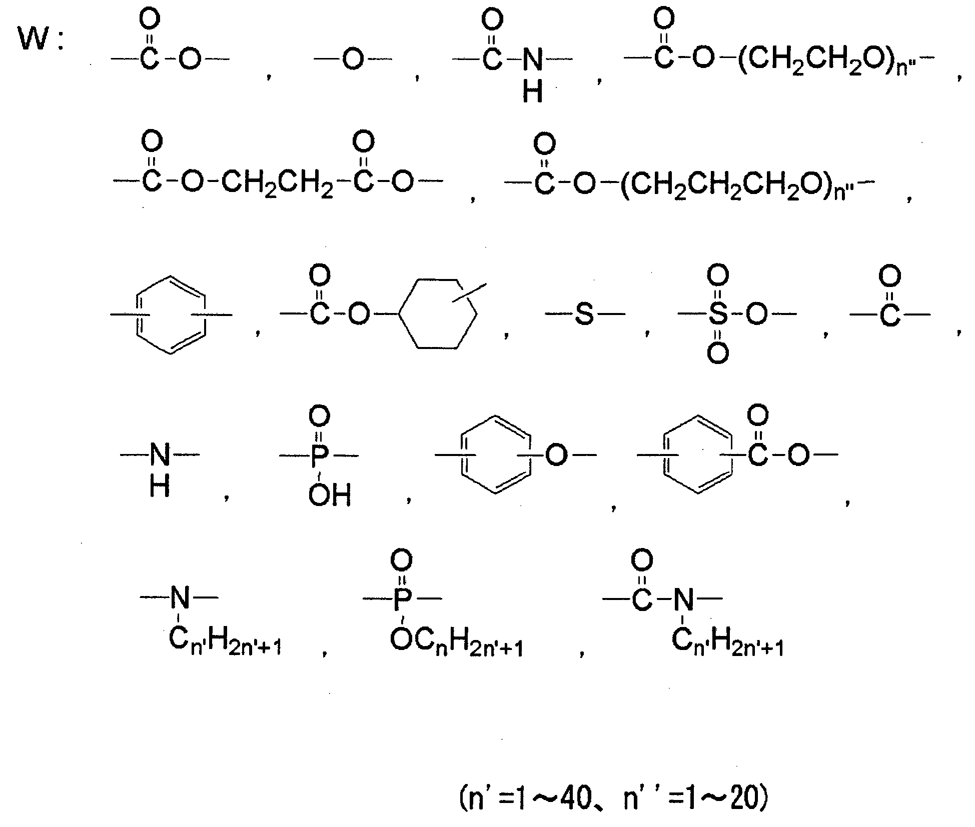

Furthermore, preferable examples of Z¹ may also include an exemplary embodiment in which a long chain alkyl group is linked via a linking group W, as well as the following groups. Where m is 6 or more and 20 or less, Z¹ may have a long chain alkyl group in such exemplary embodiment.

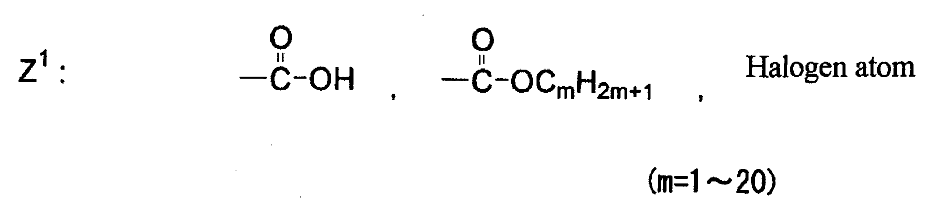

In the above-mentioned specific polymer (A), the content ratio of the above-mentioned monomer including an alkyl group having 6 or more carbon atoms is 1 wt% to 50 wt%, more preferably 2 wt% to 40 wt%, and most preferably 3 wt% to 30 wt%, in view of segregating property.

The partial structure that constitutes the specific polymerizable polymer in the invention may have other structural units so as to adjust compatibility with the ink and Tg of the polymer to the extent that the effect of the invention is not deteriorated. Examples of the other structural unit may include alkylene oxides having diols on both terminals in a molecule such as ethyleneglycol and propylene glycol, tertiary amine group-containing diols, ethylene oxide-modified polycaprolactams, and the like, and such other structural unit is preferably included in the specific polymerizable polymer by 0% by mass to 50% by mass, more preferably 0% by mass to 40% by mass, and most preferably 0% by mass to 30% by mass.

Hereinafter preferable specific examples [exemplary compounds (A-1) to (A-12)] of the specific polymerizable polymer in the invention are listed with their weight average molecular weights, but the invention is not limited to those specific examples in any way.

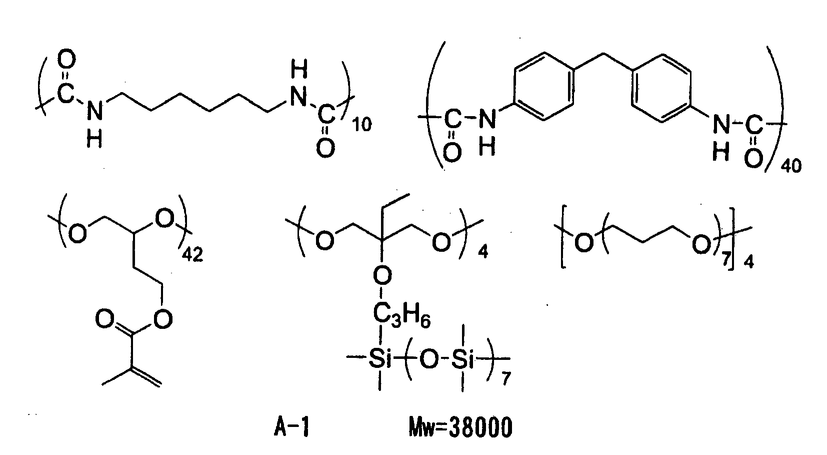

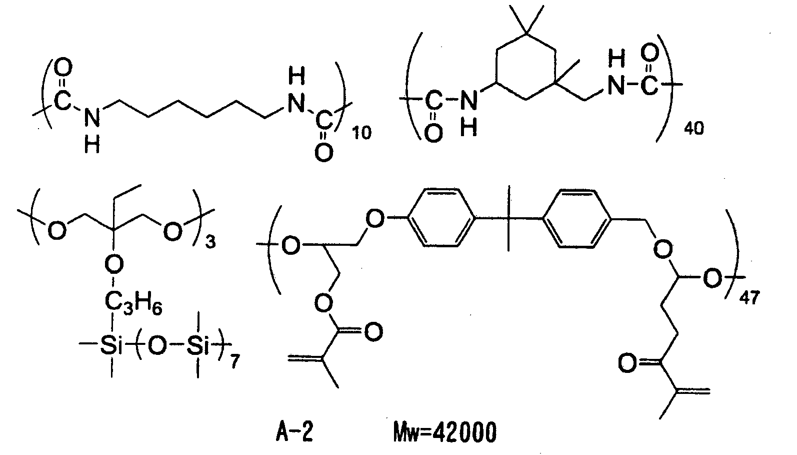

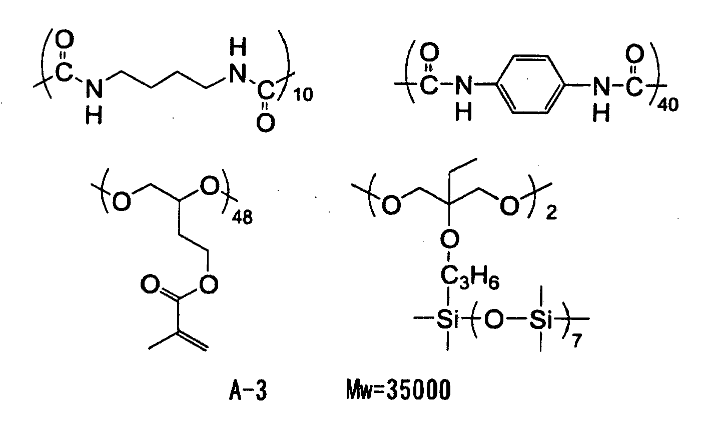

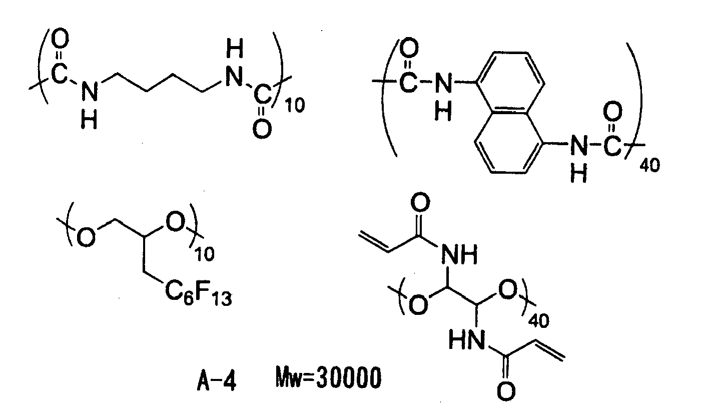

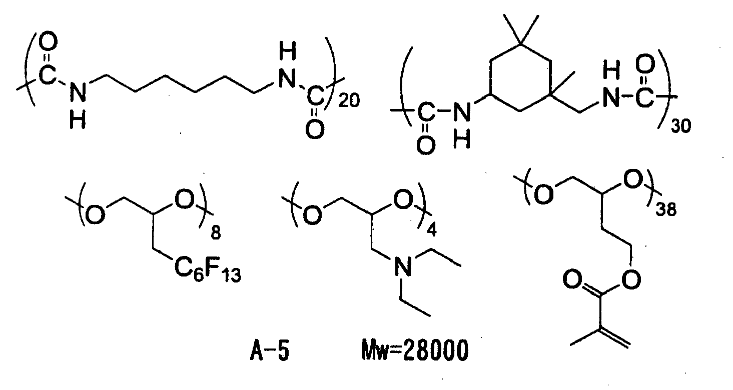

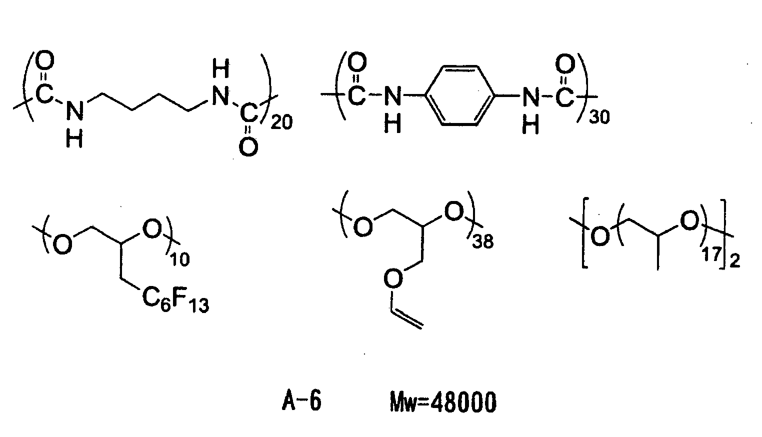

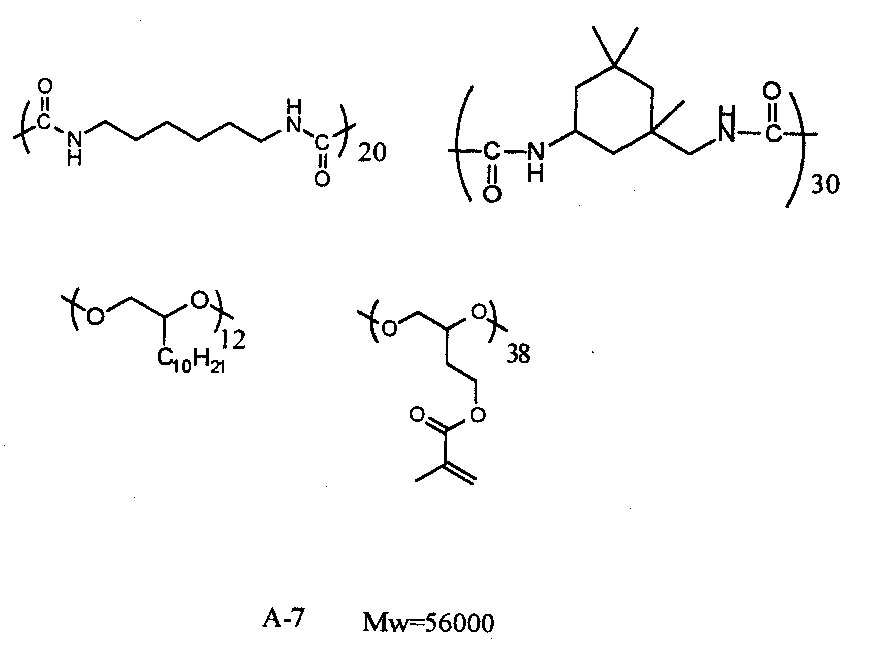

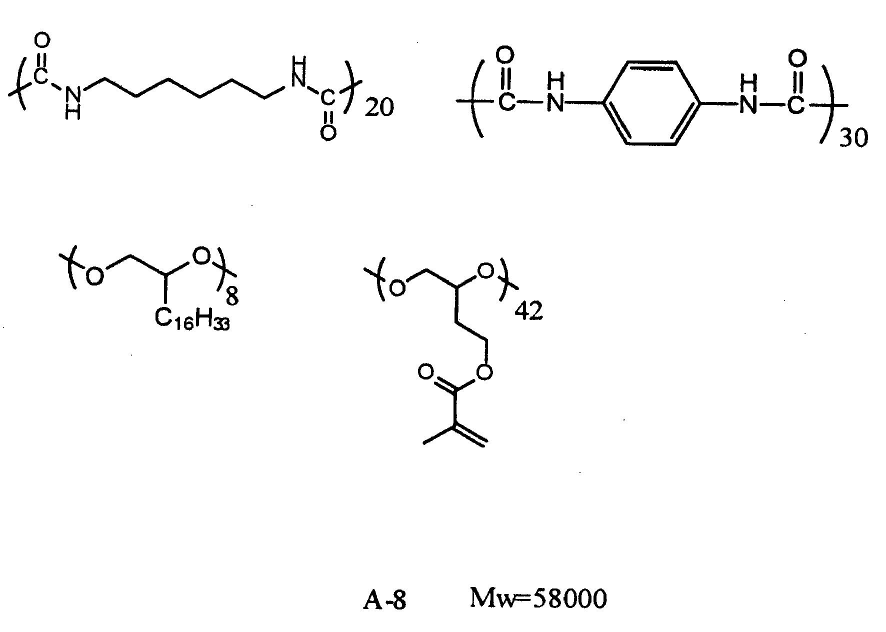

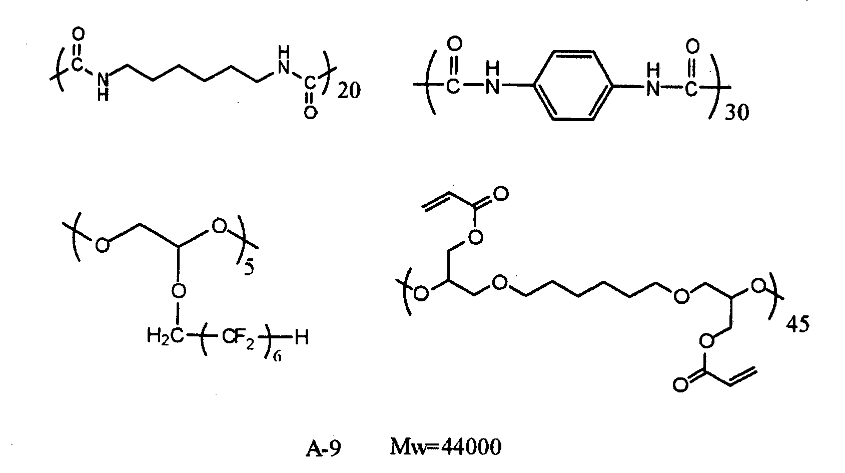

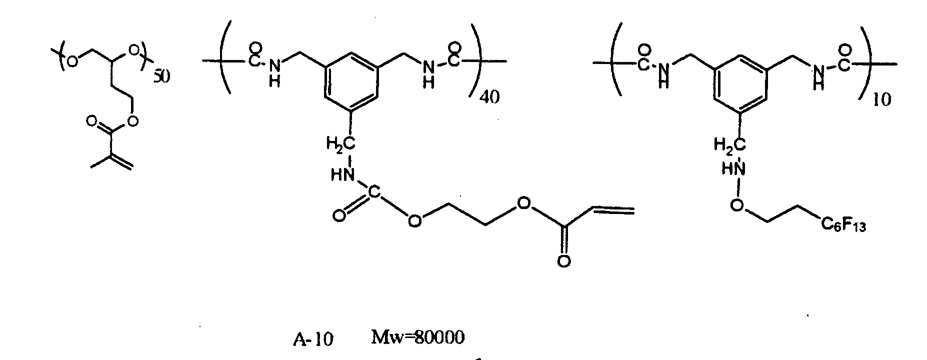

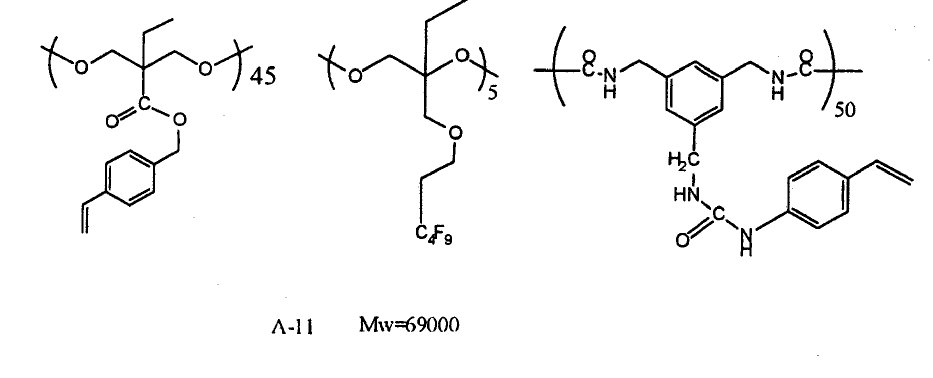

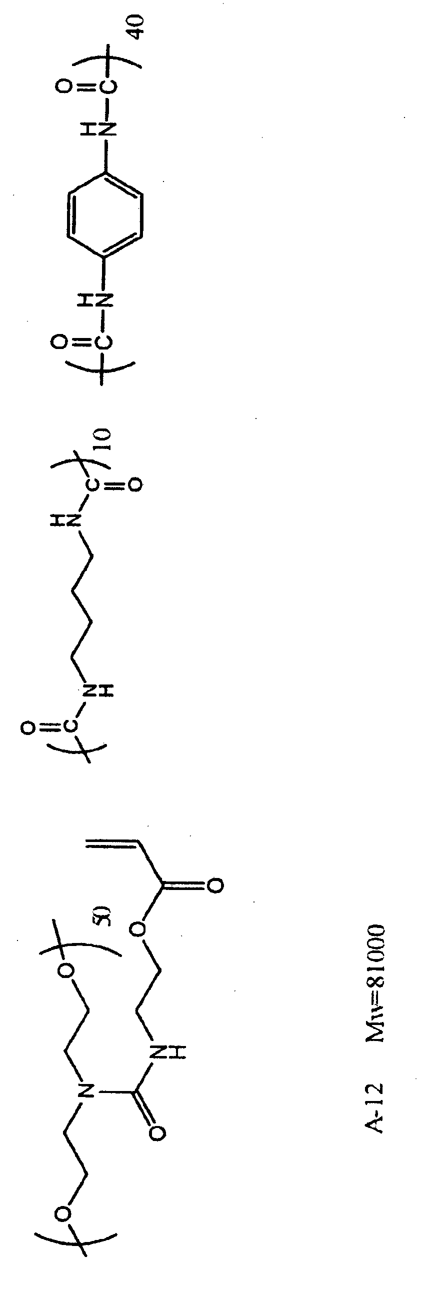

Of these, (A-1), (A-4) and the like are preferable in view of image quality and jetting stability. The specific polymerizable polymer (A) may be synthesized by one step using a diol component having a segregating site, according to a method described in, for example, JP-A No. 2005-250438.
As mentioned above, during the synthesis of the specific polymerizable polymer (A), the polymerizable group or segregating site may be introduced after synthesis of a polymer, or an urethane compound, which is a specific polymer for one-step reaction, may be obtained by using a diol having a polymerizable group and a segregating site, and a diisocyanate having a polymerizable group and a segregating site. Where the latter method is adopted, the polymerizable group and segregating site may be introduced in either or both of the diol and diisocyanate. Furthermore, in order to control the molecular weight of the specific polymer (A), a small amount of multifunctional diol and multifunctional isocyanate compound may be used in combination to the extent that the polymer is not gelled.

The above-mentioned specific polymerizable polymer (A) may be added to the ink composition of the invention by solely one kind, or as a combination of two or more kinds.
The content of the specific polymerizable polymer included in the ink composition of the invention is preferably 0.2% by mass to 5% by mass, more preferably 0.2% by mass to 3% by mass, and further preferably 0.2% by mass to 1.5% by mass, in the whole solid content in the ink composition.
It is preferable that the content is in the above-mentioned range since sufficient blocking-suppression effect may be obtained, the ink image is flexible, and jetting property is not inhibited during use for inkjet recording.

### [(B) Polymerizable compound having a different structure from that of the polymerizable polymer (A)]

The ink composition of the invention includes a known polymerizable compound that is generally used for curable compositions, which has a different structure from that of the specific polymerizable polymer (A) besides the specific polymerizable polymer (A). Hereinafter such polymerizable compound is suitably referred to as other polymerizable compound (B). As the other polymerizable compound (B), either a radical polymerizable compound or a cation polymerizable compound may be used according to the object.

### [(B-1) Radical polymerizable compound]

The radical polymerizable compound (B-1) that is used as the other polymerizable compound (B) is a compound having a radical polymerizable ethylenic unsaturated bond, and may be any compound as long as it is a compound having at least one radical polymerizable ethylenic unsaturated bond in a molecule and having a structure being different from that of the above-mentioned specific polymerizable polymer (A), and includes those having a chemical form such as monomer, oligomer and polymer. The radical polymerizable compound may be used by solely one kind, or as a combination of two or more kinds in any ratio so as to improve the objective property. It is preferable that the compound is used as a combination of two or more kinds for controlling the performances such as reactivity and physical properties.

Examples of the polymerizable compound having a radical polymerizable ethylenic unsaturated bond may include unsaturated carboxylic acids such as acrylic acid, methacrylic acid, itaconic acid, crotonic acid, isocrotonic acid and maleic acid, and salts thereof, anhydrides having an ethylenic unsaturated group, acrylonitrile, styrene, as well as various radical polymerizable compounds such as unsaturated polyesters, unsaturated polyethers, unsaturated polyamides and unsaturated urethanes, and the like.

Specific examples may include acrylic acid derivatives such as 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethyleneglycol diacrylate, diethyleneglycol diacrylate, triethyleneglycol diacrylate, tetraethyleneglycol diacrylate, polyethyleneglycol diacrylate, polypropyleneglycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylol acrylamide, diacetone acrylamide, epoxy acrylate; methacrylic acid derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethyleneglycol dimethacrylate, triethyleneglycol dimethacrylate, polyethyleneglycol dimethacrylate, polypropyleneglycol dimethacrylate, trimethylolethane trimethacrylate, trimethylolpropane trimethacrylate and 2,2-bis(4-methacryloxypolyethoxyphenyl)propane; allyl compound derivatives such as allyl glycidyl ether, diallyl phthalate and triallyl trimellitate; and the like. Furthermore, more specifically, the commercial products described in Shinzo Yamashita ed., "Crosslinking Agent Handbook", (1981, Taiseisha); Kiyomi Kato ed., "UV/EB Curing Handbook (Raw Materials)" (1985, Koubunshi Kankokai); RadTech Japan ed., "Applications and Markets of UV/EB Curing Technology", page 79, (1989, CMC Publishing); Eiichiro Takiyama, "Polyester Resin Handbook", (1988, Nikkan Kogyo Shimbun, Ltd.), or radical polymerizable or crosslinkable monomers, oligomers and polymers known in the art may be used.

Furthermore, as the radical polymerizable compounds, photosetting polymerizable compound materials used for photopolymerizable compositions described in, for example, JP-A No. 7-159983, Japanese Patent Application Publication (JP-B) No. 7-31399, JP-A Nos. 8-224982, 10-863 and 9-134011, and the like are known, and these may also be applied to the ink composition of the invention.

Furthermore, it is also preferable to use a vinyl ether compound as the radical polymerizable compound. Preferable examples of the vinyl ether compound may include di- or tri-vinyl ether compounds such as ethyleneglycol divinyl ether, ethyleneglycol monovinyl ether, diethyleneglycol divinyl ether, triethyleneglycol monovinyl ether, triethyleneglycol divinyl ether, propyleneglycol divinyl ether, dipropyleneglycol divinyl ether, butanediol divinyl ether, hexanediol divinyl ether, cyclohexanedimethanol divinyl ether, hydroxyethyl monovinyl ether, hydroxynonyl monovinyl ether, trimethylolpropane trivinyl ether; monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-O-propylene carbonate, dodecyl vinyl ether, diethyleneglycol monovinyl ether, octadecyl vinyl ether and the like.
Of these vinyl ether compounds, divinyl ether compounds and trivinyl ether compounds are preferable, and divinyl ether compounds are specifically preferable, in view of curability, adhesiveness and surface hardness. The vinyl ether compounds may be used by solely one kind, or as a suitable combination of two or more kinds.

The content of the radical polymerizable compound (B-1) is preferably 50% by mass to 90% by mass, more preferably 55% by mass to 90% by mass, and further preferably 60% by mass to 85% by mass, based on the whole solid content of the ink composition of the invention. Where the content is in the above-mentioned range, a coating having fine curability and fine color reproducibility may be obtained.
In order to further improve the flexibility of the coating, the radical polymerizable compound comprises the monofunctional monomer in an amouont of preferably 60% by mass to 100% by mass, more preferably 70% by mass to 100% by mass, and further preferably 80% by mass to 100% by mass.

### [(B-2) Cation polymerizable compound]

The cation polymerizable compound (B-2) used as the other polymerizable compound (B) is not specifically limited as long as it is a compound that cures by initiating polymerization reaction by an acid generated from a compound that generates an acid by irradiation of a radiation ray, and may be suitably selected from various known cation polymerizable monomers known as a photocation polymerizable compound. Examples of the open-ring polymerizable compound may include epoxy compounds, vinyl ether compounds, oxetane compounds and the like described in JP-ANos. 6-9714, 2001-31892, 2001-40068, 2001-55507, 2001-310938, 2001-310937, 2001-220526 and the like.

The epoxy compound includes an aromatic epoxide, an alicyclic epoxide, and an aliphatic epoxide.
The aromatic epoxide includes a di- or poly-glycidyl ether produced by a reaction of epichlorohydrin with polyphenol having at least one aromatic nucleus, or an alkylene oxide adduct thereof. Examples thereof include a di- or poly-glycidyl ether of bisphenol A or its alkylene oxide adduct, di- or poly-glycidyl ether of hydrogenated bisphenol A or its alkylene oxide adduct, and novolac type epoxy resin. Here, the alkylene oxide includes ethylene oxide and propylene oxide.

The alicyclic epoxide preferably includes a cyclohexene oxide or cyclopentene oxide comprising compound obtained by epoxidizing a compound having at least one cycloalkane ring such as a cyclohexene or cyclopentene ring, by a suitable oxidizer such as hydrogen peroxide and peroxy acid.

The aliphatic epoxide includes a di- or poly-glycidyl ether of aliphatic polyalcohol or its alkylene oxide adduct. The representative examples thereof include: diglycidyl ether of alkylene glycol such as diglycidyl ether of ethylene glycol, diglycidyl ether of propylene glycol, or diglycidyl ether of 1,6-hexanediol; polyglycidyl ether of polyalcohol such as di- or tri-glycidyl ether of glycerin or its alkylene oxide adduct; and diglycidyl ether of polyalkylene glycol represented by diglycidyl ether of polyethylene glycol or its alkylene oxide adduct, and diglycidyl ether of polypropylene glycol or its alkylene oxide adduct. Here, the alkylene oxide includes ethylene oxide and propylene oxide.

### The epoxy compound may be either monofunctional or polyfunctional.

Examples of the monofunctional epoxy compound used in the present invention include phenylglycidyl ether, p-tert-butylphenylglycidyl ether, butylglycidyl ether, 2-ethylhexylglycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Moreover, examples of the polyfunctional epoxy compound include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate, 3,4-epoxy-6-methylcyclohexyl-3',4'-epoxy-6'-methylcyclohexanecarboxylate, methylenebis(3,4-epoxycyclohexane), dicyclopentadienediepoxide, di(3,4-epoxycyclohexylmethyl)ether of ethylene glycol, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxyoctane, and 1,2,5,6-diepoxycyclooctane.

Among these epoxy compounds, aromatic epoxide and alicyclic epoxide are preferred from the viewpoint of superior cure rate, in particular alicyclic epoxide is preferred.

Examples of the vinylether compound include: di- or tri-vinylether compounds such as ethylene glycol divinylether, diethylene glycol divinylether, triethylene glycol divinylether, propylene glycol divinylether, dipropylene glycol divinylether, butanediol divinylether, hexanediol divinylether, cyclohexanedidimethanol divinylether, and trimethylolpropane trivinylether; and monovinylether compounds such as ethylvinylether, n-butylvinylether, isobutylvinylether, octadecylvinylether, cyclohexylvinylether, hydroxybutylvinylether, 2-ethylhexylvinylether, cyclohexanedimethanol monovinylether, n-propylvinylether, isopropylvinylether, isopropenylether-o-propylene carbonate, dodecylvinylether, diethylene glycol monovinylether, and octadecylvinylether.

### The vinylether compound may be either monofunctional or polyfunctional.

Specifically, examples of the monofunctional vinylether include methylvinylether, ethylvinylether, propylvinylether, n-butylvinylether, t-butylvinylether, 2-ethylhexylvinylether, n-nonylvinylether, laurylvinylether, cyclohexylvinylether, cyclohexylmethylvinylether, 4-methylcyclohexylmethylvinylether, benzylvinylether, dicyclopentenylvinylether, 2-dicyclopentenoxy ethylvinylether, methoxyethylvinylether, ethoxyethylvinylether, butoxyethylvinylether, methoxyethoxyethylvinylether, ethoxyethoxyethylvinylether, methoxypolyethylene glycol vinylether, tetrahydrofurfurylvinylether, 2-hydroxyethylvinylether, 2-hydroxypropylvinylether, 4-hydroxybutylvinylether, 4-hydroxymethylcyclohexylmethylvinylether, diethylene glycol monovinylether, polyethylene glycol vinylether, chloroethylvinylether, chlorobutylvinylether, chloroethoxyethylvinylether, phenylethylvinylether, and phenoxypolyethylene glycol vinylether.

Moreover, examples of the polyfunctional vinylether include: divinylethers such as ethylene glycol divinylether, diethylene glycol divinylether, polyethylene glycol divinylether, propylene glycol divinylether, butylene glycol divinylether, hexanediol divinylether, bisphenol A alkylene oxide divinylether, and bisphenol F alkylene oxide divinylether; and polyfunctional vinylethers such as trimethylolethane trivinylether, trimethylolpropane trivinylether, ditrimethylolpropane tetravinylether, glycerin trivinylether, pentaerythritol tetravinylether, dipentaerythritol pentavinylether, dipentaerythritol hexavinylether, ethylene oxide adduct trimethylolpropane trivinylether, propylene oxide adduct trimethylolpropane trivinylether, ethylene oxide adduct ditrimethylolpropane tetravinylether, propylene oxide adduct ditrimethylolpropane tetravinylether, ethylene oxide adduct pentaerythritol tetravinylether, propylene oxide adduct pentaerythritol tetravinylether, ethylene oxide adduct dipentaerythritol hexavinylether, and propylene oxide adduct dipentaerythritol hexavinylether.

As the vinylether compound, from the viewpoint of curability, adhesiveness onto the recording medium, and surface hardness of the formed image, di- or tri- vinylether compounds are preferred, in particular divinylether compounds are preferred.

The oxetane compound in the present invention denotes a compound having an oxetane ring, and publicly known oxetane compounds such as described in JP-A Nos. 2001-220526, 2001-310937, and 2003-341217 may be optionally selected and used.
The oxetane ring-comprising compound employable for the ink composition of the present invention is preferably a compound having 1 to 4 oxetane rings in its structure. By using such a compound, the viscosity of the ink composition can be readily kept within a range of excellent handling properties, and a high adhesiveness of the cured ink onto the recording medium can be obtained.

The compound having 1 or 2 oxetane rings in the molecule includes the compounds represented by the following formulae (1) through (3).

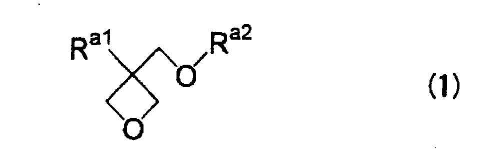

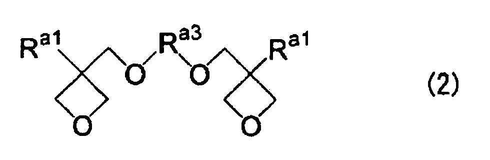

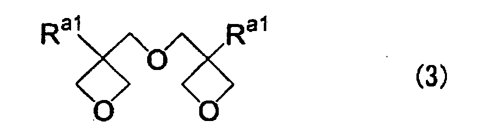

In the formulae (1) through (3), R^{a1} represents a hydrogen atom, an alkyl group having 1 to 6 carbon atoms, a fluoroalkyl group having 1 to 6 carbon atoms, an allyl group, an aryl group, a furyl group, or a thienyl group. If there are two R^{a1} in a molecule, they may be the same or different.
The alkyl group includes a methyl group, an ethyl group, a propyl group, and a butyl group. Preferred examples of the fluoroalkyl group include the alkyl groups wherein any one of the hydrogens is substituted with a fluorine atom.

In the formula (1), R^{a2} represents a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, and an N-alkylcarbamoyl group having 2 to 6 carbon atoms. The alkyl group includes a methyl group, an ethyl group, a propyl group, and a butyl group. The alkenyl group includes a 1-propenyl group, a 2-propenyl group, a 2-methyl-1-propenyl group, a 2-methyl-2-propenyl group, a 1-butenyl group, a 2-butenyl group, and a 3-butenyl group. The group having an aromatic ring includes a phenyl group, a benzyl group, a fluorobenzyl group, a methoxybenzyl group, and a phenoxyethyl group. The alkylcarbonyl group includes an ethylcarbonyl group, a propylcarbonyl group, and a butylcarbonyl group. The alkoxycarbonyl group includes an ethoxycarbonyl group, a propoxycarbonyl group, and a butoxycarbonyl group.
The N-alkylcarbamoyl group includes an ethylcarbamoyl group, a propylcarbamoyl group, a butylcarbamoyl group, and a pentylcarbamoyl group.

In the formula (2), R^{a3} represents a linear or branched alkylene group, a linear or branched poly(alkyleneoxy) group, a linear or branched unsaturated hydrocarbon group, a carbonyl group, an alkylene group including a carbonyl group, an alkylene group including a carboxyl group, an alkylene group including a carbamoyl group, or the following groups. Examples of the alkylene group include an ethylene group, a propylene group, and a butylene group. The poly(alkyleneoxy) group includes a poly (ethyleneoxy) group and a poly (propyleneoxy) group. The unsaturated hydrocarbon group includes a propenylene group, a methylpropenylene group, and a butenylene group.

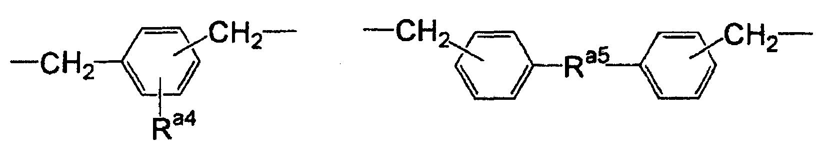

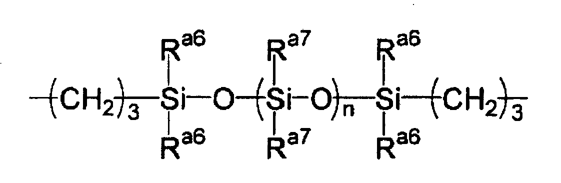

In the above polyvalent groups, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group, or a carbamoyl group.
R^{a5} represents an oxygen atom, a sulfur atom, a methylene group, NH, SO, SO₂, C(CF₃)₂, or C(CH₃)₂.
R^{a6} represents an alkyl group or an aryl group having 1 to 4 carbon atoms. n is an integer of 0 to 2000.
R^{a7} represents an alkyl group or an ar aliphatic yl group having 1 to 4 carbon atoms, or a monovalent group having the following structure.

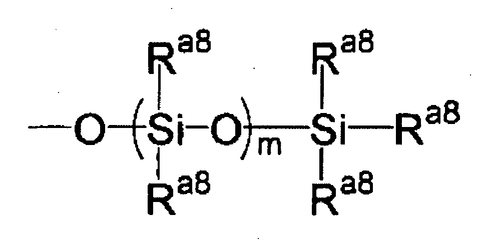

In the above monovalent group, R^{a8} represents an alkyl group or aryl group having 1 to 4 carbon atoms. m is an integer of 0 to 100.

The compound having 3 or 4 oxetane rings includes the compounds represented by the following formula (4).

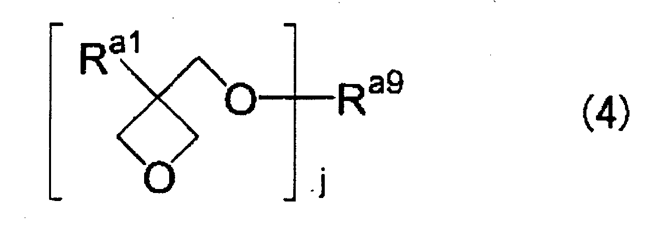

In the formula (4), R^{a1} is synonymous with R^{a1} in the formula (1). And, R^{a9} is a polyvalent linking group. Examples thereof include a branched alkylene group having 1 to 12 carbon atoms such as groups represented by (J) through (L) below, a branched poly(alkyleneoxy) group such as a group represented by (M) below, and a branched polysiloxy group such as a group represented by (N) below. j is 3 or 4.

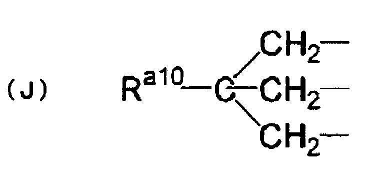

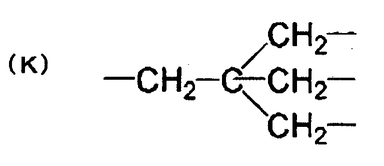

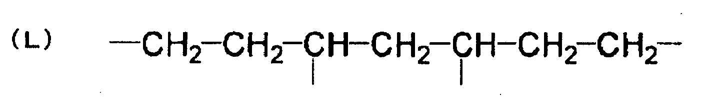

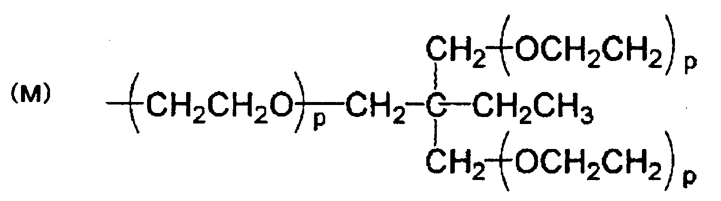

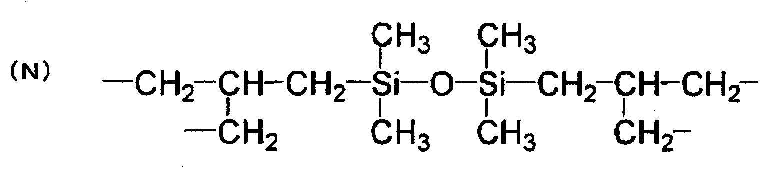

In the above (J), R^{a10} represents a methyl group, an ethyl group, and a propyl group. In the above (M), p is an integer of 1 to 10.

Another aspect of the oxetane compound suitably used in the present invention includes a compound represented by the formula (5) having an oxetane ring on the side chain.

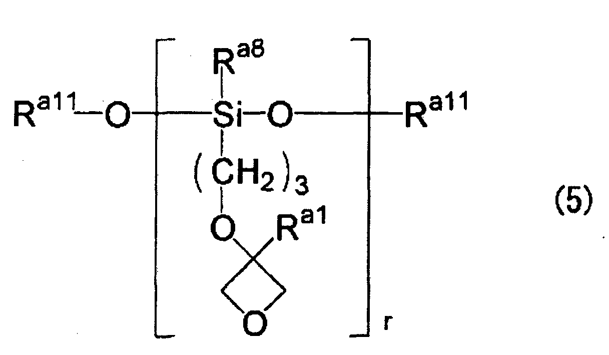

In the formula (5), R^{a1} is synonymous with R^{a1} in the formula (1). And, R^{a8} is synonymous with R^{a8} in the monovalent groups. R^{a11} represents an alkyl group having 1 to 4 carbon atoms such as a methyl group, an ethyl group, a propyl group, or a butyl group, or a trialkylsilyl group. r is 1 to 4.

Examples of such an oxetane ring-containing compound are described in detail in JP-A No. 2003-341217, paragraphs [0021] to [0084]. The compounds described therein can also be suitably used in the present invention.
Among the oxetane compounds used in the present invention, a compound having one oxetane ring is preferably used from the viewpoint of viscosity and cohesiveness of the ink composition.

### [(B-3) Compound having an open-ring polymerizable moiety and radical polymerizable moiety]

Furthermore, as the other polymerizable compound (B), a compound having an open-ring polymerizable moiety and a radical polymerizable moiety may also be used. Examples of such compound may include commercial products such as BLENMER G (trade name, manufactured by NOF Corporation), OXE-10 (trade name, manufactured by Osaka Organic Chemical Industry Ltd.), OXE-30 (trade name, manufactured by Osaka Organic Chemical Industry Ltd.), CYCLOMER A400 (trade name, manufactured by Daicel Chemical Industries, Ltd.), 4HBAGE (trade name, manufactured by Nippon Kasei Chemical Co., Ltd.), GBLA (trade name, manufactured by Osaka Organic Chemical Industry Ltd.), M-GMA (trade name, manufactured by Daicel Chemical Industries, Ltd.), CYCLOMER M100 (trade name, manufactured by Daicel-Cytec Company Ltd.) and the like.
Examples of the open-ring polymerizable compound having a radical polymerizable group may include the following compounds, but the invention is not limited by these compounds.

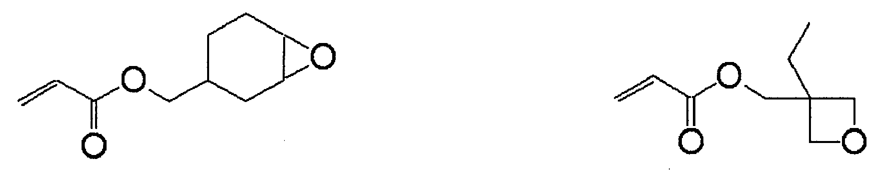

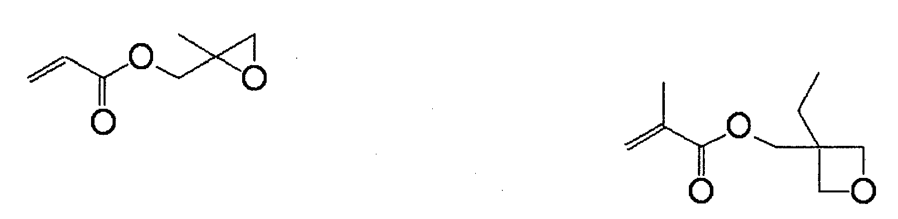

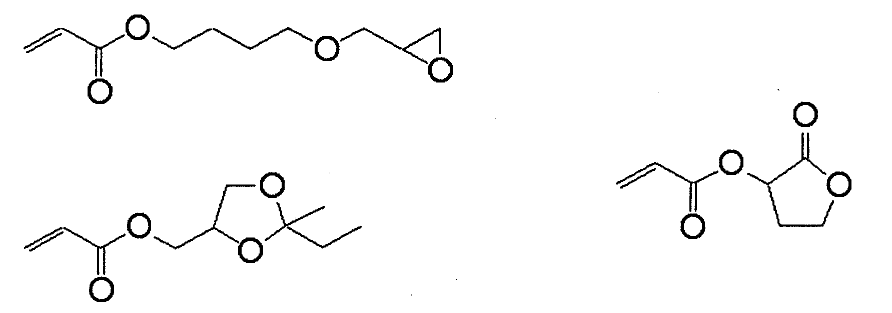

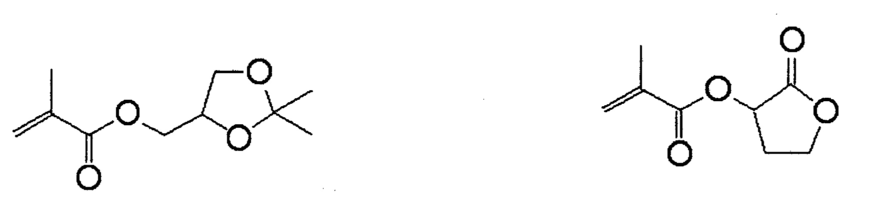

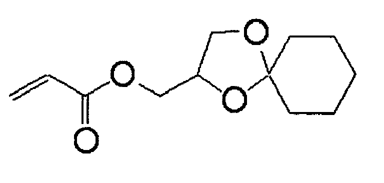

The cation polymerizable compound may be used by solely one kind, or as a combination of two or more kinds.
The content of the cation polymerizable compound (B-2) is preferably 50% by mass to 90% by mass, more preferably 55% by mass to 90% by mass, and further preferably 60% by mass to 85% by mass, based on the whole solid content of the ink composition of the invention. Where the content is in the above-mentioned range, a coating having fine curability and fine color reproducibility may be obtained.
In order to further improve the flexibility of the coating, the cation polymerizable compound comprises the monofunctional monomer in an amount of preferably 60% by mass to 100% by mass, more preferably 70% by mass to 100% by mass, and further preferably 80% by mass to 100% by mass.

The other polymerizable compound (B) may be a compound containing a radical polymerizable compound and a cation polymerizable compound, that is, the other polymerizable compound (B) may be a compound having a radical polymerizable property and/or a cation polymerizable property.
The other polymerizable compound (B) comprises a monofunctional monomer in an amount of preferably 60% by mass to 100% by mass, more preferably 70% by mass to 100% by mass, and further preferably 80% by mass to 100% by mass.

### [(C) Photopolymerization Initiator]

The ink composition of the invention includes the photopolymerization initiator (C). As the photopolymerization initiator (C), a known polymerization initiator may be suitably selected and used according to the kind of the other polymerizable compound (B) and the object of use of the ink composition.
The photopolymerization initiator (C) used in the ink composition of the invention is a compound that absorbs external energy (light) to generate a polymerization initiating species. Examples of the light may include active radiation rays such as γ-ray, β-ray, electron beam, ultraviolet ray, visible ray and infrared ray.

### [(C-1) Radical Polymerization Initiator]

As the photopolymerization initiator (C), a known compound may be used. Among preferable photopolymerization initiators (C) that may be used in the invention, examples of the radical polymerization initiator (C-1) may include (a) aromatic ketones, (b) acylphosphineoxide compounds, (c) aromatic onium salt compounds, (d) organic peroxides, (e) thio compounds, (f) hexaarylbiimidazol compounds, (g) ketooxime ester compounds, (h) borate compounds, (i) azinium compounds, (j) metallocene compounds, (k) active ester compounds, (1) compounds having carbon-halogen bonds, (m) alkylamine compounds, and the like.

As the radical polymerization initiator, the above-mentioned compounds (a) to (m) may be used by solely one kind or as a combination. The radical polymerization initiator of the invention may be preferably used by solely one kind or as a combination of two or more kinds.

Preferable examples of the aromatic ketones (a), acylphosphine compounds (b) and thio compounds (e) may include the compounds having a benzophenone backbone or a thioxanthone backbone described in "RADIATION CURING IN POLYMER SCIENCE AND TECHNOLOGY", J. P. FOUASSIER, J. F. RABEK (1993), pp. 77 to 117, and the like. More preferable examples may include the α-thiobenzophenone compounds described in JP-B No. 47-6416; the benzoin ether compounds described in JP-B No. 47-3981; the α -substituted benzoin compounds described in JP-B No. 47-22326; the benzoin derivatives described in JP-B No. 47-23664; the aroylphosphonic acid esters described in JP-A No. 57-30704; the dialkoxybenzophenones described in JP-B No. 60-26483; the benzoin ethers described in JP-B No. 60-26403 and JP-A No. 62-81345; the α-aminobenzophenones described in JP-B No. 1-34242, U.S. Patent No. 4,318,791 and European Patent No. 0284561A1; the p-di(dimethylaminobenzoyl)benzene described in JP-ANo. 2-211452; the thio-substituted aromatic ketones described in JP-A No. 61-194062; the acylphosphine sulfides described in JP-B No. 2-9597; the acylphosphines described in JP-B No. 2-9596; the thioxanthones described in JP-B No. 63-61950; the coumarins described in JP-B No. 59-42864; and the like.

Of these, it is preferable to use the acylphosphine oxide compound as a polymerization initiator in the invention, and bis(2,4,6-trimethylbenzoyl)phenylphosphine oxide (trade name: IRGACURE 819, manufactured by Ciba Specialty Chemicals), bis(2,6-dimethoxybenzoyl)-2,4,4-trimethylpentylphenylphosphine oxide, 2,4,6-trimethylbenzoyldiphenylphosphine oxide (trade name: DAROCUR TPO, manufactured by Ciba Specialty Chemicals, trade name: LUCIRIN TPO, manufactured by BASF) are preferable.

The aromatic onium salt compound (c) may include aromatic onium salts of elements of Groups 15, 16 and 17 of the periodic table, specifically N, P, As, Sb, Bi, O, S, Se, Te and I. Examples may include the iodonium salts described in European Patent No. 104143, U.S. Patent No. 4837124, and JP-A Nos. 2-150848 and 2-96514; the diazonium salts (benzene diazonium which may have a substituent, and the like) and diazonium salt resins (formaldehyde resins of diazodiphenylamine, and the like) described in European Patents Nos. 370693, 233567, 297443, 297442, 279210 and 422570, and U.S. Patents Nos. 3902144, 4933377, 4760013, 4734444 and 2833827; N-alkoxypyridinium salts (for example, those described in U.S. Patent No. 4,743,528, JP-A Nos. 63-138345, 63-142345 and 63-142346 and JP-B No. 46-42363, specifically 1-methoxy-4-phenylpyridiniumtetrafluoroborate and the like); the compounds described in JP-B Nos. 52-147277, 52-14278 and 52-14279; and the like. These generate a radical or acid as an active species.

The organic peroxide (d) include almost all of the organic compounds having one or more oxygen-oxygen bonds in the molecule, and preferable examples may include peroxide ester compounds such as 3,3',4,4'-tetra-(t-butylperoxycarbonyl)benzophenone, 3,3',4,4'-tetra-(t-amylperoxycarbonyl)benzophenone, 3,3',4,4'-tetra-(t-hexylperoxycarbonyl)benzophenone, 3,3',4,4'-tetra-(t-octylperoxycarbonyl)benzophenone, 3,3',4,4'-tetra-(cumylperoxycarbonyl)benzophenone, 3,3',4,4'-tetra-(p-isopropylcumylperoxycarbonyl)benzophenone and di-t-butyldiperoxyisophthalate.

Examples of the hexaaryl biimidazol compound (f) may include the rofin dimers described in JP-B Nos. 45-37377 and 44-86516, such as 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole and 2,2'-bis(o-trifluorophenyl)-4,4',5,5'-tetraphenylbiimidazole.

Examples of the ketooxime ester compound (g) may include 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-p-toluenesulfonyloxyiminobutan-2-one and 2-ethoxycarbonyloxyimino-1-phenylpropan-1-one.

Examples of the borate compound (h) may include the compounds described in U.S. Patents Nos. 3,567,453 and 4,343,891, and European Patents Nos. 109,772 and 109,773.
Examples of the azinium compound (i) may include the compounds having an N-O bond described in JP-A Nos. 63-138345, 63-142345, 63-142346 and 63-143537, and JP-B No. 46-42363.

Examples of the metallocene compound (j) may include the titanocene compounds described in JP-A Nos. 59-152396, 61-151197, 63-41484, 2-249 and 2-4705, and the iron-arene complexes described in JP-ANos. 1-304453 and 1-152109.
Specific examples of the above-mentioned titanocene compound may include di-cyclopentadienyl-Ti-di-chloride, di-cyclopentadienyl-Ti-bis-phenyl, di-cyclopentadienyl-Ti-bis-2,3,4,5,6-pentafluorophen-1-yl, di-cyclopentadienyl-Ti-bis-2,3,5,6-tetrafluorophen-1-yl, di-cyclopentadienyl-Ti-bis-2,4,6-trifluorophen-1-yl, di-cyclopentadienyl-Ti-2,6-difluorophen-1-yl, di-cyclopentadienyl-Ti-bis-2,4-difluorophen-1-yl, di-methylcyclopentadienyl-Ti-bis-2,3,4,5,6-pentafluorophen-1-yl, di-methylcyclopentadienyl-Ti-bis-2,3,5,6-tetrafluorophen-1-yl, di-methylcyclopentadienyl-Ti-bis-2,4-difluorophen-1-yl, bis(cyclopentadienyl)-bis(2,6-difluoro-3-(pyrrol-1-yl)phenyl)titanium, bis(cyclopentadienyl)bis[2,6-difluoro-3- (methylsulfoneamide)phenyl]titanium, bis(cyclopentadienyl)bis[2,6-difluoro-3-(N-butylbiaroyl-amino)phenyl]titanium, and the like.

Examples of the active ester compound (k) may include the nitrobenzyl ester compounds described in European Patents Nos. 0290750, 046083, 156153, 271851 and 0388343, U.S. Patents Nos. 3901710 and 4181531, and JP-ANos. 60-198538 and 53-133022; the iminosulfonate compounds described in European Patents Nos. 0199672, 84515, 199672, 044115 and 0101122, U.S. Patents Nos. 4618564, 4371605 and 4431774, and JP-A Nos. 64-18143, 2-245756 and 4-365048; the compounds described in JP-B Nos. 62-6223 and 63-14340 and JP-ANo. 59-174831; and the like.

Preferable examples of the compound having carbon-halogen bonds (1) may include the compounds described in Wakabayashi et al., ed., Bull. Chem. Soc. Japan, 42, 2924(1969), the compounds described in U.K. Patent No. 1388492, the compounds described in JP-A No. 53-133428, the compounds described in German Patent No. 3337024, and the like.
Furthermore, the compounds described in F. C. Schaefer et al., J. Org. Chem., 29, 1527 (1964), the compounds described in JP-A No. 62-58241, the compounds described in JP-A No. 5-281728, and the like may be also exemplified. Moreover, the compounds described in German Patent No. 2641100, the compounds described in German Patent No. 3333450, the compounds described in German Patent No. 3021590, the compounds described in German Patent No. 3021599 and the like may also be exemplified.

In the invention, the radical polymerization initiator (C-1) may be used by solely one kind, or as a combination of two or more kinds. The radical polymerization initiator (C-1) is preferably used as a combination of two or more kinds in view of the effect.

### [(C-2) Cation polymerization initiator]

Where the cation polymerizable compound (B-2) is used as the other polymerizable compound (B) in the invention, it preferably includes the cation polymerization initiator (C-2) as the photopolymerization initiator (C). Examples of the cation polymerization initiator (C-2) may include known photo-acid generators. As used herein, the photo-acid generator refers to a compound that generates an acid by irradiation of a radiation ray.
Examples of the photo-acid generator used in the invention may be selected from photoinitiators of photocation polymerization, photodecolorants for pigments, photo color changing agents, or compounds that generate an acid by irradiation of a ray used in microresists or the like (ultraviolet ray at 400 nm to 200 nm, far ultraviolet ray, specifically preferably, g-ray, h-ray, i-ray, KrF excimer laser ray), ArF excimer laser ray, electron beam, X-ray, molecular ray, ion beam or the like, are used.

Examples of such photo-acid generator may include compounds that generate an acid by irradiation of a radiation ray such as onium salts such as diazonium salts, ammonium salts, phosphonium salts, iodonium salts, sulfonium salts, serenonium salts and arsonium salts, organic halogen compounds, organic metal/organic halogenated compounds, photo-acid generators having o-nitrobenzyl type protective groups, compounds that generate sulfonic acid such as iminosulfonate, disulfone compounds, diazoketosulfone and diazodisulfone compounds.

Moreover, other examples of the compound which generates an acid by irradiation of active rays or radiation used for the present invention include onium salts such as: a diazonium salt described in S. I. Schlesinger, Photogr. Sci. Eng., 18,387 (1974), T. S. Bal etal, Polymer, 21, 423 (1980), and the like; an ammonium salt described in US Patent Nos. 4,069,055, 4,069,056 and Re27,992, JP-ANo.3-140,140, and the like; a phosphonium salt described in D. C. Necker etal, Macromolecules, 17,2468 (1984), C. S. Wen etal, Tech, Proc. Conf. Rad. Curing ASIA, p478 Tokyo, Oct (1988), US Patent Nos. 4,069,055 and 4,069,056, and the like; an iodonium salt described in J. V. Crivello etal, Macromolecules, 10(6), 1307 (1977), Chem. & Eng. News, Nov.28, p31 (1988), European Patent Nos. 104,143, 339,049, 410,201, JP-A No.2-150848, JP-A No.2-296514, and the like;

A sulfonium salt described in J. V. Crivello etal, Polymer J. 17,73 (1985), J. V. Crivello etal. J. Org. Chem., 43,3055 (1978), W. R. Watt etal, J. Polymer Sci., Polymer Chem. Ed., 22, 1789 (1984), J. V. Crivello etal, Polymer Bull., 14,279 (1985), J. V. Crivello etal, Macromolecules, 14(5), 1141 (1981), J. V. Crivello etal, J. Polymer Sci., Polymer Chem. Ed., 17,2877 (1979), European Patent Nos. 370,693, 161,811, 410,201, 339,049, 233,567, 297,443, and 297,442, US Patent Nos. 3,902,114, 4,933,377, 4,760,013, 4,734,444, and 2,833,827, German Patent Nos. 2,904,626, 3,604,580, and 3,604,581, JP-A Nos. H7-28237 and 8-27102, and the like;

A selenonium salt described in J. V. Crivello etal, Macromolecules, 10(6), 1307 (1977), J. V. Crivello etal, J. Polymer Sci., Polymer Chem. Ed., 17,1047 (1979), and the like; an arsonium salt described in C. S. Wen etal, Tech, Proc. Conf. Rad. Curing ASIA, p478 Tokyo, Oct (1988), and the like; an organic halogen compound described in US Patent No. 3,905,815, JP-B No.46-4605, JP-A S48-36281, JP-A No.55-32070, JP-A No.60-239736, JP-A No.61-169835, JP-A No.61-169837, JP-A No.62-58241, JP-A No.62-212401, JP-A No.63-70243, JP-A No.63-298339, and the like; an organic metal/organic halogen compound described in K. Meier et al, J. Rad. Curing, 13(4), 26 (1986), T. P. Gill et al, Inorg. Chem., 19,3007 (1980), D. Astruc, Acc. Chem. Res., 19(12), 377 (1896), JP-A No.2-161445, and the like;

A photo-acid generator having an o-nitrobenzyl type protective group described in S. Hayase etal, J. Polymer Sci., 25,753 (1987), E. Reichmanis etal, J. Polymer, Sci., Polymer Chem. Ed., 23,1 (1985), Q. Q. Zhu etal, J. Photochem., 36,85,39,317 (1987), B. Amit etal, Tetrahedron Lett., (24)2205 (1973), D. H. R. Barton etal, J. Chem. Soc., 3571 (1965), P. M. Collins et al, J. Chem. Soc., Perkin I, 1695 (1975), M. Rudinstein etal, Tetrahedron Lett., (17), 1445 (1975), J. W. Walker etal, J. Am. Chem. Soc., 110,7170 (1988), S. C. Busman etal, J. Imaging Technol., 11(4), 191 (1985), H. M. Houlihan etal, Macromolecules, 21,2001 (1988), P. M. Collins etal, J. Chem. Soc., Chem. Commun., 532 (1972), S. Hayase etal, Macromolecules, 18,1799 (1985), E. Reichmanis etal, J. Electrochem. Soc., Solid State Sci.Technol.,130(6), F. M. Houlihan etal, Macromolecules, 21,2001 (1988), European Patent Nos. 0290,750, 046,083, 156,535, 271,851, and 0,388,343, US Patent Nos. 3,901,710 and 4,181,531, JP-A No.60-198538, JP-A No.53-133022, and the like;

A compound such as iminosulfonate that is photodecomposed to generate a sulfonic acid described in M. TUNOOKA etal, Polymer Preprints Japan, 35(8), G. Berner etal, J. Rad. Curing, 13(4), W. J. Mijs etal, Coating Technol., 55(697), 45(1983), Akzo, H. Adachi etal, Polymer Preprints, Japan, 37(3), European Patent Nos. 0199,672, 84515, 044,115, 618,564, and 0101,122, US Patent Nos. 4,371,605 and 4,431,774, JP-A No.64-18143, JP-A No.2-245756, JP-A No.3-140109, and the like; a disulphone compound described in JP-A No.61-166544, JP-A No.2-71270 and the like; and a diazoketosulphone and diazodisulphone compound described in JP-ANos. 3-103854, 3-103856, and 4-210960, and the like.

Moreover, there may be employable compounds in which groups or compounds which generate an acid by these rays are introduced into a main chain or side chain of a polymer, such as compounds described in M. E. Woodhouse et al, J. Am. Chem. Soc., 104,5586 (1982), S. P. Pappas et al, J. Imaging Sci., 30(5), 218(1986), S. Kondo etal, Makromol. Chem., Rapid Commun., 9,625 (1988), Y. Yamada etal, Makromol. Chem., 152, 153, 163 (1972), J. V. Crivello et al, J. Polymer Sci., Polymer Chem. Ed., 17,3845 (1979), US Patent No. 3,849,137, German Patent No. 3914407, JP-A No.63-26653, JP-A No.55-164824, JP-A No.62-69263, JP-A No.63-146038, JP-A No.63-163452, JP-A No.62-1 53853, JP-A No.63-146029, and the like.

Furthermore, there may be employable compounds which generates an acid by rays described in V. N. R. Pillai, Synthesis, (1), 1 (1980), A. Abad etal, Tetrahedron Lett., (47) 4555 (1971), D. H. R. Barton et al, J. Chem. Soc., (c1),329(1970), US Patent No. 3,779,778, European Patent No. 126,712, and the like.

Preferred compounds of the photo-acid generator employable for the present invention include compounds represented by the following formulae (b1), (b2), and (b3).

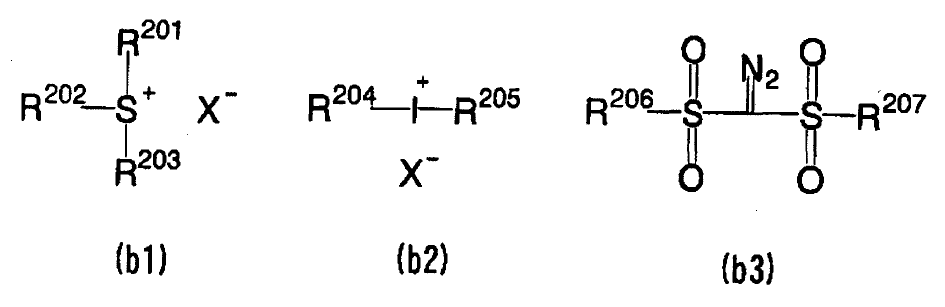

In the formula (b1), R²⁰¹, R²⁰² and R²⁰³ independently represent an organic group.
X- represents a non-nucleophilic anion. Preferred examples thereof include a sulphonate anion, a carboxylate anion, a bis(alkylsulfonyl)amide anion, a tris(alkylsulfonyl)methide anion, BF₄⁻, PF₆⁻, SbF₆⁻, and a group shown below, and preferably an organic anion having carbon atoms.

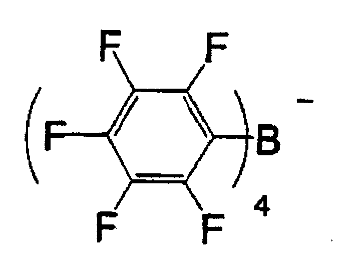

Preferred organic anions include organic anions shown by the following formulae.

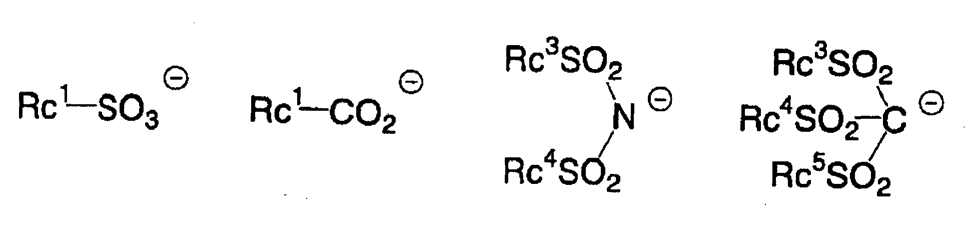

Rc¹ represents an organic group.
The organic group represented by Rc¹ include those having 1 to 30 carbon atoms, preferably an alkyl group, a cycloalkyl group, an aryl group, or a plurality thereof linked by a linking group such as a single bond, -O-, -CO₂-, -S-, -SO₃-, -SO₂N(Rd¹)-, and the like. Rd¹ represents a hydrogen atom, or an alkyl group.

Rc³, Rc⁴ and Rc⁵ independently represent an organic group.
The organic group represented by Rc³, Rc⁴, or Rc⁵ preferably includes the same organic groups preferred for Rc¹, and most preferably a perfluoroalkyl group having 1 to 4 carbon atoms.
Rc³ and Rc⁴ may be bonded to form a ring.
The group formed by bonding Rc³ and Rc⁴ includes an alkylene group and an arylene group, and preferably a perfluoroalkylene group having 2 to 4 carbon atoms.

The organic group represented by Rc¹ and Rc³ to Rc⁵ most preferably includes an alkyl group having the first position substituted with a fluorine atom or a fluoroalkyl group, and a phenyl group having the first position substituted with a fluorine atom or a fluoroalkyl group. By having a fluorine atom or a fluoroalkyl group, the acidity of the acid generated by photo irradiation is increased, and the sensitivity is improved.

In the formula (b1), the number of carbon atoms of an organic group represented by R²⁰¹, R²⁰², or R²⁰³ is generally 1 to 30, and preferably 1 to 20.
And, any two of R²⁰¹ to R²⁰³ may be bonded to form a ring structure, and may include an oxygen atom, a sulfur atom, an ester bond, an amide bond, or a carbonyl group in the ring. The group formed by bonding any two of R²⁰¹ to R²⁰³ includes an alkylene group (such as a butylene group and a pentylene group).

Specific examples of the organic group represented by R²⁰¹, R²⁰², or R²⁰³ include corresponding groups in the compounds (b1-1), (b1-2), and (b1-3) described later.

The photo-acid generator may be a compound having a plurality of structures represented by the formula (b1). For example, it may be a compound having a structure where at least any one of R²⁰¹ to R²⁰³ in a compound represented by the formula (b1) is bonded with at least any one of R²⁰¹ to R²⁰³ in another compound represented by the formula (b1), directly or via a linking group.

The compound represented by the formula (b1) more preferably includes the compounds (b1-1), (b1-2), and (b1-3) described below.

The compound (b1-1) is an arylsulfonium compound where at least any one of R²⁰¹ to R²⁰³ in the formula (b1) is an aryl group, that is, a compound having arylsulfonium as a cation.

In the arylsulfonium compound, all of R²⁰¹ to R²⁰³ may be an aryl group, or a part of R²⁰¹ to R²⁰³ may be an aryl group and the rest may be an alkyl group or a cycloalkyl group.

Examples of the arylsulfonium compound include a triarylsulfonium compound, a diarylalkylsulfonium compound, an aryldialkylsulfonium compound, a diarylcycloalkylsulfonium compound, and an aryldicycloalkylsulfonium compound.

As an aryl group of the arylsulfonium compound, an aryl group such as a phenyl group and a naphthyl group, and a heteroaryl group such as an indole residue and a pyrrole residue are preferred, and more preferably a phenyl group and an indole residue. When the arylsulfonium compound has two or more aryl groups, the two or more aryl groups may be the same or different.

As the alkyl group held by the arylsulfonium compound as required, a linear or branched alkyl group having 1 to 15 carbon atoms is preferred. Examples thereof include a methyl group, an ethyl group, a propyl group, an n-butyl group, a sec-butyl group, and a t-butyl group.
As the cycloalkyl group held by the arylsulfonium compound as required, a cycloalkyl group having 3 to 15 carbon atoms is preferred. Examples thereof include a cyclopropyl group, a cyclobutyl group, and a cyclohexyl group.

The aryl group, alkyl group, and cycloalkyl group represented by R²⁰¹ to R²⁰³ may have an alkyl group (for example, 1 to 15 carbon atoms), a cycloalkyl group (for example, 3 to 15 carbon atoms), an aryl group (for example, 6 to 14 carbon atoms), an alkoxy group (for example, 1 to 15 carbon atoms), a halogen atom, a hydroxyl group, or a phenylthio group as a substituent. Preferred substituents are a linear or branched alkyl group having 1 to 12 carbon atoms, a cycloalkyl group having 3 to 12 carbon atoms, a linear, branched, or cyclic alkoxy group having 1 to 12 carbon atoms, and most preferably an alkyl group having 1 to 4 carbon atoms, and an alkoxy group having 1 to 4 carbon atoms. Any one of three R²⁰¹ to R²⁰³ may be substituted with the substituent, or all three of them may be substituted. And, if the R²⁰¹ to R²⁰³ is an aryl group, the p- position of the aryl group is preferably substituted with the substituent.

### Next is a description of the compound (b1-2).

The compound (b1-2) is a compound in a case where R²⁰¹ to R²⁰³ in the formula (b1) independently represent an organic group not comprising an aromatic ring. Here, the aromatic ring includes an aromatic ring comprising a hetero atom.
The organic group not comprising an aromatic ring represented by R²⁰¹ to R²⁰³ is generally an organic group having 1 to 30 carbon atoms, and preferably 1 to 20 carbon atoms.
Preferably, R²⁰¹ to R²⁰³ independently represent an alkyl group, a cycloalkyl group, an allyl group, or a vinyl group, more preferably a linear, branched, or cyclic 2-oxoalkyl group or an alkoxycarbonylmethyl group, and particularly preferably a linear or branched 2-oxoalkyl group.

The alkyl group represented by R²⁰¹ to R²⁰³ may be either linear or branched, preferably including linear or branched alkyl groups having 1 to 10 carbon atoms (such as a methyl group, an ethyl group, a propyl group, a butyl group, and a pentyl group), and more preferably a linear or branched 2-oxoalkyl group or alkoxycarbonylmethyl group.

The cycloalkyl group represented by R²⁰¹ to R²⁰³ preferably includes cycloalkyl groups having 3 to 10 carbon atoms (a cyclopentyl group, a cyclohexyl group, and a norbonyl group), and more preferably a cyclic 2-oxoalkyl group.

The linear, branched, or cyclic 2-oxoalkyl group represented by R²⁰¹ to R²⁰³ preferably includes the above alkyl groups and cycloalkyl groups having >C=O at the second position.
The alkoxy group in the alkoxycarbonylmethyl group represented by R²⁰¹ to R²⁰³ preferably includes alkoxy groups having 1 to 5 carbon atoms (a methoxy group, an ethoxy group, a propoxy group, a butoxy group, and a pentoxy group).
R²⁰¹ to R²⁰³ may be further substituted with a halogen atom, an alkoxy group (for example, having 1 to 5 carbon atoms), a hydroxyl group, a cyano group, or a nitro group.

### Next is a description of the compound (b1-3).

The compound (b1-3) is a compound represented by the following formula (b1-3) having a phenacylsulfonium salt structure.

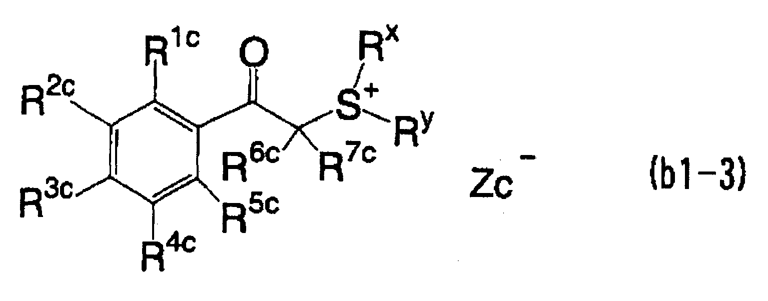

In the formula (b1-3), R^{1c} to R^{5c} independently represent a hydrogen atom, an alkyl group, a cycloalkyl group, an alkoxy group, or a halogen atom.
R^{6c} and R^{7c} independently represent a hydrogen atom, an alkyl group, or a cycloalkyl group.
R^{x} and R^{y} independently represent an alkyl group, a cycloalkyl group, an allyl group, or a vinyl group.
Any two or more among R^{1c} to R^{5c}, R^{6c} and R^{7c}, or R^{x} and R^{y} may be bonded to each other to form a ring structure.
Zc⁻ represents a non-nucleophilic anion, including a similar one to the abovementioned non-nucleophilic anions represented by X⁻ in the formula (b1).

The alkyl group represented by R^{1c} to R^{7c} may be either linear or branched. Examples thereof include linear and branched alkyl groups having 1 to 20 carbon atoms, preferably 1 to 12 carbon atoms (for example, a methyl group, an ethyl group, a linear or branched propyl group, a linear or branched butyl group, and a linear or branched pentyl group).

The cycloalkyl group represented by R^{1c} to R^{7c} preferably includes a cycloalkyl groups having 3 to 8 carbon atoms (for example, a cyclopentyl group and a cyclohexyl group).

The alkoxy group represented by R^{1c} to R^{5c} may be linear, branched or cyclic. Examples thereof include linear and branched alkoxy groups having 1 to 10 carbon atoms, preferably 1 to 5 carbon atoms (for example, a methoxy group, an ethoxy group, a linear or branched propoxy group, a linear or branched butoxy group, and a linear or branched pentoxy group), and cyclic alkoxy groups having 3 to 8 carbon atoms (for example, a cyclopentyloxy group, and a cyclohexyloxy group).

Groups formed by any two or more among R^{1c} to R^{5c}, R^{6c} and R^{7c}, or R^{x} and R^{y} bonded to each other include a butylene group and a pentylene group. This ring structure may include an oxygen atom, a sulfur atom, an ester bond, or an amide bond.

Preferably, any one of R^{1c} to R^{5c} is a linear or branched alkyl group, a cycloalkyl group, or a linear, branched, or cyclic alkoxy group, and more preferably the sum of carbon atoms of R^{1c} to R^{5c} is 2 to 15. As a result, the solvent solubility is more improved and particle generation during storage can be suppressed.

The alkyl group and the cycloalkyl group represented by R^{x} and R^{y} are similar to the alkyl groups and cycloalkyl groups represented by R^{1c} to R^{7c}.
R^{x} and R^{y} are preferably a 2-oxoalkyl group or an alkoxycarbonylmethyl group.
The 2-oxoalkyl group includes the alkyl groups and the cycloalkyl groups represented by R^{1c} to R^{5c} having >C=O at the second position.
The alkoxy groups in the alkoxycarbonylmethyl group are similar to the alkoxy groups as R^{1c} to R^{5c}.

R^{x} and R^{y} are preferably an alkyl group or a cycloalkyl group having 4 or more carbon atoms, more preferably 6 or more carbon atoms, and even more preferably 8 or more carbon atoms.

In the formulae (b2) and (b3), R²⁰⁴ to R²⁰⁷ independently represent an aryl group, an alkyl group, or a cycloalkyl group. X⁻ represents a non-nucleophilic anion, including a similar one to the abovementioned non-nucleophilic anion represented by X⁻ in the formula (b1).

The aryl group represented by R²⁰⁴ to R²⁰⁷ is preferably a phenyl group or a naphthyl group, and more preferably a phenyl group.
The alkyl group represented by R²⁰⁴ to R²⁰⁷ may be either linear or branched, and preferably includes linear or branched alkyl groups having 1 to 10 carbon atoms (such as a methyl group, an ethyl group, a propyl group, a butyl group, and a pentyl group). The cycloalkyl group represented by R²⁰⁴ to R²⁰⁷ preferably includes cycloalkyl groups having 3 to 10 carbon atoms (a cyclopentyl group, a cyclohexyl group, or a norbonyl group).
Examples of the substituent that may be held by R²⁰⁴ to R²⁰⁷ include an alkyl group (for example, 1 to 15 carbon atoms), a cycloalkyl group (for example, 3 to 15 carbon atoms), an aryl group (for example, 6 to 15 carbon atoms), an alkoxy group (for example, 1 to 15 carbon atoms), a halogen atom, a hydroxyl group, or a phenylthio group.

Preferred compounds (photo-acid generators) which generate an acid by irradiation of active rays or radiation employable in the present invention include compounds represented by the following formulae (b4), (b5), and (b6).

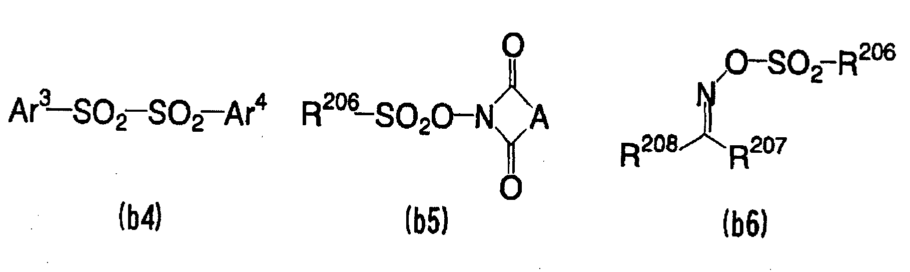

In the formulae (b4), Ar³ and Ar⁴ independently represent an aryl group.
In the formulae (b5) and (b6), R²⁰⁶, R²⁰⁷ and R²⁰⁸ independently represent an alkyl group, a cycloalkyl group, or an aryl group.
In the formula (b5), A represents an alkylene group, an alkenyne, or an arylene group.

Preferred compounds of the photo-acid generator include compounds represented by the formulae (b1) through (b3).

Hereinafter, preferred compound examples (b-1) to (b-96) of the photo-acid generator employable in the present invention are shown. However, the present invention is not limited to these.

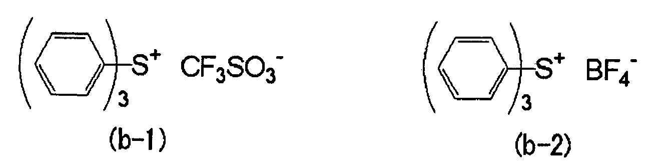

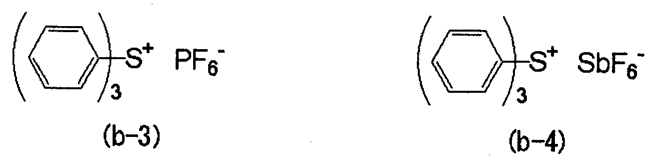

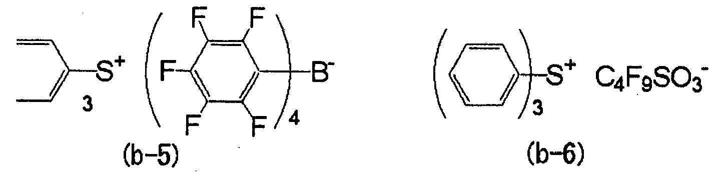

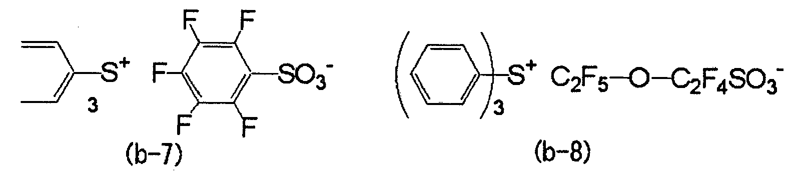

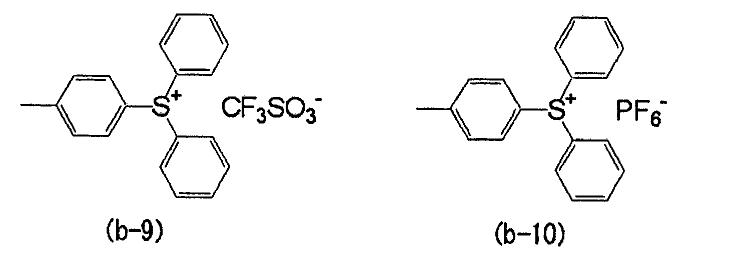

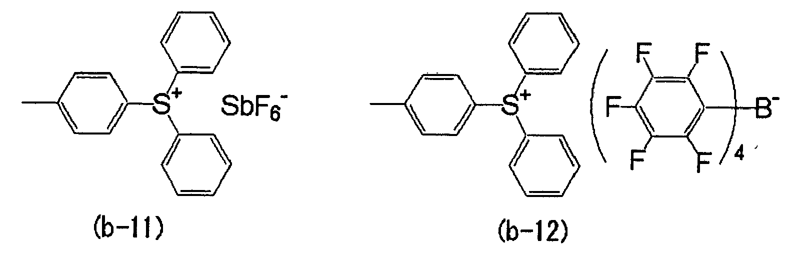

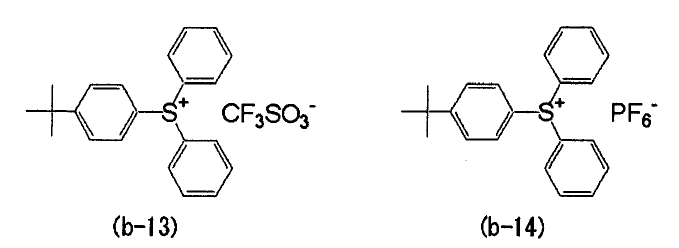

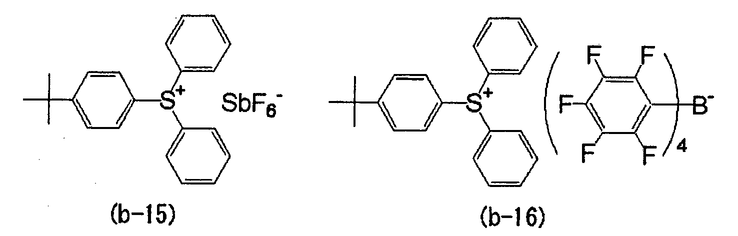

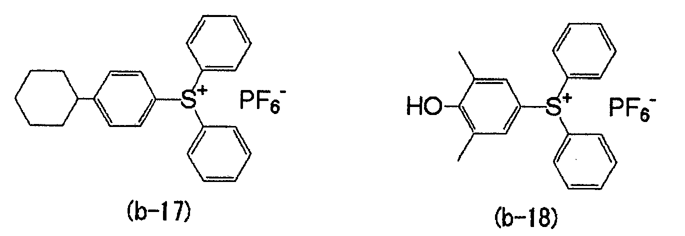

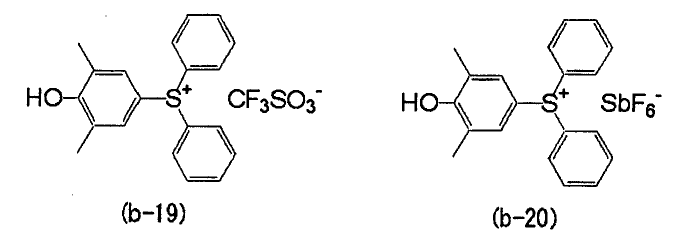

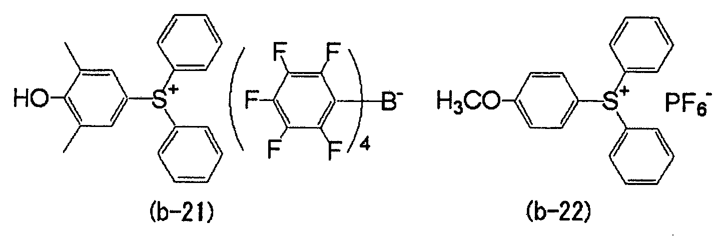

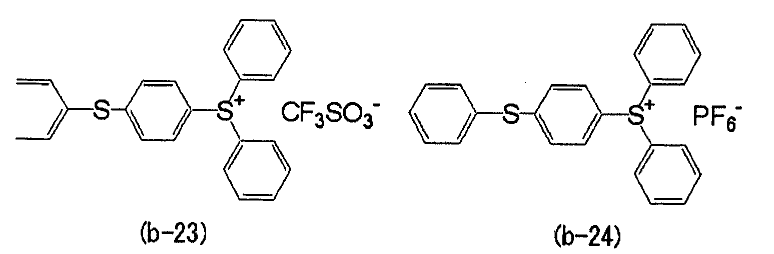

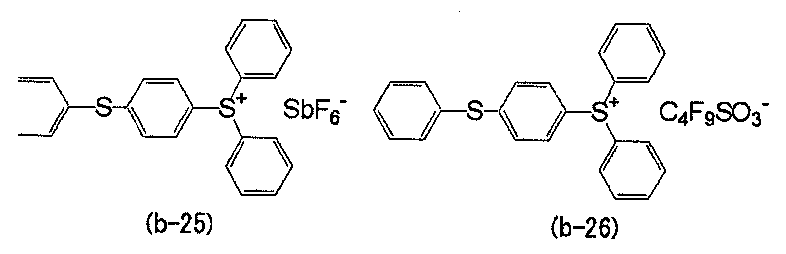

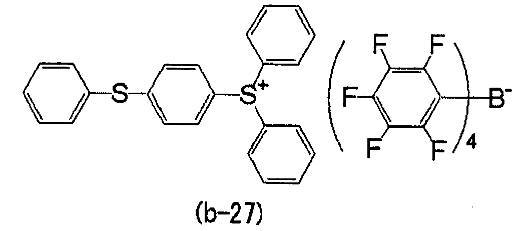

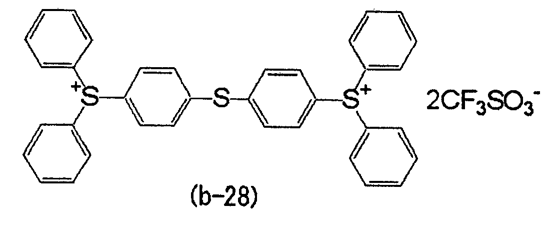

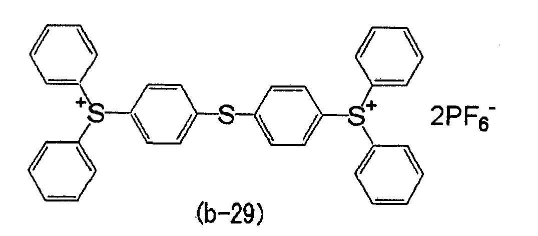

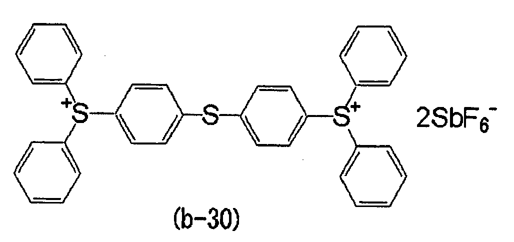

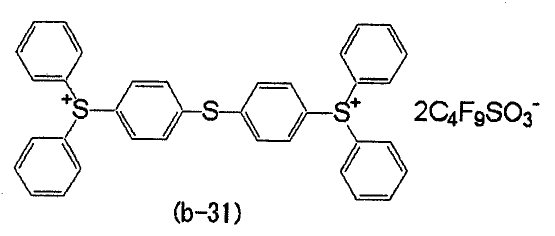

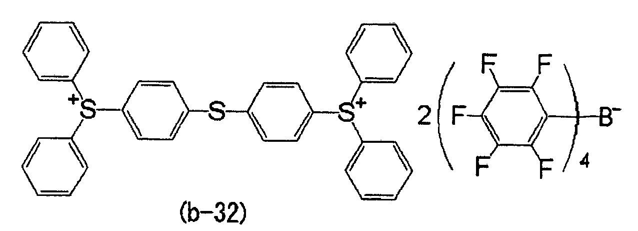

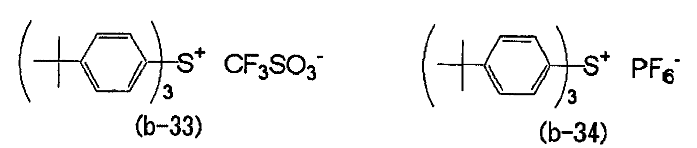

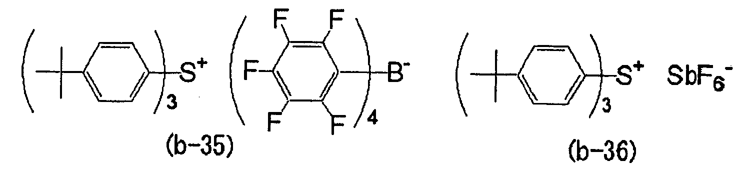

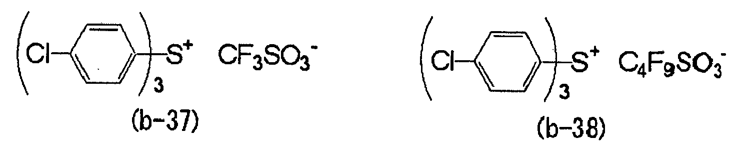

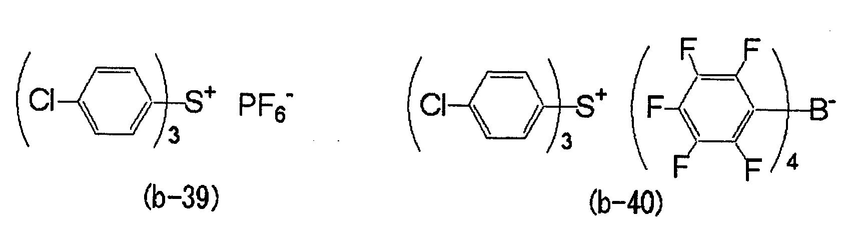

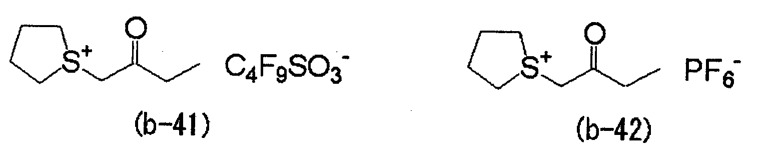

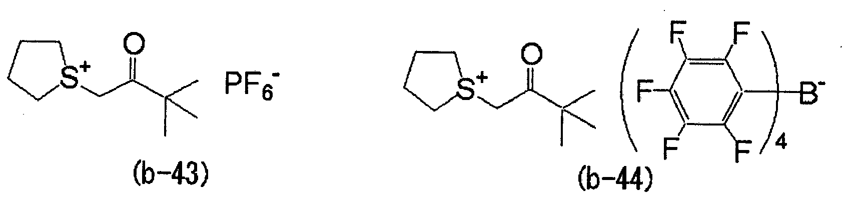

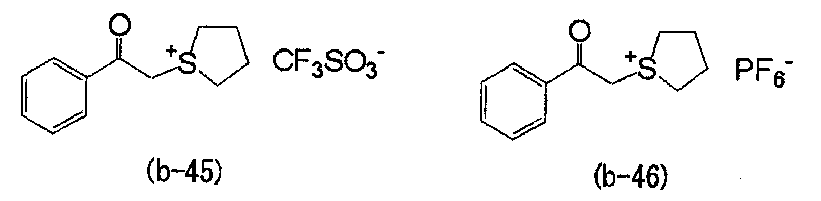

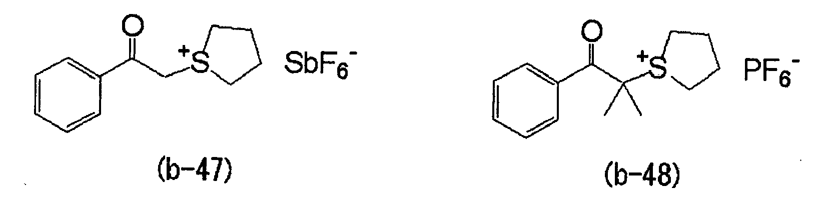

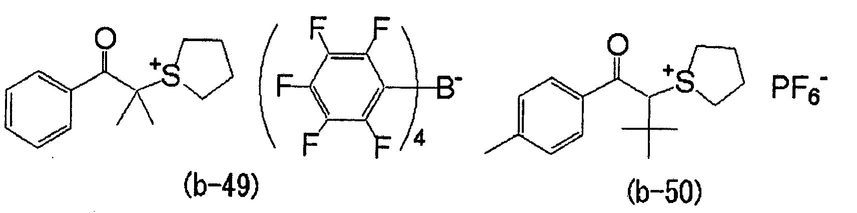

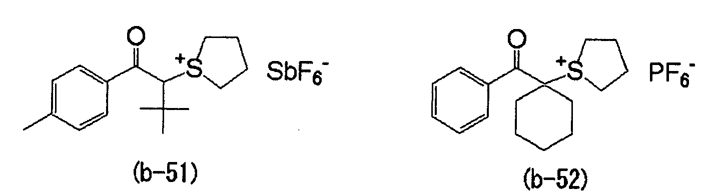

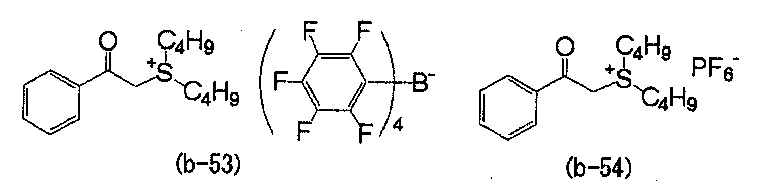

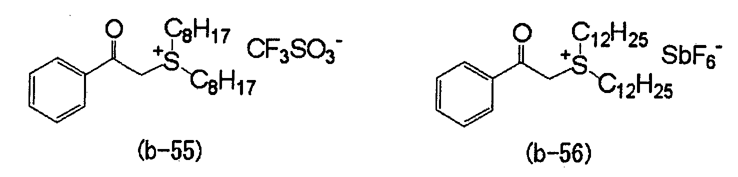

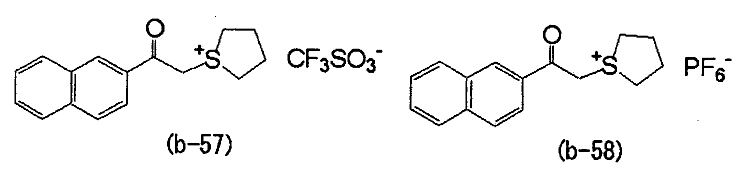

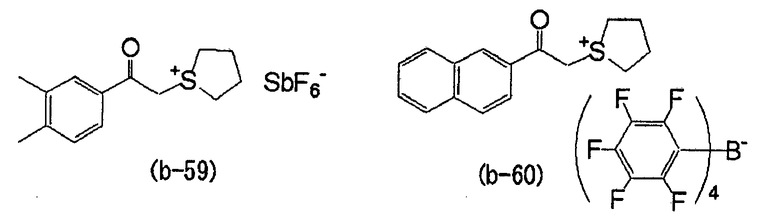

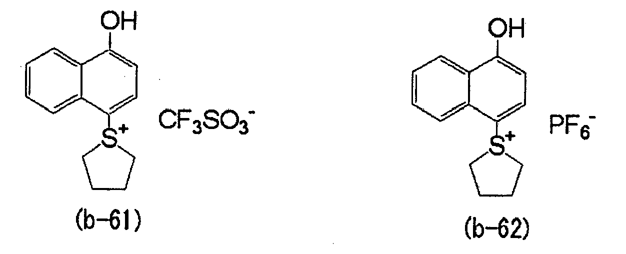

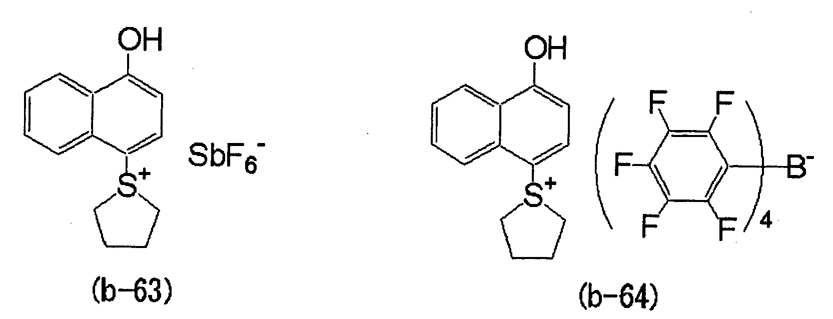

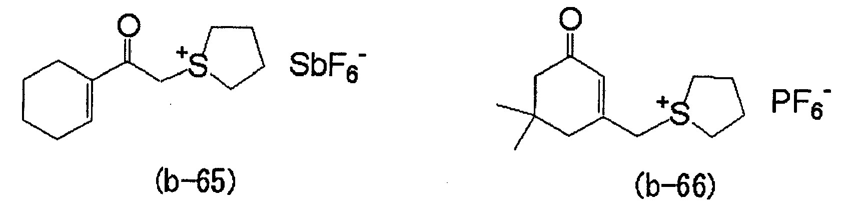

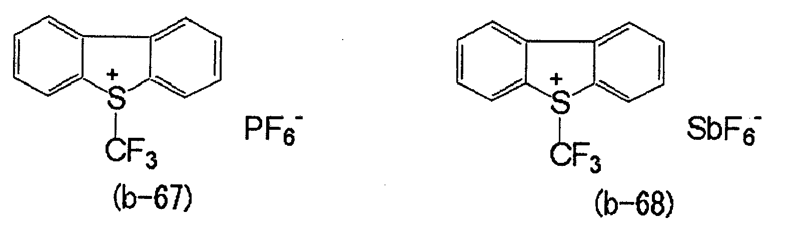

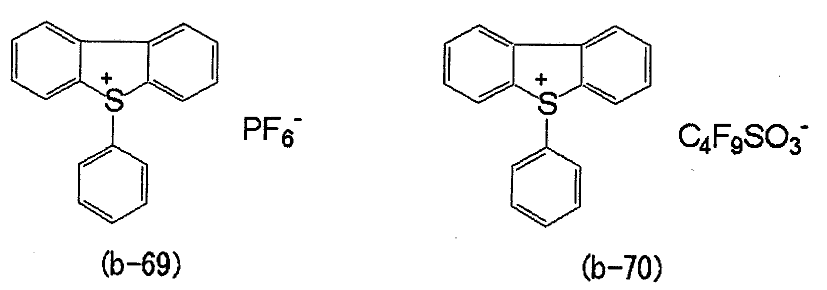

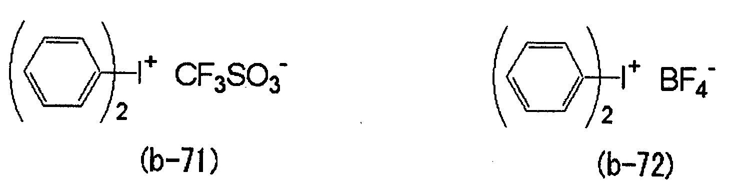

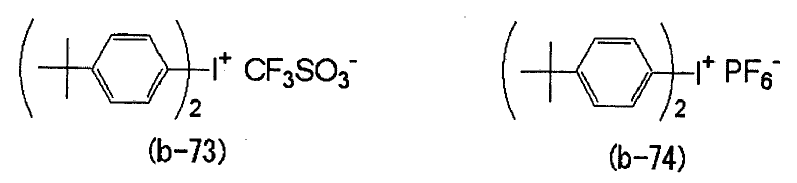

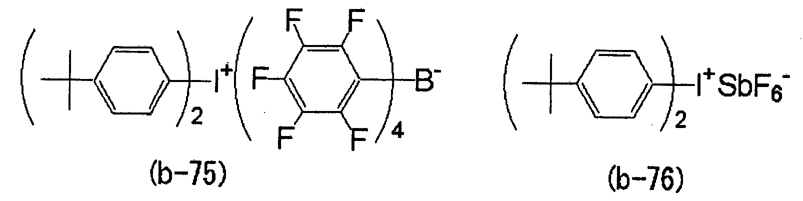

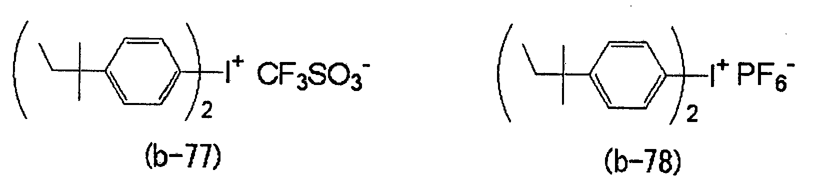

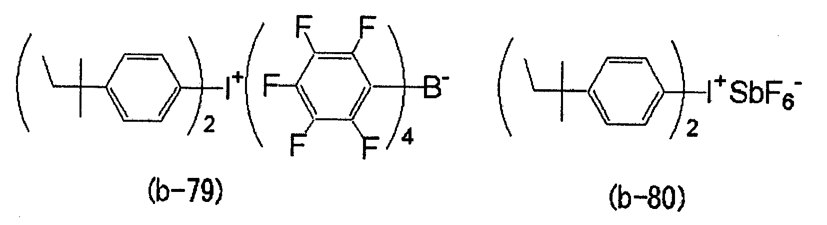

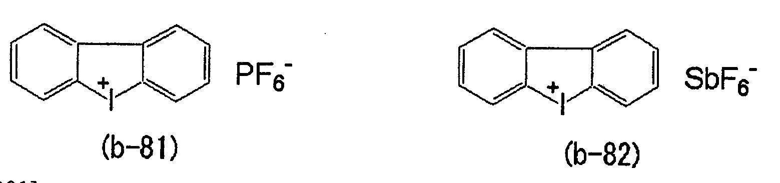

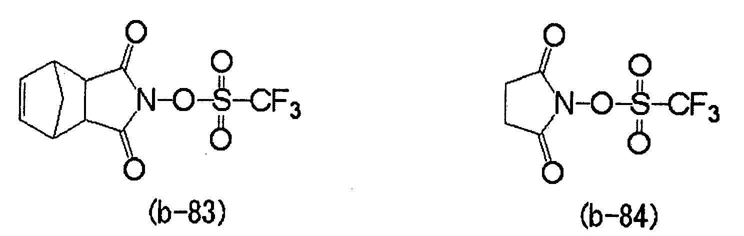

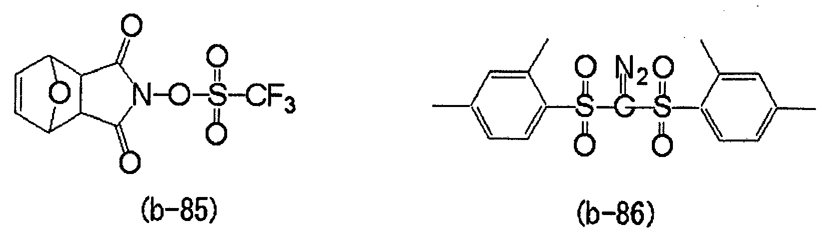

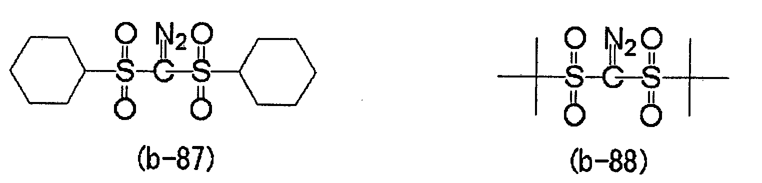

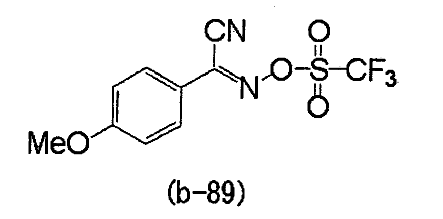

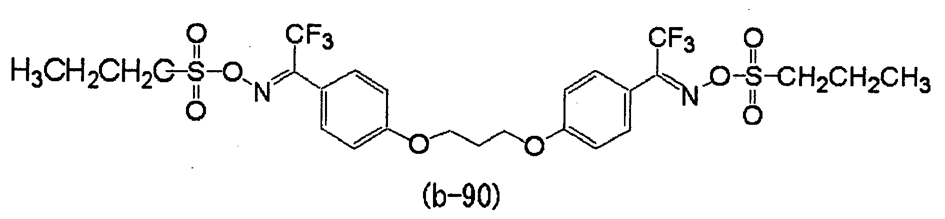

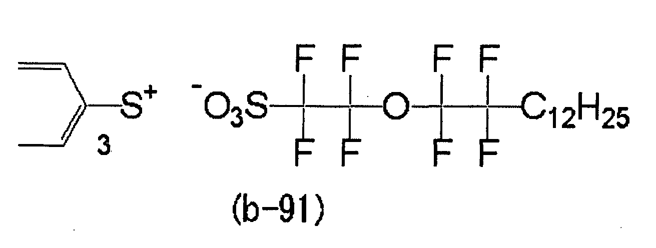

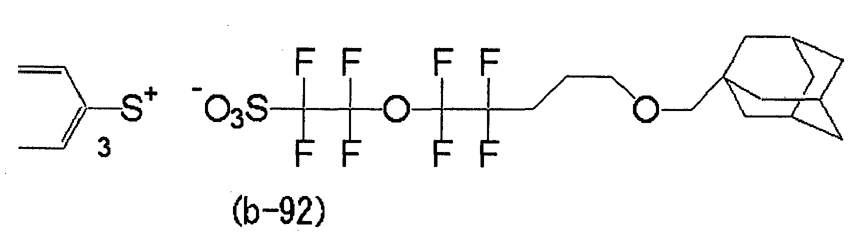

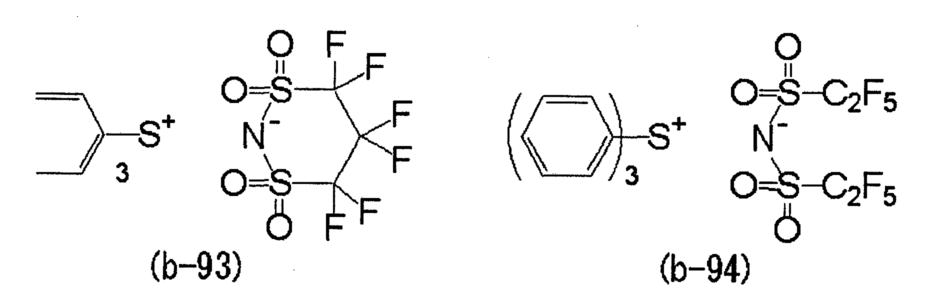

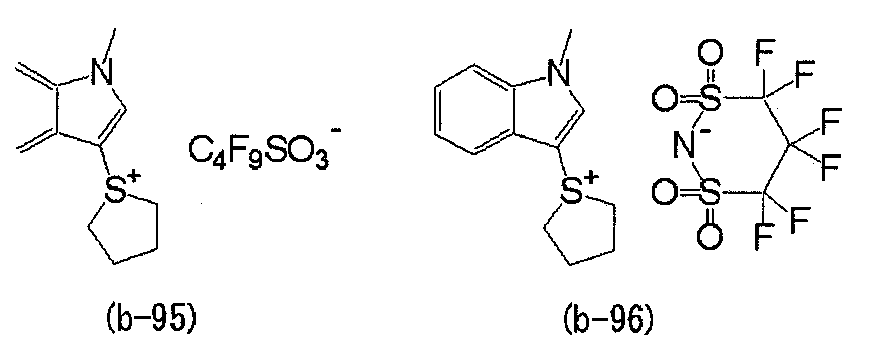

As the photo-acid generator, oxazole derivatives and s-triazine derivatives described in JP-A No. 2002-122994, paragraphs [0029] and [0030], and the like can be also preferably used. Furthermore, onium salt compounds and sulfonate compounds described in JP-A No. 2002-122994, paragraphs [0037] to [0063] can be also preferably used as the photo-acid generator in the present invention.
One type of the photo-acid generator, or a plurality of types thereof in combination may be used.

The content of the photopolymerization initiator (C) is suitably 1% by mass to 50 % by mass, preferably 2% by mass to 40 % by mass, and more preferably 3% by mass to 20 % by mass with respect to the total solid content of the ink composition.

### - Other components -

Other components may be used in combination with the above-mentioned components (A) to (C) for the ink composition of the invention so as to improve physical properties as long as they do not deteriorate the effect of the invention.
Hereinafter these optional components are explained.

### [Colorant]

By adding a colorant into the ink composition of the present invention, a visible image can be formed. The employable colorant is not specifically limited, and various publicly known colorants (pigments and dyes) may be suitably selected and used according to the usage. For example, if an image having an excellent weather resistance is to be formed, a pigment is preferred. As a dye, either one of a water soluble dye or an oil soluble dye may be used, however an oil soluble dye is preferred.

### (Pigment)

The pigment preferably used in the invention is described.
The pigment is not particularly limited, and any commercially available organic and inorganic pigment, a pigment dispersed in an insoluble resin or the like as a dispersion medium, or a pigment having a resin grafted on the surface thereof can be used. Resin particles dyed with a dye can also be used.
Examples of these pigments include the pigments described in Seijiro Ito "Pigment dictionary" (2000), W. Herbst, K. Hunger "Industrial Organic Pigments", JP-A No. 2002-12607, JP-A No. 2002-188025, JP-A No. 2003-26978, and JP-A No. 2003-342503.

Specific examples of the organic and inorganic pigments exhibiting, for example, yellow color employable in the present invention, include a monoazo pigment such as C.I. Pigment Yellow 1 (e.g., Fast Yellow G), and C.I. Pigment Yellow 74, a disazo pigment such as C.I. Pigment Yellow 12 (e.g., Disazo Yellow AAA) and C.I. Pigment Yellow 17, a non-benzidine azo pigment such as C.I. Pigment Yellow 180, an azo lake pigment such as C.I. Pigment Yellow 100 (e.g., Tartrazine Yellow Lake), a condensed azo pigment such as C.I. Pigment Yellow 95 (e.g., Condensed Azo Yellow GR), an acidic dye lake pigment such as C.I. Pigment Yellow 115 (e.g., Quinoline Yellow Lake), a basic dye lake pigment such as C.I. Pigment Yellow 18 (e.g., Thioflavin Lake), an anthraquinone pigment such as Flavanthrone Yellow (Y-24), an isoindolinone pigment such as Isoindolinone Yellow 3RLT (Y-110), a quinophthalone pigment such as Quinophthalone Yellow (Y-138), an isoindoline pigment such as Isoindoline Yellow (Y-139), a nitroso pigment such as C.I. Pigment Yellow 153 (e.g., Nickel Nitroso Yellow), and a metallic complex azomethine pigment such as C.I. Pigment Yellow 117 (e.g., Copper Azomethine Yellow).

Specific examples of the organic and inorganic pigments exhibiting, for example, yellow color employable in the present invention, include a monoazo pigment such as C.I. Pigment Yellow 1 (e.g., Fast Yellow G), and C.I. Pigment Yellow 74, a disazo pigment such as C.I. Pigment Yellow 12 (e.g., Disazo Yellow AAA) and C.I. Pigment Yellow 17, a non-benzidine azo pigment such as C.I. Pigment Yellow 180, an azo lake pigment such as C.I. Pigment Yellow 100 (e.g., Tartrazine Yellow Lake), a condensed azo pigment such as C.I. Pigment Yellow 95 (e.g., Condensed Azo Yellow GR), an acidic dye lake pigment such as C.I. Pigment Yellow 115 (e.g., Quinoline Yellow Lake), a basic dye lake pigment such as C.I. Pigment Yellow 18 (e.g., Thioflavin Lake), an anthraquinone pigment such as Flavanthrone Yellow (Y-24), an isoindolinone pigment such as Isoindolinone Yellow 3RLT (Y-110), a quinophthalone pigment such as Quinophthalone Yellow (Y-138), an isoindoline pigment such as Isoindoline Yellow (Y-139), a nitroso pigment such as C.I. Pigment Yellow 153 (e.g., Nickel Nitroso Yellow), and a metallic complex azomethine pigment such as C.I. Pigment Yellow 117 (e.g., Copper Azomethine Yellow).

Examples thereof exhibiting red or magenta color include a monoazo pigment such as C.I. Pigment Red 3 (e.g., Toluidine Red), a disazo pigment such as C.I. Pigment Red 38 (e.g., Pyrazolone Red B), an azo lake pigment such as C.I. Pigment Red 53:1 (e.g., Lake Red C) and C.I. Pigment Red 57:1 (e.g., Brilliant Carmine 6B), a condensed azo pigment such as C.I. Pigment Red 144 (e.g., Condensed Azo Red BR), an acidic dye lake pigment such as C.I. pigment red 174 (e.g., Phloxin B lake), a basic dye lake pigment such as C.I. Pigment Red 81 (e.g., Rhodamine 6G' Lake), an anthraquinone pigment such as C.I. Pigment Red 177 (e.g., Dianthraquinonyl Red), a thioindigo pigment such as C.I. Pigment Red 88 (e.g., Thioindigo Bordeaux), a perynone pigment such as C.I. Pigment Red 194 (e.g., Perynone Red), a perylene pigment such as C.I. Pigment Red 149 (e.g., Perylene Scarlett), a quinacridone pigment such as C.I. Pigment Violet 19 (unsubstituted quinacridone), C.I. Pigment Red 122 (e.g., Quinacridone Magenta), an isoindolinone pigment such as C.I. Pigment Red 180 (e.g., Isoindolinone Red 2BLT), and an alizarin lake pigment such as C.I. Pigment Red 83 (e.g., Madder Lake).

Examples thereof exhibiting blue or cyan color include a disazo pigment such as C.I. Pigment Blue 25 (e.g., Dianisidine Blue), a phthalocyanine pigment such as C.I. Pigment Blue 15 (e.g., Phthalocyanine Blue), an acidic dye lake pigment such as C.I. Pigment Blue 24 (e.g., Peacock Blue Lake), a basic dye lake pigment such as C.I. Pigment Blue 1 (e.g., Victoria Pure Blue BO Lake), an anthraquinone pigment such as C.I. Pigment Blue 60 (e.g., Indanthrone Blue), and an alkali blue pigment such as C.I. Pigment Blue 18 (e.g., Alkali Blue V-5:1).

Examples thereof exhibiting green color include a phthalocyanine pigment such as C.I. Pigment Green 7 (Phthalocyanine Green), and C.I. Pigment Green 36 (Phthalocyanine Green), and an azo metal complex pigment such as C.I. Pigment Green 8 (Nitroso Green).
Examples thereof exhibiting orange color include an isoindolin pigment such as C.I. Pigment Orange 66 (Isoindolin Orange), and an anthraquinone pigment such as C.I. Pigment Orange 51 (Dichloropyranthrone Orange).

Examples thereof exhibiting black color include carbon black, titanium black, and aniline black.
As specific examples of white pigment, basic lead carbonate (2PbCO₃Pb(OH)₂, so-called silver white), zinc oxide (ZnO, so-called zinc white), titanium oxide (TiO₂, so-called, titanium white), and strontium titanate (SrTiO₃, so-called titanium strontium white) are employable.

Here, titanium oxide has a lesser specific gravity and a greater refractive index, and is chemically and physically stable, compared to other white pigments. Therefore, it has a greater concealing and tinting power as a pigment, and furthermore has a superior durability against acid, alkali, and other environments. Therefore, the titanium oxide is preferably used as a white pigment. Of course, other white pigments (which may be other than the abovementioned white pigments) may be used as necessary.

For dispersing the pigment, respective dispersing devices such as a ball mill, a sand mill, an attritor, a roll mill, a jet mill, a homogenizer, a paint shaker, a kneader, an agitator, a Henschel mixer, a colloid mill, an ultrasonic homogenizer, a pearl mill, and a wet type jet mill may be used.
Dispersing agents can also be added when a pigment is to be dispersed. Examples of the dispersing agent include a hydroxyl group comprising carboxylate ester, a salt of long-chain polyaminoamide and high molecular weight acid ester, a salt of high molecular weight polycarboxylate, a high molecular weight unsaturated acid ester, a high molecular weight copolymer, a modified polyacrylate, an aliphatic polyvalent carboxylic acid, a naphthalenesulfonic acid-formalin condensate, a polyoxyethylenealkyl phosphate ester, and pigment derivatives. Moreover, a commercially available polymer dispersing agent such as a Solsperse series made by Zeneca Co. may be preferably used.
As a dispersing auxiliary, a synergist according to various types of pigments may be used. 1 to 50 parts by mass of the dispersing agent and the dispersing auxiliary are preferably added with respect to 100 parts by mass of the pigment.
In the ink composition, a solvent may be added as a dispersion medium for various components such as a pigment. Moreover, the polymerizable compound (B) serving as a low molecular weight component may be used as a dispersion medium, without any solvent. Since the ink composition of the present invention is a radiation curable ink, and the ink is cured after the application onto the recording medium, it is preferred not to use a solvent. The reason is that, if the solvent remains in a cured ink image, the solvent resistance is degraded, and problems with image deterioration would occur. From such a viewpoint, polymerizable compounds (B) are preferably used as the dispersion medium. Among these, a radical polymerizable compound having the lowest viscosity is preferably selected from the viewpoint of dispersing properties, and improving the handling properties of the ink composition.

The average particle diameter of the pigment is preferably set to 0.02 to 14 µm, more preferably 0.02 to 0.1 µm, and even more preferably within a range between 0.02 and 0.07 µm.
In order to set the average particle diameter of the pigment particle within the preferable range, a pigment, a dispersing agent, and a dispersing medium are selected, and dispersing and filtering conditions are set. Such control of the particle diameter prevents clogging at the head nozzle, and keeps the ink storage stability, the ink transparency, and the curing sensitivity.

### [Dye]

The dye used in the present invention is preferably oil soluble. Specifically, it means a dye having a solubility in water (mass of dye soluble in 100 g of water) at 25°C of not more than 1g, preferably not more than 0.5 g, and more preferably not more than 0.1 g. Therefore, a so-called oil soluble dye that is water insoluble, is preferably used.

In the dye used in the present invention, an oil soluble group is preferably introduced into the parent of the abovementioned dyes so as to dissolve the required amount thereof into the ink composition.
Examples of the oil soluble group include: a long-chain or branched alkyl group, a long-chain or branched alkoxy group, a long-chain or branched alkylthio group, a long-chain or branched alkylsulfonyl group, a long-chain or branched acyloxy group, a long-chain or branched alkoxycarbonyl group, a long-chain or branched acyl group, a long-chain or branched acylamino group, a long-chain or branched alkylsulfonylamino group, a long-chain or branched alkylaminosulfonyl group; and an aryl group, an aryloxy group, an aryloxycarbonyl group, an arylcarbonyloxy group, an arylaminocarbonyl group, an arylaminosulfonyl group, and an arylsulfonylamino group including the above long-chain or branched substituents.
Moreover, a dye may be obtained, with respect to a water soluble dye having a carboxylic acid or a sulfonic acid, by converting into an alkoxycarbonyl group, an aryloxy carbonyl group, an alkylaminosulfonyl group, and an arylaminosulfonyl group serving as an oil soluble group, using a long-chain or branched alcohol, amine, phenol, and aniline derivatives.

The oil soluble dye preferably has a melting temperature of not more than 200°C, more preferably, a melting temperature of not more than 150°C, and even more preferably a melting temperature of not more than 100°C. The use of an oil-soluble dye having a low melting temperature suppresses the precipitation of dye crystals in the ink composition, and therefore the storage stability of the ink composition is improved.
Moreover, in order to improve the resistance against discoloration, in particular against an oxidizer such as ozone, and to improve the curing property, the oxidation potential is desirably noble (high). Therefore, the oil soluble dye used in the present invention preferably has an oxidation potential of not less than 1.0V (vsSCE). The oxidation potential is preferably higher, more preferably not less than 1.1V (vsSCE), and even more preferably not less than 1.15V (vsSCE).

As a dye of yellow color, preferred are the compounds having a structure represented by the formula (Y-I) described in JP-A No. 2004-250483.
Particularly preferred dye includes the dyes represented by the formulae (Y-II) through (Y-IV) described in JP-A No. 2004-250483, paragraph [0034]. Specific examples thereof include the compounds described in JP-A No. 2004-250483, paragraphs [0060] to [0071]. The oil soluble dye represented by the formula (Y-I) described in the document may be used for an ink of any color such as a black ink and a red ink as well as the yellow one.

As a dye of magenta color, preferred are the compounds having a structure represented by the formulae (3) and (4) described in JP-ANo. 2002-114930. Specific examples thereof include the compounds described in JP-A No. 2002-114930, paragraphs [0054] to [0073].
Particularly preferred dye includes the azo dyes represented by the formulae (M-1) and (M-2) described in JP-A No. 2002-121414, paragraphs [0084] to [0122]. Specific examples thereof include the compounds described in JP-A No. 2002-121414, paragraphs [0123] to [0132]. The oil soluble dye represented by the formulae (3), (4), (M-1), and (M-2) described in the document may be used for an ink of any color such as a black ink and a red ink as well as the magenta one.

As a dye of cyan color, preferred are the dyes represented by the formulae (I) through (IV) described in JP-A No. 2001-181547, and the dyes represented by the formulae (IV-1) through (IV-4) described in JP-ANo. 2002-121414, paragraphs [0063] to [0078]. Specific examples thereof include the compounds described in JP-A No. 2001-181547, paragraphs [0052] to [0066], and the compounds described in JP-A No. 2002-121414, paragraphs [0079] to [0081].
Particularly preferred dye includes the phthalocyanine dyes represented by the formulae (C-I) and (C-II) described in JP-A No. 2002-121414, paragraphs [0130] to [0196], and furthermore the phthalocyanine dyes represented by the formula (C-II). Specific examples thereof include the compounds described in JP-A No. 2002-121414, paragraphs [0198] to [0201]. The oil soluble dye represented by the formulae (I) to (IV), (IV-1) through (IV-4), (C-I), and (C-II) may be used for an ink of any color such as a black ink and a green ink as well as the cyan one.

### (Oxidation potential)

The oxidation potential value (Eox) of the dye of the present invention can be easily measured by one skilled in the art. The method therefor is described, for example, in P. Delahay, New Instrumental Methods in Electrochemistry, Interscience Publishers (1954), A. J. Bard et al., Electrochemical Methods, John Wiley & Sons (1980), and Akira Fujishima et al., Denkikagaku Sokutei Ho (Electrochemical Measuring Method), Gihodo Shuppan Sha (1984).
Specifically, a test sample is dissolved to a concentration of 1 x 10⁻² to 1 x 10⁻⁶ mol/liter in a solvent such as dimethylformamide or acetonitrile comprising a supporting electrolyte such as sodium perchlorate or tetrapropylammonium perchlorate, and the oxidation potential is measured as a value with respect to SCE (saturated calomel electrode) by a cyclic voltammetry or a direct current polarography apparatus, using the intermediate potential value of a line segment made from: an intersection of an approximated line of an oxidation wave when swept to the oxidization side (nobler side) using a carbon (GC) as an active electrode and a rotating platinum electrode as a counter electrode, and a remaining current/potential line; and an intersection of a line and a saturated current line (or an intersection with a line in parallel to a vertical axis passing through the peak potential value). This value sometimes deviates in the order of several tens of millivolt due to the effect of, for example, the liquid junction potential or the liquid resistance of the sample solution, but the reproducibility of the potential can be guaranteed by adding a standard sample (for example, hydroquinone). The supporting electrolyte and the solvent to be used may be appropriately selected depending on the oxidation potential or the solubility of the sample. The employable supporting electrolyte and the solvent are described in Akira Fujishima, et al., Denki Kagaku Sokutei-ho, 1984, Gihodo Shuppan Co., Ltd., pages 101 to 118.

The colorant is added to the ink composition by preferably 1% by mass to 20% by mass, and more preferably 2% by mass to 10% by mass, based on the solid content.
It is preferable that the content of the colorant is in the above-mentioned range since sufficient color concentration is obtained and suitable curability is maintained.

### [Ultraviolet absorber]

In the present invention, an ultraviolet absorber may be used from the viewpoint of improving the weather resistance and preventing discoloration of the obtained image.
Examples of the ultraviolet absorber include benzotriazol compounds described in JP-ANos. 58-185677, 61-190537, 02-782, 05-197075 and 09-34057; benzophenone compounds described in JP-A Nos. 46-2784 and 05-194483, and US Pat. No. 3214463; cinnamic acid compounds described in JP-B Nos. 48-30492 and 56-21141, and JP-A No.10-88106; triazine compounds described in JP-ANos. 04-298503, 08-53427, 08-239368, and 10-182621, and JP-B No. 08-5012911; compounds described in Research Disclosure No. 24239; and compounds which absorb ultraviolet rays to generate fluorescence, such as stilbene and benzoxazol compounds, being so-called fluorescent brightening agents.
The dosage is suitably selected according to the object, however generally this is about 0.5 to 15 % by mass in terms of solid contents.

### [Sensitizer]

The ink composition of the present invention may be added with a sensitizer as required with an object of improving the acid generating efficiency of the photo-acid generator and elongating the wavelength of the photosensitized wavelength. The sensitizer may be anything as long as it sensitizes the photo-acid generator in an electron-transfer mechanism or an energy-transfer mechanism.

### [Anti-oxidant]

An anti-oxidant may be added in order to improve the stability of the ink composition. Examples of the anti-oxidant include ones described in European Patent Publication Nos. 223739, 309401, 309402, 310551, 310552, and 459416, German Patent Publication No. 3435443, JP-ANos. 54-48535, 62-262047, 63-113536, and 63-163351, JP-A No.02-262654, JP-A No.02-71262, JP-A No.03-121449, JP-A No.05-61166, JP-A No.05-119449, US Patent No. 4814262, and US Patent No. 4980275.
The dosage is suitably selected according to the object, however generally this is about 0.1 to 8 % by mass in terms of solid contents.

### [Discoloration inhibitor]

Various organic compounds and metal complexes can be used as a discoloration inhibitor in the ink composition of the present invention. Examples of the organic discoloration inhibitor include hydroquinones, alkoxyphenols, dialkoxyphenols, phenols, anilines, amines, indans, chromans, alkoxyanilines, and heterocycles. Examples of the metal complexes include a nickel complex and a zinc complex. Specific examples thereof include the compounds disclosed in the cited patents described in the I or J paragraph of the VII section of Research Disclosure No. 17643, and Research Disclosure No. 15162, the left column of page 650 of Research Disclosure No. 18716, page 527 of Research Disclosure No. 36544, and page 872 of Research Disclosure No. 307105, and Research Disclosure No. 15162, and compounds included in the formulae of the representative compounds and examples of the compounds described in JP-ANo.62-215272, page 127 to 137.
The dosage is suitably selected according to the object, however generally this is about 0.1 to 8 % by mass in terms of solid contents.

### [Electroconductive salts]

With an object of controlling the jetting property, electroconductive salts such as potassium thiocyanate, lithium nitrate, ammonium thiocyanate, and dimethylamine hydrochloride may be added into the ink composition of the present invention.

### [Solvent]

In order to improve the adhesiveness onto the recording medium, it is also effective to add a trace amount of organic solvent into the ink composition of the present invention.
Examples of the solvent include: ketone solvents such as acetone, methylethyl ketone, diethyl ketone; alcohol solvents such as methanol, ethanol, 2-propanol, 1-propanol, 1-butanol, and tert-butanol; chlorinated solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; and glycolether solvents such as ethylene glycol monomethylether and ethylene glycol dimethylether.
In this case, the effective addition is within a range not causing problems such as solvent resistance and volatile organic compounds (VOC) of the residual solvent. The amount thereof is preferably within a range of 0.1 to 5 % by mass, and more preferably 0.1 to 3 % by mass with respect to the total ink composition.

### [Polymer compound]

In order to adjust the film property, various polymer compounds may be added into the ink composition of the present invention. Examples of the polymer compounds include an acrylic polymer, a polyvinyl butyral resin, a polyurethane resin, a polyamide resin, a polyester resin, an epoxy resin, a phenol resin, a polycarbonate resin, a polyvinylformal resin, a shellac, a vinyl resin, an acrylic resin, a rubber resin, waxes, and other natural resins. Two types of these may be used in combination. Among these, preferred is a vinyl copolymer obtained by the copolymerization of acrylic monomers. Furthermore, copolymers including "carboxyl group comprising monomers", "alkylester methacrylate", or "alkylester acrylate" as a structural unit can be also preferably be used as a copolymer composition of the polymer binding material.

### [Surfactant]

A surfactant may be added to the ink composition of the present invention.
Examples of the surfactant include those described in JP-A Nos. 62-173463 and 62-183457. Examples thereof include: anionic surfactants such as dialkyl sulfosuccinate, alkyl naphthalenesulfonate, and fatty acid salt; nonionic surfactants such as polyoxyethylene alkyl ether, polyoxyethylene alkyl aryl ether, acetylenic glycol, and polyoxyethylene/polyoxypropyrene block copolymer; and cationic surfactants such as alkylamine salt, and quaternary ammonium salt. An organic fluoro compound may be used instead of the surfactant. The organic fluoro compound is preferably hydrophobic. Examples of the organic fluoro compound include fluorine-comprising surfactants, oily fluorine-comprising compounds (such as fluorine oil), and fluorine-comprising solid resins (such as ethylene tetrafluoride resin). The organic fluoro compounds are described in JP-B No.57-9053 (column 8 to 17), and JP-ANo.62-135826.

In addition, leveling addition agents, matte agents, waxes for adjusting the film property, and a tackifier which does not inhibit the polymerization, to improve the adhesiveness onto the recording medium such as polyolefine or PET may be added as necessary.
Specific example of the tackifier include cohesive polymers of high molecular weight described in JP-A No. 2001-49200, page 5 to 6 (for example, a copolymer having an ester of (meta)acrylate and alcohol including an alkyl group having 1 to 20 carbon atoms, an ester of (meta)acrylate and alicyclic alcohol having 3 to 14 carbon atoms, and an ester of (meta)acrylate and aromatic alcohol having 6 to 14 carbon atoms), and tackifying resins of low molecular weight having a polymerizable unsaturated bond.

Considering the jetting property, the viscosity of the ink composition of the present invention is preferably 7 to 30 mPa.s, and more preferably 7 to 20 mPa.s at the temperature at the time of jetting. It is preferred to suitably adjust and determine the composition ratio so that the viscosity is within the above range. The ink viscosity is 35 to 500 mPa.s, and preferably 35 to 200 mPa.s at room temperature (25 to 30°C). By setting a high viscosity at room temperature, even if a porous recording medium is used, it becomes possible to prevent ink permeation into the recording medium, to decrease the uncured monomer, and to reduce odor. Furthermore, dot bleeding at the time of ink droplet spotting can be suppressed, resulting in improvement in the image quality. If the ink viscosity at 25 to 30°C is less than 35 mPa.s, the effect of preventing bleeding is insufficient. Conversely if it is more than 500 mPa.s, problems occur in the ink liquid delivery.

The surface tension of the ink composition of the present invention is preferably 20 to 30 mN/m, and more preferably 23 to 28 mN/m. If recording is performed onto various recording media such as polyolefine, PET, a coated paper, and an uncoated paper, the surface tension is preferably 20 mN/m or more from the viewpoint of bleeding and permeation, and preferably 30 mN/m or less from the viewpoint of wettability.

The ink composition of the present invention adjusted in this manner is preferably used as an inkjet recording ink. If it is used as an inkjet recording ink, the ink composition is jetted onto a recording medium by an inkjet printer, and then the jetted ink composition is cured by irradiating radiation to perform recording.
Since the image area is cured by irradiation of radiation such as ultraviolet rays, and the image area has excellent strength, the printed material obtained by the ink can be used for various usages such as formation of an ink receiving layer (image area) of a planographic printing plate, in addition to image formation by the ink.

### <Inkjet recording method>

Next is a description of an inkjet recording method and an inkjet recording apparatus, suitably employable for the present invention.
The inkjet recording method comprises jetting the ink composition of the present invention onto a recording medium by an inkjet printer, and curing the jetted ink composition by irradiating radiation.

In the inkjet recording method, it is preferable that the ink composition is heated to 40 to 80°C and the ink composition viscosity is decreased to 7 to 30 mPa.s, then jetted. By using this method, a high jetting stability can be achieved. The radiation curable ink composition generally has a greater viscosity than that of an aqueous ink. Therefore the viscosity greatly fluctuates due to the temperature fluctuation at the time of ink jetting. The fluctuation of the ink viscosity has a great direct affect on the droplet size and the droplet jetting speed, causing deterioration in the image quality. Therefore, it is required to keep the ink composition temperature at the time of ink jetting as constant as possible. The control range of the ink composition temperature is suitably ±5°C, preferably ±2°C, and more preferably ±1°C with respect to the set temperature.

One characteristic of the inkjet recording apparatus is that it comprises a stabilizing device for the ink composition temperature. Regarding the portion to be kept at a constant temperature, all piping systems and members from the ink tank (or intermediate tank, if any) to the nozzle jetting surface become the subject.

The method of controlling the temperature is not specifically limited, however for example, it is preferable to provide a plurality of temperature sensors in the respective piping sites so as to control the heating according to the ink composition flow rate and the environmental temperature. Moreover, the head unit to be heated is preferably thermally blocked or insulated so that the main body of the apparatus is not affected by the outside temperature. In order to shorten the printer start-up time required for heating, or to reduce the heat energy loss, it is preferable to thermally insulate from the other parts, and decrease the heat capacity of the overall heating unit.

Next is a description of the irradiation condition of radiation. The basic irradiation method is disclosed in JP-A No.60-132767. Specifically, light sources are provided on the opposite sides of a head unit, and the head and the light sources are scanned by a shuttle method. Irradiation is performed after a fixed time after the ink is spotted. Furthermore, the curing is completed by another light source without driving. In WO99/54415, a method of using an optical fiber, and a method wherein a collimated light source is faced to a mirror surface provided on the side face of a head unit to irradiate UV light to a recording unit are disclosed as an irradiation method. In the present invention, these irradiation methods can be used.

Moreover, in the present invention, it is desirable to heat the ink composition to a fixed temperature, and to set the time from spotting to irradiation, to 0.01 to 0.5 seconds, preferably 0.01 to 0.3 seconds, and more preferably 0.01 to 0.15 seconds. Such a control of the time from spotting to irradiation within a very short time enables preventing bleeding of the spotted ink before being cured. Moreover, since a porous recording medium can also be exposed to light before the ink composition is permeated to the deep part where the light source cannot reach, the residual unreacted monomer can be reduced, resulting in odor reduction. By using the abovementioned inkjet recording method and the ink composition of the present invention together, a great synergistic effect is produced. In particular, if an ink composition having an ink viscosity of 35 to 500 MP.s at 25C° is used, a great effect can be obtained. By employing such a recording method, with respect to various recording media having various surface wettability, the dot diameter of the spotted ink can be kept constant and the image quality is improved. In order to obtain a color image, it is preferable to superpose inks in the order from less bright color to brighter color. If inks of less bright color are superposed, it is hard for radiation to reach to the ink at the bottom, readily causing inhibition of curable sensitivity, increase in residual monomer, generation of odor, and deterioration of adhesiveness. Moreover, in the irradiation, all colors can be jetted and exposed to light all in at once, however each color is preferably exposed to light one by one from the viewpoint of accelerating the curing.

The inkjet recording apparatus used in the present invention is not specifically limited, and a commercially available inkjet recording apparatus can be used. That is, in the present invention, recording can be performed on a recording medium using a commercially available inkjet recording apparatus.

### (Recording medium)

The recording medium to which the ink composition of the present invention can be applied is not specifically limited, and papers such as a normal uncoated paper and a coated paper, various non-absorptive resin materials used for so-called soft packaging, or a resin film thereof formed into a film shape may be used. Examples of various plastic films include a PET film, an OPS film, an OPP film, an ONy film, a PVC film, a PE film, and a TAC film. Other plastics that can be used as a material of the recording medium include a polycarbonate, an acrylic resin, ABS, polyacetal, PVA, and rubbers. Moreover, metals or glasses may be used as a recording medium.
Since the ink composition of the present invention has less heat shrinkage at the time of curing and superior adhesiveness onto a substrate (recording medium), there is an advantage of being capable of forming a very fine image even on a film that is easily curled or deformed by ink shrinkage on curing or heating during the curing reaction, such as a PET film, an OPS film, an OPP film, an ONy film, and a PVC film that can be shrunk by heat.

### < Production method of a printed formed article >

The ink composition of the invention provides low heat shrinkage during curing and is excellent in adhesiveness to a substrate (recording medium). Therefore, a printed product obtained by using a formable resin material as a recording medium and applying such ink composition on the surface of the recording medium has excellent processing property. Therefore, the printed product in which printing has been provided on the resin surface using the ink composition of the invention may be suitably used for the production of printed formed products by various forming processes such as vacuum forming, including forming of resin mold bottles, three-dimensional advertisements, dummy cans and the like.
Hereinafter the production method of the printed formed product using the ink composition of the invention is explained.
The recording medium used for the printed formed product may be any resin material as long as it is a resin material that is any of those exemplified as resin films and plastics for the above-mentioned recording medium, and may be either a thermoplastic resin or a thermosetting resin.
The method for producing the printed formed product of the invention includes the following steps.
(1) jetting the ink composition of the invention by an inkjet process on a recording medium made of a formable resin material to form an image,
(2) irradiating the obtained image with a radioactive ray to cure the above-mentioned ink composition to obtain a printed product having a cured image on the recording medium, and
(3) forming the above-mentioned printed product to give a printed formed product. Namely, in the method for producing the printed formed product of the invention, (1) an image is first formed by jetting the ink composition of the invention by an inkjet process on a recording medium made of such resin material to form an image, (2) the obtained image is then irradiated with a radioactive ray to cure the above-mentioned ink composition to give a printed product having a cured image on the above-mentioned recording medium, and (3) the obtained printed product is subjected to forming to give a printed formed product.

The method for forming the printed product is not specifically limited, and a known resin forming process may be applied according to the object. A representative example of the method is explained below.

### (Embossing)

As the method for forming in the method for the production of the printed formed product of the invention, embossing may be performed. The embossing refers to a process comprising providing a concavity having any shape of a design, letter or the like with a printed product or the like so as to give a three-dimensional appearance, and may be performed using, for example, a roller, a press machine or the like.
One example of embossing may include hot-cold pressing, which may be performed with referring to the method described in JP-ANo. 10-199360 or the like.
An example of an embossing apparatus using hot-cold pressing is shown below.
The embossing apparatus includes a lower portion molding board (lower molding board) and an upper portion molding board (upper molding board) that are provided so as to be capable of approaching and disengaging each other. A plate-type heater is fixed on the lower portion molding board, and a plate-type heater is also fixed on the lower surface of the upper portion molding board. Therefore, hot pressing may be performed while a recording medium is heated. In this hot pressing machine, a mold having a convex portion that follows a predetermined emboss shape is attached to the plate-type heater on the lower molding board, and a mold having a concavity portion having a shape that matches to the above-mentioned convex portion is attached so that it contacts with the heater fixed on the lower surface of the upper molding board. The recording medium made of a resin on which an image has been formed by the ink composition is provided, a cushion sheet is provided between the recording medium as a substrate and the concave portion mold, and the substrate and cushion sheet are pressed between the upper molding board and lower molding board by downing the upper molding board, or the like. The pressure in this hot press step is, for example 30 ton, and the heat temperature by the plate heaters is, for example 170°C. The upper molding board is then pressed toward the lower molding board, the substrate and cushion sheet are pressed between the molds, and the hot pressing is hold for 3 minutes. The substrate is heated by the heaters via the molds, whereby a plurality of convex portions are formed by heat deformation. The substrate and cushion sheet that are put between the molds are then placed between internal water-cooling type molding boards comprising no heater, and cold pressing is performed by pressing the substrate and cushion sheet using the internal water-cooling type molding boards under the conditions of, for example, a pressure of 30 ton and a retention time of about 3 minutes. Accordingly, the convex shape of the recording medium formed by heat deformation by hot pressing is maintained, whereby a printed formed product in which printing has been formed on the surface, which has been subjected to embossing, may be obtained.
The pressure and heating temperature may be suitably adjusted according to the conditions such as the materials in the printed product used (recording medium and ink composition), shape to be processed, and the like.

### (Vacuum forming, pressure forming, vacuum pressure forming)

Other example of the method for forming in the method for the production of the printed formed product in the invention may include vacuum forming method. Vacuum forming is a method in which a recording medium made of a resin on which an image has been formed is preheated to a temperature at which heat deformation is available, and pressurized and cooled on a mold while the recording medium is stretched toward the mold by aspiration under reduced pressure to perform forming. Pressure forming is a method in which a recording medium made of resin on which an image has been formed is preheated to a temperature at which heat deformation is available, and pressurized from the opposite side of the mold to pressurize and cool the recording medium on the mold to perform forming. Vacuum pressure forming is a method in which the above-mentioned reduction of pressure and pressurization are simultaneously performed to perform forming.
Specifically, the item of "Heat Forming" in Encyclopedia of Polymer Science and Engineering (Maruzen Co., Ltd.), pages 766 to 768 and the documents cited in the item may be referred.
As mentioned above, a resin formed product on which a printing has been provided on the surface may be readily obtained by applying a known resin forming method. Since the ink composition of the invention is excellent in flexibility of a formed image and adhesiveness to recording media, it may be preferably applied to the above-mentioned production methods without deteriorating the appearance of the printed product where a formed product is prepared.

Hereinafter the exemplary embodiments of the invention are listed.
<1> An ink composition comprising:
   a polymerizable polymer (A) comprising a main chain structure including urethane bonds or urea bonds, and, at the side chains of the main chain structure, polymerizable groups and at least one selected from a fluoroalkyl group (a1), a siloxane structure (a2) or a long chain alkyl structure (a3),
   a polymerizable compound (B) having a different structure from that of the polymerizable polymer (A), and
   a photopolymerization initiator (C).
<2> The ink composition of <1>, wherein the total content of the polymerizable groups that are radical polymerizable groups and/or cation polymerizable groups in the molecule in the polymerizable polymer (A) is 0.3 mmol/g or more.
<3> The ink composition of <1> or <2>, wherein the polymerizable compound (B) having a different structure from that of the polymerizable polymer (A) is a radical polymerizable compound.
<4> The ink composition of <1> or <2>, wherein the polymerizable compound (B) having a different structure from that of the polymerizable polymer (A) is a cation polymerizable compound.
<5> The ink composition of any one of <1> to <4>, wherein the polymerizable compound (B) comprises a monofunctional monomer in an amount of 60% by mass to 100% by mass.
<6> A method for inkjet recording, the method comprising:
   jetting the ink composition of any one of <1> to <5> on a recording medium using an inkjet recording apparatus, and
   irradiating the jetted ink composition with a radioactive ray to cure the ink composition.
<7> A method for producing a printed formed article, the method comprising:
   forming an image by jetting the ink composition of any one of <1> to <5> onto a recording medium comprising a formable resin material using an inkjet process,
   irradiating the obtained image with a radioactive ray to cure the ink composition to provide a printed product comprising a cured image on the recording medium, and
   forming the printed product to provide a printed formed article.

### EXAMPLES

Hereinafter the present invention is explained more specifically with referring to Examples, but the invention is not limited to these exemplary embodiments in the Examples.
In the following Examples, the "part" refers to "parts by mass" unless specifically mentioned.

### <Preparation of pigment dispersion>

### (1. Preparation of pigment dispersion 1)

First, pigment dispersion 1 was prepared according to the following composition.
In the following composition, the pigment and pigment dispersing agent were first put into the acrylate monomer, and the mixture was mixed until it became even using a high-speed mixer to prepare a mill base. The obtained mill base was dispersed using a horizontal sand mill for about 1 hour to prepare pigment dispersion 1.

### (Composition)

- Cyan pigment (trade name: IRGALITE BLUE GLVO, manufactured by Ciba Specialty Chemicals (CSC), amount of surface acid: 18.0, amount of surface base: 34.0) 27 parts
- Pigment dispersing agent (trade name: SOLSPERSE 32000, manufactured by Lubrizol Corporation) 9 parts
- Phenoxyethyl acrylate 61 parts

### (2. Preparation of pigment dispersion 2)

Pigment dispersion 2 was prepared according to the following composition. As the production method of the dispersion, a similar method to that for the above-mentioned pigment disperse 1 was applied.

### (Composition)

- Benzimidazolone pigment (trade name: NOVOPERM YELLOW P-HG, manufactured by Clariant) 35 parts
- Pigment dispersing agent (trade name: SOLSPERSE 32000, manufactured by Lubrizol Corporation) 7 parts
- Phenoxyethyl acrylate 58 parts

### (3. Preparation of pigment dispersion 3)

Pigment dispersion 3 was prepared according to the following composition. As the production method of the dispersion, a similar method to that for the above-mentioned pigment disperse 1 was applied.

### (Composition)

- Quinacridone pigment (trade name: CINQUASIA MAGENTA BRT-343-D, manufactured by Ciba) 20 parts
- Pigment dispersing agent (trade name: SOLSPERSE 32000, manufactured by Lubrizol Corporation) 6 parts
- Phenoxyethyl acrylate 74 parts

### (4. Preparation of pigment dispersion 4)

Pigment dispersion 4 was prepared according to the following composition. As the production method of the dispersion, a similar method to that for the above-mentioned pigment disperse 1 was applied.

### (Composition)

- Carbon black pigment (trade name: SPECIAL BLACK 350, manufactured by Degussa) 30 parts
- Pigment dispersing agent (trade name: SOLSPERSE 32000, manufactured by Lubrizol Corporation) 6 parts
- Phenoxyethyl acrylate 64 parts

### (5. Preparation of pigment dispersion 5)

Pigment dispersion 5 was prepared according to the following composition. As the production method of the dispersion, a similar method to that for the above-mentioned pigment disperse 1 was applied.

### (Composition)

- White pigment (trade name: TIPAQUE PF740, manufactured by Ishihara Sangyo Kaisha Ltd., silica treatment 1.0%, alumina treatment 2.0%) 40 parts
- Pigment dispersing agent (trade name: AJISPER PB821, manufactured by Ajinomoto Fine-Techno Co., Inc.) 2 parts
- Phenoxyethyl acrylate 58 parts

### [Example 1]

### (Synthesis Example 1: synthesis of specific polymerizable polymer, polyurethane resin A-1)

A solution of X-22-173DX (Mw=3300) (3.3 g, 1 mol), BLENMER GLM (14.85 g, 93 mmol) and propylene glycol (Mw=3000) (27.04 g, 9 mol) in 2-butanone (160 ml) was put into a 500ml of three-necked round bottom flask equipped with a condenser and stirrer. To this solution, 1,6-hexamethylene diisocyanate (3.46 g, 21 mmol), 4,4-diphenylmethane diisocyanate (20.62 g, 82mmol) and dibutyltin dilaurylate (0.1 g) were added, and the mixture was heated under stirring at 60°C for 6 hours. The mixture was then heated to 70°C, 2-butanone (100 ml) was added, and the mixture was further heated for 2 hours.
Methyl alcohol (50 ml) was added, and the mixture was stirred for 30 minutes. The reaction solution was put into hexane (3 L) with stirring to precipitate a white polymer. This polymer was separated by filtration, washed with water and dried under vacuum to give a white polymer (47 g). The synthesized specific polyurethane resin has a structure represented by the specific polymer (A-1) in the following Table.
The molecular weight was measured by gel permeation chromatography (GPC) and found to be 38000 by weight average molecular weight (polystyrene standard).
The specific polymerizable polymers (A-2) to (A-12) were also synthesized in a similar manner except that the starting materials, isocyanate component and diol component, were replaced with the described monomers.

### (Preparation of ink composition)

A mixture of the following components was mixed for 2 hours under stirring. The presence or absence of the dissolution residue was confirmed, filtration was performed using a membrane filter, and coarse particles were removed to give the ink composition of Example 1. The viscosity of this ink composition at the ink jetting temperature (45°C) was in the range of from 15 mPa·s to 25 mPa·s.
- The above-mentioned pigment dispersion 1 10 parts
- N-vinylcaprolactam 34 parts
- 2-phenoxyethyl acrylate 18 parts
- Isobornyl acrylate 18 parts
- Octyldecyl acrylate 2 parts
- Acrylate monomer (trade name: ACTILANE 421, manufactured by Akcros Chemicals) 3 parts
- Specific polymerizable polymer A-1 (the compound obtained in the above-mentioned Synthesis Example 1) 2 parts
- Polymerization initiator (trade name: LUCIRIN TPO, manufactured by Ciba Specialty Chemicals) 8.0 parts
- Benzophenone (polymerization initiator) 3.0 parts
- Polymerization initiator (trade name: IRGACURE 184, manufactured by Ciba Specialty Chemicals) 2.0 parts

### [Examples 2 to 6]

### (Preparation of ink compositions of Examples 2 to 6)

The ink compositions of Examples 2 to 6 were prepared in a similar manner to Example 1 except that the specific polymerizable polymer (A), other polymerizable compound (B) and pigment dispersion of the components in the preparation of the ink composition of Example 1 were changed as shown in the following Table 1.

### [Comparative Example 1]

### (Preparation of ink composition of Comparative Example 1)

The ink composition of Comparative Example 1 was prepared in a similar manner to Example 1 except that the specific polymerizable polymer A-1 (2 parts) in the preparation of the ink composition of Example 1 was not used.

**[Table 1]**

| | Composition | Example 1 | Example 2 | Example 3 | Example 4 | Example 5 | Example 6 | Comparative Example 1 |
|---|---|---|---|---|---|---|---|---|
| Pigment dispersion | Pigment dispersion 1 | 10 | - | - | - | - | 10 | 10 |
| | Pigment dispersion 2 | - | 20 | - | - | - | - | - |
| | Pigment dispersion 3 | - | - | 15 | | - | - | - |
| | Pigment dispersion 4 | - | - | - | 7 | - | - | - |
| | Pigment dispersion 5 | - | - | - | - | 25 | - | - |
| Other polymerizable compound (monofunctional monomer) (B) | N-vinylcaprolactam | 34 | 29 | 30 | 30 | 29 | 30 | 30 |
| | 2-Phenoxyethyl acrylate | 18 | 15 | 15 | 15 | 15 | 15 | 15 |
| | Isobornyl acrylate | 18 | 16 | 16 | 21 | 9 | 15 | 15 |
| | Octyldecyl acrylate | 2 | 2 | 6 | 11 | 7 | 2 | 3 |
| | N-acryloyloxyethyl hexahydrophthalimide | - | - | - | - | - | 13 | 13 |
| Multifunctional monomer (B) | Actilane 421 | 3 | 3 | 3 | - | - | - | - |
| Specific polymerizable polymer (A) | Exemplified compound (A-1) | 2 | - | - | - | - | - | - |
| | Exemplified compound (A-2) | - | 2 | - | - | - | - | - |
| | Exemplified compound (A-3) | - | - | 2 | - | - | - | - |
| | Exemplified compound (A-4) | - | - | - | 2 | - | - | - |
| | Exemplified compound (A-5) | - | - | - | - | 2 | - | - |
| | Exemplified compound (A-6) | - | - | - | - | | 2 | - |

### < Evaluation of ink compositions >

The obtained ink compositions of Examples 1 to 6 and Comparative Example 1 were each printed on a polycarbonate board so that the film thickness became 10 µm.
An ultraviolet ray was then collected at an exposure surface illuminance of 100 mw/cm² and irradiated to the film formed by the ink composition after the exposure time was made variable and the exposure energy was changed.

### (Measurement of transfer sensitivity)

Sensitivity was defined as an amount of exposure energy (mJ/cm²) at which adhering feeling goes off on the image surface on which an ultraviolet ray had been irradiated. A lower value represents higher sensitivity.
The allowable range of the transfer sensitivity is 750 mJ/cm² or less, and more preferably 350 mJ/cm² or less.

### (Evaluation of blocking sensitivity)

Five-hundred PET sheets (size: having similar longitudinal and width lengths to those of the soft vinyl chloride sheet on which the image had been formed, weight: 2 g/sheet) were stacked on the formed image to which an ultraviolet ray had been irradiated, and left for a day. Transfer on the PET was visually observed according to the following criteria.
A: transfer was not observed
C: transfer was observed
The allowable range of the blocking sensitivity is 12,000 mJ/cm² or less, and more preferably 6,000 mJ/cm² or less.

### (Evaluation of adhesiveness)

The cured film of the ink composition was formed by printing a solid image on a vinyl chloride sheet using the ink composition. The resultant samples were evaluated by a cross-hatch test in conformity with ISO 2409 (ASTM D3359).
A grid of 25 gauges at 2.0 mm intervals was cross-cut into the cured film by cutting 6 cuts lengthwise and 6 cuts breadthwise. An adhesive tape (trade name: Scotch Tape (3M600), manufactured by Sumitomo 3M Limited) was attached with pressure to the cross-cut region, and then the adhesive tape was rapidly removed. Adhesiveness was evaluated by checking for the existence or nonexistence of peel-off of the cured film. Evaluation results are based on ISO Classes 0 to 5 and are described using the following criteria.
ISO Class 0: There was no peel off.
ISO Class 1: 5% of the cross-cut region was peeled off.
ISO Class 2: 20% of the cross-cut region was peeled off.
ISO Class 3: 50% of the cross-cut region was peeled off.
ISO Class 4: 80% of the cross-cut region was peeled off.
ISO Class 5: 100% of the cross-cut region was peeled off.

### - Evaluation criteria -

A: ISO Class 0
B: ISO Class 1
C: ISO Classes 2 to 5

### (Evaluation of abrasion resistance)

The soft vinyl chloride sheet was scrubbed with an eraser (trade name: K-50 PLASTIC ERASER KEEP, manufactured by Hoshiya), and transfer to the eraser was evaluated. The evaluation criteria are as follows.

### - Evaluation criteria -

A: transfer was not observed
C: transfer was observed

### (Evaluation of elongation)

A cured film was prepared by printing in a similar manner except that the integrated exposure amount was 12,000 mJ/cm² and the illuminance was 2140 mW/cm² and that a polyethylene film (trade name: FASSON PE, manufactured by Fasson, film thickness: 100 µm) was used as a substrate. The cured film was cut into a sheet having an axis length of 5 cm x a width of 2.5 cm, and stretched using a tensile test machine (manufactured by Shimadzu Corporation) at a velocity of 30 cm/min to measure the elongation at which the cured film was broken. The state in which the film was elongated from the original length to a double length was defined as an elongation of 100%.
The allowable range of the elongation is 200% or more, and more preferably 300% or more.

### (Evaluation of jetting stability)

In order to evaluate the jetting stability of the ink at the head nozzle, the number of nozzle loss during continuous jetting for 60 minutes was evaluated using a commercial inkjet recording apparatus having a piezo-type inkjet nozzle under the following conditions.
In the experiment, the number of nozzle loss (number of clogging of the nozzle) where the ink composition is jetted on a PET substrate and exposed (exposure amount: 1,000 mW/cm²) was counted. The evaluation criteria are as follows.
A: nozzle loss was 0 or more and lower than 5
B: nozzle loss was 5 or more and lower than 10
C: nozzle loss was 10 or more

### - Conditions -

Number of channels: 318/head
Drive frequency: 4.8 kHz/dot
Ink drops: 7 drops, 42 pl
Temperature: 45°C
The above-mentioned evaluation is shown in the following Table 2.

**[Table 2]**

| | Transfer sensitivity | Blocking sensitivity | Adhesiveness | Abrasion resistance | Elongation | Jetting stability |
|---|---|---|---|---|---|---|
| Example 1 | 350 | 6000 | A | A | 260 | A |
| Example 2 | 350 | 6000 | A | A | 260 | A |
| Example 3 | 350 | 6000 | A | A | 260 | A |
| Example 4 | 350 | 6000 | A | A | 280 | A |
| Example 5 | 350 | 6000 | A | A | 280 | A |
| Example 6 | 350 | 6000 | A | A | 280 | A |
| Comparative example 1 | 1500 | 24000 | A | C | 280 | B |

As is apparent from Table 2, the ink composition of the invention is excellent in jetting stability and transfer sensitivity, and the image formed by using the ink composition of the invention is excellent in antiblocking property and abrasion resistance. Accordingly, formation of an image having excellent abrasion resistance and jetting stability of the ink may be balanced by using the ink composition of the invention.
On the other hand, the ink composition of Comparative Example has insufficient transfer sensitivity, is poor in blocking sensitivity of the image, and has insufficient abrasion resistance and jetting stability.

### (Evaluation of printed formed article)

The printed products obtained in Examples 1 to 6 and Comparative Example 1, each has an image of the ink composition on the surface of the PET substrate, were formed by the method shown below. The obtained printed formed product was observed, and forming suitability was evaluated.

### (Embossing test)

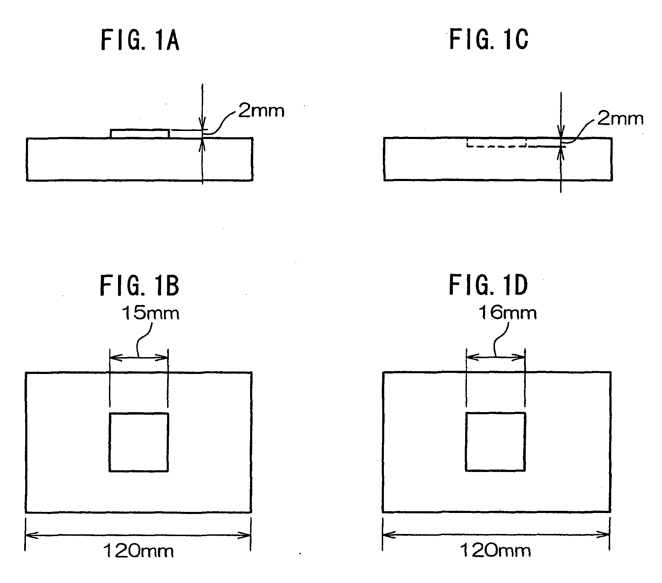

Under the condition of 25°C, the printed product was put between the stainless convex mold shown in Figs. 1A and 1B and the concavity mold shown in Figs. 1C and 1D, and subjected to weight bearing at 250 kg for 5 seconds under a heating temperature of 170°C using a press machine (trade name: MIZUHO A TYPE HANDPOWER PRESS, manufactured by Matsushita Electric Tools Co., Ltd.) to perform embossing. The presence or absence of cracks and pinholes on the part on which the image had been embossed was visually observed. The sample having no cracking and white deletion was evaluated as A.

### (Vacuum forming test)

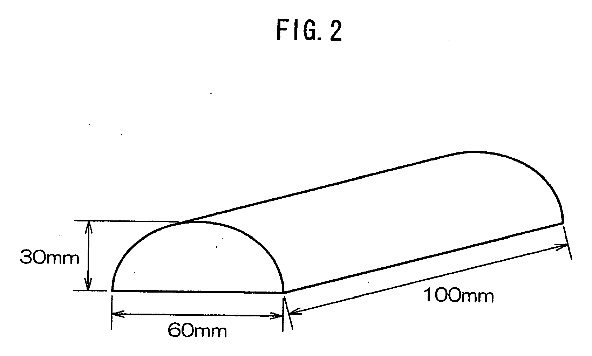

Using a vacuum forming apparatus (trade name: FORMING 300X, manufactured by Seiko Sangyo Co., Ltd.), the obtained printed product was subjected to vacuum forming. The wood mold shown in Fig. 2 was put on the center of the vacuum table of the vacuum forming apparatus, and the temperature of the heater was set so that the temperature of the substrate (recording medium) became 90°C. The recording medium was heated to a temperature of 90°C, and the vacuum table on which the wood mold had been set was raised slowly by operating a table lifting lever to perform vacuum forming. The presence or absence of cracks and white deletions on the formed printed product were visually observed. The sample having no cracking and white deletion was evaluated as A.
These results were shown in the following Table 3.

**[Table 3]**

| | Embossing adequacy | Vacuum forming adequacy |
|---|---|---|
| Example 1 | A | A |
| Example 2 | A | A |
| Example 3 | A | A |
| Example 4 | A | A |
| Example 5 | A | A |
| Example 6 | A | A |
| Comparative example 1 | Adhesion of the ink on the mold was observed | Vacuum forming could not be performed due to significant tackiness of the surface |

It is apparent from the results in Table 3 that the printed products using the ink composition of the invention are excellent in processing adequacy during the production of the formed articles. On the other hand, it is apparent that adhesion of the printed product using the ink composition of Comparative Example 1 to the mold was observed during embossing due to the tackiness of the image surface formed by the ink composition, and that the printed product was also not suitable for vacuum molding.

The invention provides an ink composition being preferable for use in inkjet recording, which may be cured at high sensitivity by irradiation of a radiation ray and may form an image being excellent in flexibility and antiblocking property.
Furthermore, the invention may provide a method for inkjet recording, which uses the ink composition being excellent in jetting stability, and a method for the production of a printed formed article using a printed product being excellent in processing adequacy that is obtained by the method for inkjet recording.

## Claims

1. An ink composition comprising:
a polymerizable polymer (A) comprising a main chain structure including urethane bonds or urea bonds, and, at the side chains of the main chain structure, polymerizable groups and at least one selected from a fluoroalkyl group (a1), a siloxane structure (a2) or a long chain alkyl structure with an alkyl group having six or more carbon atoms (a3),
a polymerizable compound (B) having a different structure from that of the polymerizable polymer (A), and
a photopolymerization initiator (C).

2. The ink composition of claim 1, wherein the total content of the polymerizable groups that are radical polymerizable groups and/or cation polymerizable groups in the molecule in the polymerizable polymer (A) is 0.3 mmol/g or more.

3. The ink composition of claim 1, wherein the polymerizable compound (B) having a different structure from that of the polymerizable polymer (A) is a radical polymerizable compound.

4. The ink composition of claim 1, wherein the polymerizable compound (B) having a different structure from that of the polymerizable polymer (A) is a cation polymerizable compound.

5. The ink composition of claim 1, wherein the polymerizable compound (B) comprises a monofunctional monomer in an amount of 60% by mass to 100% by mass.

6. A method for inkjet recording, the method comprising:
jetting the ink composition of claim 1 on a recording medium using an inkjet recording apparatus, and
irradiating the jetted ink composition with a radioactive ray to cure the ink composition.

7. A method for producing a printed formed article, the method comprising:
forming an image by jetting the ink composition of claim 1 onto a recording medium comprising a formable resin material using an inkjet process,
irradiating the obtained image with a radioactive ray to cure the ink composition to provide a printed product comprising a cured image on the recording medium, and
forming the printed product to provide a printed formed article.

## Patentansprüche

1. Tintenzusammensetzung umfassend:
ein polymerisierbares Polymer (A) umfassend eine Hauptkettenstruktur, die Urethanbindungen oder Harnstoffbindungen einschließt, und, an den Seitenketten der Hauptkettenstruktur, polymerisierbare Gruppen und wenigstens eines ausgewählt aus einer Fluoralkylgruppe (a1), einer Siloxanstruktur (a2) oder einer langkettigen Alkylstruktur mit einer Alkylgruppe mit sechs oder mehr Kohlenstoffatomen (a3),
eine polymerisierbare Verbindung (B) mit einer Struktur, die von der Struktur des polymeri-sierbaren Polymers (A) verschieden ist, und
einen Fotopolymerisationsinitiator (C).

2. Tintenzusammensetzung nach Anspruch 1, wobei der Gesamtgehalt der polymerisierbaren Gruppen, welche radikalisch polymerisierbare Gruppen und/oder kationisch polymerisier- bare Gruppen sind, in dem Molekül in dem polymerisierbaren Polymer (A) 0,3 mmol/g oder mehr beträgt.

3. Tintenzusammensetzung nach Anspruch 1, wobei die polymerisierbare Verbindung (B) mit einer Struktur, die von der Struktur des polymerisierbaren Polymers (A) verschieden ist, eine radikalisch polymerisierbare Verbindung ist.

4. Tintenzusammensetzung nach Anspruch 1, wobei die polymerisierbare Verbindung (B) mit einer Struktur, die von der Struktur des polymerisierbaren Polymers (A) verschieden ist, eine kationisch polymerisierbare Verbindung ist.

5. Tintenzusammensetzung nach Anspruch 1, wobei die polymerisierbare Verbindung (B) ein monofunktionelles Monomer in einer Menge von 60 Massenprozent bis 100 Massenprozent umfasst.

6. Verfahren zur Tintenstrahlaufzeichnung, wobei das Verfahren umfasst:
das Verspritzen der Tintenzusammensetzung nach Anspruch 1 auf ein Aufzeichnungsmedium unter Verwendung eines Tintenstrahlaufzeichnungsgeräts, und
das Bestrahlen der verspritzten Tintenzusammensetzung mit einem radioaktiven Strahl, um die Tintenzusammensetzung zu härten.

7. Verfahren zum Herstellen eines bedruckten geformten Artikels, wobei das Verfahren umfasst:
das Erzeugen eines Bildes durch Verspritzen der Tintenzusammensetzung nach Anspruch 1 auf ein Aufzeichnungsmedium, das ein formbares Harzmaterial umfasst, unter Verwendung eines Tintenstrahlverfahrens,
das Bestrahlen des erhaltenen Bildes mit einem radioaktiven Strahl, um die Tintenzusammensetzung zu härten, um ein bedrucktes Produkt bereitzustellen, das ein gehärtetes Bild auf dem Aufzeichnungsmedium umfasst, und
das Formen des bedruckten Produkts, um einen bedruckten geformten Artikel bereitzustellen.

## Revendications

1. Composition d'encre comprenant :
un polymère polymérisable (A) comprenant une structure de chaîne principale incluant des liaisons uréthane ou des liaisons urée, et, sur les chaînes latérales de la structure de chaîne principale, des groupes polymérisables et au moins un élément choisi parmi un groupe fluoroalkyle (a1), une structure de siloxane (a2) ou une structure de longue chaîne alkyle avec un groupe alkyle ayant au moins six atomes de carbone (a3),
un composé polymérisable (B) ayant une structure différente de celle du polymère polymérisable (A), et
un initiateur de photopolymérisation (C).

2. Composition d'encre selon la revendication 1, dans laquelle la teneur totale en groupes polymérisables qui sont des groupes polymérisables par des radicaux et/ou des groupes polymérisables par des cations dans la molécule du polymère polymérisable (A) est de 0,3 mmol/g ou plus.

3. Composition d'encre selon la revendication 1, dans laquelle le composé polymérisable (B) ayant une structure différente de celle du polymère polymérisable (A) est un composé polymérisable par des radicaux.

4. Composition d'encre selon la revendication 1, dans laquelle le composé polymérisable (B) ayant une structure différente de celle du polymère polymérisable (A) est un composé polymérisable par des cations.

5. Composition d'encre selon la revendication 1, dans laquelle le composé polymérisable (B) comprend un monomère monofonctionnel en une quantité de 60 % en masse à 100 % en masse.

6. Procédé d'impression par jet d'encre, ledit procédé comprenant :
la projection de la composition d'encre selon la revendication 1 sur un support d'impression à l'aide d'un appareil d'impression à jet d'encre, et
l'irradiation de la composition d'encre ainsi projetée, par un rayonnement radioactif pour durcir la composition d'encre.

7. Procédé de production d'un article façonné imprimé, ledit procédé comprenant :
la formation d'une image par projection de la composition d'encre selon la revendication 1 sur un support d'impression comprenant un matériau de résine façonnable à l'aide d'un procédé par jet d'encre,
l'irradiation de l'image ainsi obtenue par un rayonnement radioactif pour durcir la composition d'encre afin d'obtenir un produit imprimé comprenant une image durcie sur le support d'impression, et
le façonnage du produit ainsi imprimé pour obtenir un article façonné imprimé.
